# EUROPEAN PATENT APPLICATION

(11) **EP 3 135 782 A1**
(43) Date of publication of application: **01.03.2017**
(21) Application number: 15783368.2
(22) Date of filing: 21.04.2015
(51) Int. Cl.: C22C 21/00, B23K 20/04, C22F 1/05, C23C 26/00, F28F 19/06, F28F 21/08, C22F 1/00

(54) **ALUMINUM CLADDING MATERIAL, PRODUCTION METHOD THEREFOR, ALUMINUM CLADDING MATERIAL FOR HEAT EXCHANGERS, PRODUCTION METHOD THEREFOR, ALUMINUM HEAT EXCHANGER USING SAID ALUMINUM CLADDING MATERIAL FOR HEAT EXCHANGERS, AND PRODUCTION METHOD THEREFOR**

(30) Priority: 22.04.2014 JP 2014088616
(71) Applicant: UACJ Corporation, Tokyo 100-0004 (JP)
(72) Inventor: TERAYAMA, Kazuko, Tokyo 100-0004 (JP); OYA, Yoshiyuki, Tokyo 100-0004 (JP); SHIMADA, Takatoshi, Tokyo 100-0004 (JP)
(74) Representative: TBK
(86) International application number: PCT/JP2015/002165
(87) International publication number: WO 2015/162911

(57) **Abstract**

Provided are an aluminum cladding material having excellent corrosion resistance, a production method therefor, an aluminum cladding material for heat exchangers having excellent corrosion resistance, a production method therefor, an aluminum heat exchanger using said aluminum cladding material for heat exchangers, and a production method therefor. Said aluminum cladding material comprises an aluminum alloy core material and a sacrificial anode material layer clad on at least one surface thereof. The sacrificial anode material layer comprises an aluminum alloy containing 0.10 mass% or more and less than 1.50 mass% Si, 0.10 to 2.00 mass% Mg. Present therein is 100 to 150000 pieces/mm² of Mg-Si-based crystallized product having a circle-equivalent diameter of 0.1 to 5.0 µm, 7 pieces/mm² or less of Mg-Si-based crystallized product having a circle-equivalent diameter of more than 5.0 µm and 10.0 µm or less in the sacrificial anode material layer.

## Description

### Technical Field

The present invention relates to an aluminum cladding material having excellent corrosion resistance used for tubes of automobiles and industrial apparatus of various types and production methods therefor, to an aluminum cladding material for heat exchangers having excellent corrosion resistance which is used for tubes of room air conditioners and which is mainly used for automotive heat exchangers such as tubes of heat exchangers, radiators, condensers and evaporators and production methods therefor and to heat exchangers using the aluminum cladding material for heat exchangers and a production method therefor.

### Background Art

As aluminum materials used for a tube which connects heat exchangers and which functions as a flow path of a refrigerant or the like in an automotive or room air conditioner, aluminum materials with corrosion resistance improved with Zn have been proposed: the corrosion resistance is improved by a method of forming a sacrificial anticorrosive layer through thermal spraying of Zn onto a 3000 series parent alloy which is an extruded material (PTL 1), a method of forming a sacrificial anticorrosive layer through cladding with an Al-Zn alloy (PTL 2) or the like.

In general, for a tube material or a header material for constituting a flow path of a medium such as a coolant in an automotive heat exchanger that is assembled by brazing, a cladding material with a two-layer structure obtained by cladding one surface of an Al-Mn-based alloy such as the 3003 alloy as a core material with a brazing filler metal layer of an Al-Si-based alloy or with a sacrificial anode material layer of an Al-Zn-based alloy, a cladding material with a three-layer structure obtained by cladding one surface of a core material with a brazing filler metal layer and cladding the other surface thereof with a sacrificial anode material layer and the like are widely used.

Such a tube material is produced by bending a sheet-like cladding material into a flat tube shape and brazing or welding the overlapped edges. Corrugated fins are joined with the outer surfaces of such flat tube materials by brazing, and both ends of the tube materials are joined with holes of headers by brazing. A heat exchanger core is thus obtained. Here, in some cases, inner fins are provided in the tube materials and are joined with the inner surfaces of the tube materials by brazing. In general, the series of brazing is achieved by one brazing heating, thereby producing a heat exchanger. The header material is produced by bending a sheet-like cladding material into a tube shape and brazing or welding the edges. Also, an extruded clad tube clad with a brazing filler metal or with a sacrificial material is sometimes used.

The thicknesses of the aluminum materials for the tubes and the headers are required to be reduced recently to reduce the weight of a heat exchanger, and high corrosion resistance is also required as the thicknesses are reduced. The conventional sacrificial anticorrosion techniques using Zn produce the effect by shifting the potential to the less noble direction through the addition of Zn. However, because the corrosion rate of a Zn-added material is high, the sacrificial anticorrosive layer is consumed at an early stage when the thickness of the tube is reduced, and desired corrosion resistance is not obtained. Also, it is predicted that Zn, which is generally added to a sacrificial anode material layer, will be exhausted in the future, and the establishment of an anticorrosion technique in which the amount of Zn is reduced for example by a method of controlling the metal structure of the sacrificial anticorrosive material layer has been needed.

To meet the needs, for example, PTL 3 proposes a cladding material obtained by providing an Al-low Si alloy coating layer containing 1.5 to 3.0% Si on at least one surface of a core material containing Mn. This is for use as an aluminum alloy brazing structure for heat exchangers in which Si-based precipitated particles are dispersed in an appropriate size and at an appropriate density in the Al-low Si alloy coating layer by heat treatment after brazing. It is described that the precipitation of the Si-based precipitated particles reduces the amount of Si solid solution in the matrix of the Al-low Si alloy coating layer and the anticorrosive function is exhibited because the Al-low Si alloy coating layer is made less noble than the core material. That is, the Si-based precipitated particles are noble, and the Si-based precipitated particles themselves do not have the sacrificial anticorrosive effect. Also, the Si-based precipitated particles increase the corrosion rate of the matrix of the Al-low Si alloy coating layer. The corrosion resistance of this cladding material is sometimes insufficient because the concentration of Si in the coating material which is exposed to corrosive environment is too high.

PTL 4 proposes a brazing sheet in which elements forming an intermetallic compound that is noble as compared to the matrix are contained in the anode sacrificial material and the intermetallic compound which is noble as compared to the matrix is dispersed in an appropriate size and at an appropriate density. The corrosion resistance is improved because the intermetallic compound which is noble as compared to the matrix of the sacrificial anode material is distributed in a large number as local cathode sites. However, the intermetallic compound which is noble as compared to the matrix of the sacrificial anode material increases the corrosion rate, and anticorrosive effect cannot be obtained when the thickness is to be reduced.

### Citation List

### Patent Literature

PTL 1: JP-A-2011-85290
PTL 2: JP-A-H10-46312
PTL 3: JP-A-2008-284558
PTL 4: JP-A-2004-50195

### Summary of Invention

### Technical Problem

The invention has been made in view of the circumstances and aims to provide an aluminum cladding material having a sacrificial anode material layer which can secure excellent corrosion resistance even when Zn is not contained or when the Zn content is low, production methods therefor, an aluminum cladding material for heat exchangers, production methods therefor, an aluminum heat exchanger using the aluminum cladding material for heat exchangers and a production method therefor.

### Solution to Problem

In order to solve the problems, the present inventors have focused on the surface densities of Mg-Si-based crystallized products in the sacrificial anode material layer and found that sufficient anticorrosive effect can be exhibited when the surface densities are at certain levels or lower. Moreover, the inventors have focused on a fine Mg-Si-based precipitated product which is an intermetallic compound having a less noble potential than the matrix in the sacrificial anode material layer. Specifically, the inventors have found that, even when Zn is not present or when the Zn content is low, sufficient corrosion resistance can be exhibited due to the anticorrosive effect achieved by controlling the distributions of crystallized product and a precipitated product of certain sizes in certain ranges, and the inventors have thus completed the invention.

A feature of an aluminum cladding material according to the invention is that in the aluminum cladding material comprising an aluminum alloy core material and a sacrificial anode material layer clad on at least one surface of the core material, the sacrificial anode material layer comprises an aluminum alloy containing 0.10 mass% or more and less than 1.50 mass% Si, 0.10 to 2.00 mass% Mg and a balance of Al and unavoidable impurities, and 100 to 150000 pieces/mm² of Mg-Si-based crystallized product having a circle-equivalent diameter of 0.1 to 5.0 µm, and 7 pieces/mm² or less of Mg-Si-based crystallized product having a circle-equivalent diameter of more than 5.0 µm and 10.0 µm or less are present in the sacrificial anode material layer.

Another feature of the aluminum cladding material according to the invention is that the sacrificial anode material layer comprises the aluminum alloy further containing one or more selected from 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.30 mass% Ti, 0.05 to 0.30 mass% Zr, 0.05 to 0.30 mass% Cr and 0.05 to 0.30 mass% V.

Still another feature of the aluminum cladding material according to the invention is that the sacrificial anode material layer is clad on one surface of the aluminum alloy core material, and a brazing filler metal layer is clad on the other surface thereof.

Yet another feature of the aluminum cladding material according to the invention is that 1000 to 100000 pieces/µm³ of Mg-Si-based precipitated product having a length of 10 to 1000 nm observed in a range from the sacrificial anode material layer surface to the depth of 5 µm are present after sensitization treatment for observation at 175°C for five hours.

A feature of an aluminum cladding material for heat exchangers according to the invention is that in the aluminum cladding material for heat exchangers comprising an aluminum alloy core material and a sacrificial anode material layer clad on at least one surface of the core material, the sacrificial anode material layer comprises an aluminum alloy containing 0.10 mass% or more and less than 1.50 mass% Si, 0.10 to 2.00 mass% Mg and a balance of Al and unavoidable impurities, after brazing-corresponding heating, (1) in the sacrificial anode material layer surface, the Mg concentration is 0.10 mass% or more and the Si concentration is 0.05 %mass or more ,(2) both Mg and Si are present in a range from the sacrificial anode material layer surface to a depth of 30 µm or more, and (3) 100 to 150000 pieces/mm² of Mg-Si-based crystallized product having a circle-equivalent diameter of 0.1 to 5.0 µm, and 7 pieces/mm² or less of Mg-Si-based crystallized product having a circle-equivalent diameter of more than 5.0 µm and 10.0 µm or less are present in the sacrificial anode material layer.

Another feature of the aluminum cladding material for heat exchangers according to the invention is that the sacrificial anode material layer comprises the aluminum alloy further containing one or more selected from 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.30 mass% Ti, 0.05 to 0.30 mass% Zr, 0.05 to 0.30 mass% Cr and 0.05 to 0.30 mass% V.

Still another feature of the aluminum cladding material for heat exchangers according to the invention is that the sacrificial anode material layer is clad on one surface of the aluminum alloy core material, and a brazing filler metal layer is clad on the other surface thereof.

Yet another feature of the aluminum cladding material for heat exchangers according to the invention is that after brazing-corresponding heating, (4)1000 to 100000 pieces/µm³ of Mg-Si-based precipitated product having a length of 10 to 1000 nm observed in a range from the sacrificial anode material layer surface to the depth of 5 µm are present after sensitization treatment for observation at 175°C for five hours.

A feature of a method for producing the aluminum cladding material according to the invention is that in the method for producing the aluminum cladding material according to any one of claims 1 to 8, a direct chill casting step of direct chill casting the aluminum alloy for the sacrificial anode material layer at a cooling rate on the slab surface of 1°C/second or more is comprised.

A feature of the other method for producing the aluminum cladding material according to the invention is that in the method for producing the aluminum cladding material according to any one of claims 1 to 8, direct chill casting step of direct chill casting the aluminum alloy for the sacrificial anode material layer at a cooling rate on the slab surface of 1°C/second or more, and a homogenization step of heat-treating the slab for the sacrificial anode material layer at a temperature of 400 to 480°C for one hour or longer, are comprised.

Another feature of the method and the other method for producing the aluminum cladding material according to the invention is that the production steps further comprise a hot working step of the aluminum cladding material and a heating step of heating and holding the aluminum cladding material at 400 to 530°C before the hot working step, and in the hot working step, hot working at a working ratio of 50% or more at 380°C or higher is conducted at least once or hot working at a working ratio of 15% or more at 380°C or higher is conducted three times or more.

Another feature of the method and the other method for producing the aluminum cladding material according to the invention is that the production steps further comprise a final heating step of heating the aluminum cladding material to 350°C or higher and a cooling step of the aluminum cladding material following the final heating step, and the cooling rate from 350°C to 100°C is 1 to 500°C/minute in the cooling step.

Yet another feature of the method and the other method for producing the aluminum cladding material according to the invention is that a heat treatment step of the sacrificial anode material slab at 100°C or higher and lower than 350°C for 5 to 6000 minutes is comprises after cooling after the direct chill casting step.

Yet another feature of the method and the other method for producing the aluminum cladding material according to the invention is that a heat treatment step of the sacrificial anode material slab at 100°C or higher and lower than 350°C for 5 to 6000 minutes is comprises at least after cooling after the direct chill casting step or after cooling after the homogenization.

Another feature of the method for producing the aluminum cladding material according to the invention is that a heat treatment step of at least corresponding one of the slab for the sacrificial anode layer and the aluminum cladding material at 100°C or higher and lower than 350°C for 5 to 6000 minutes is comprised at least after cooling after the direct chill casting step or after cooling following the final heating step.

Another feature of the method for producing the aluminum cladding material according to the invention is that a heat treatment step of at least corresponding one of the slab for the sacrificial anode layer and the aluminum cladding material at 100°C or higher and lower than 350°C for 5 to 6000 minutes is comprised at least after cooling after the direct chill casting step, after cooling after the homogenization or after cooling following the final heating step.

A feature of an aluminum heat exchanger according to the invention is that the aluminum cladding material for heat exchangers according to any one of claims 5 to 8 is used as a tube material for heat exchangers.

Another feature of an aluminum heat exchanger according to the invention is that the aluminum cladding material for heat exchangers according to any one of claims 5 to 8 is used as a header material for heat exchangers.

A feature of a method for producing the aluminum heat exchanger according to the invention is that a step of assembling the aluminum cladding materials for heat exchangers according to any one of claims 5 to 8; a step of brazing the assembled materials through heat treatment at 590 to 610°C for 2 to 10 minutes; and a cooling step of cooling the brazed assembled materials at a cooling rate from 350°C to 100°C of 1 to 500 °C/minute are comprised.

Another feature of the method for producing the aluminum heat exchanger according to the invention is that a heat treatment step at 100°C or higher and lower than 350°C for five minutes to 6000 minutes is further comprised following the cooling step.

### Advantageous Effects of Invention

The aluminum cladding material, the aluminum cladding material for heat exchangers and the aluminum heat exchanger using the same according to the invention can exhibit excellent corrosion resistance in various severe environments.

### Brief Description of Drawings

[Fig. 1] A schematic sectional view of an example of a flat tube material using the aluminum cladding material for heat exchangers according to the invention.
[Fig. 2] A schematic sectional view of an example of a header tube using the aluminum cladding material for heat exchangers according to the invention.
[Fig. 3] A schematic sectional view of another example of a header tube using the aluminum cladding material for heat exchangers according to the invention.
[Fig. 4] A schematic sectional view of still another example of a flat tube material using the aluminum cladding material for heat exchangers according to the invention.
[Fig. 5] A schematic oblique view of an example of the aluminum heat exchanger according to the invention.

### Description of Embodiments

### 1. Aluminum cladding material

### 1-1. Structure

The aluminum cladding material according to the invention can be used by providing a sacrificial anode material layer on the side thereof which requires corrosion resistance. In this regard, the sacrificial anode material layer is provided on one surface or both surfaces. Not only a two-layer material having a sacrificial anode material provided on one surface of a core material and a three-layer material having a sacrificial anode material provided on both surfaces of a core material but also a three-layer material having a sacrificial anode material provided on one surface of a core material and a brazing filler metal clad on the other surface of the core material can be used. Also, the aluminum cladding material according to the invention can be processed from an extruded material or a plate material into a tube and thus used as a tube. In this regard, a sacrificial anode material layer is provided on at least one of the inner and outer surfaces of the tube. Not only a two-layer material having a sacrificial anode material provided on one surface of a core material and a three-layer material having a sacrificial anode material provided on both surfaces of a core material but also a three-layer tube having a sacrificial anode material provided on one surface of a core material and a brazing filler metal clad on the other surface of the core material can be used.

The thickness of the sacrificial anode material layer of the aluminum cladding material is not particularly limited but is preferably 10 to 300 µm. The cladding ratio of the sacrificial anode material layer is preferably 5 to 30% per a surface. In a three-layer cladding material of sacrificial anode material layer/core material/brazing filler metal layer, the thickness of the brazing filler metal layer is not particularly limited but is preferably 10 to 200 µm. The cladding ratio of the brazing filler metal is preferably 5 to 30% per a surface.

### 1-2. Alloy Compositions

Next, the compositions of the constituent materials of the aluminum cladding material according to the invention are explained.

### (a) Sacrificial Anode Material Layer

The sacrificial anode material layer comprises an aluminum alloy containing 0.10 mass% (hereinafter simply referred to as "%") or more and less than 1.50% Si, 0.10 to 2.00% Mg and a balance of Al and unavoidable impurities. That is, Si and Mg are essential elements. Si and Mg form an Mg-Si-based crystallized product and a fine Mg-Si-based precipitated product which contain Mg and Si as main components in the sacrificial anode material layer. The Mg-Si-based crystallized product crystallizes during casting. The Mg-Si-based precipitated product precipitates during cooling during the production of the material, at room temperature and through sensitization treatment at 175°C for five hours.

An Mg-Si-based crystallized product is basically Mg₂Si composed of Mg and Si at an atomic ratio of 2:1. When the sacrificial anode material layer contains Fe and Cu as optional additional elements, the crystallized product includes Mg-Si-Fe and Mg-Si-Cu ternary compositions and an Mg-Si-Fe-Cu quaternary composition in addition to Mg₂Si. Because the Mg-Si-based crystallized product has a less noble pitting potential than the matrix and thus dissolves earlier, sacrificial anticorrosive effect can be obtained without the use of Zn when the distribution thereof is controlled appropriately.

An Mg-Si-based precipitated product is a needle-like β"-phase (Mg₂Si) and is a Q" -phase (Al-Mg-Si-Cu) of the same shape when Cu is added. Because the Mg-Si-based precipitated product has a less noble pitting potential than the matrix and thus dissolves earlier, sacrificial anticorrosive effect can be obtained without the use of a large amount of Zn when the distribution thereof is controlled appropriately. The Mg-Si-based precipitated product also has a function of forming a Si-concentrated layer on the surface because Mg is liquated earlier during the dissolution, and as a result, the corrosion resistance further improves.

When at least the Si content or the Mg content is less than 0.10%, the amounts of an Mg-Si-based crystallized product and an Mg-Si-based precipitated product of predetermined sizes are low, and the sacrificial anticorrosive effect and the effect of forming the Si-concentrated layer are not obtained sufficiently. When the Si content is 1.50% or more, the melting point decreases, and thus the sacrificial anode material layer partially or completely melts during the production of the material. When the Mg content exceeds 2.00%, the oxide film on the surface of the sacrificial anode material layer becomes thick, and the production of an excellent cladding material with the core material becomes difficult. For these reasons, the Si content of the sacrificial anode material layer should be 0.10% or more and less than 1.50%, and the Mg content should be 0.10 to 2.00%. A preferable Si content is 0.20 to 1.00%, and a preferable Mg content is 0.30 to 1.00%.

With respect to the amount of Si and the amount of Mg, in order that the Mg-Si-based crystallized product and the Mg-Si-based precipitated product can exhibit sacrificial anticorrosive effect, it is important to control not only the amounts but also the ratio of Mg and Si. The Mg-Si-based crystallized product and the Mg-Si-based precipitated product are Mg₂Si when these products consist of Mg and Si, and the Mg/Si atomic ratio is 2. In terms of mass%, the ratio is 0.18. No problem arises when the proportion of Mg is high and the Mg/Si ratio is large within the above composition ranges. However, the corrosion resistance deteriorates when the proportion of Si is high and the Mg/Si ratio is small. When the proportion of the Si amount is too high, the amount of Si solid solution in the sacrificial anode material matrix increases, and the sacrificial anode material layer becomes noble. When the sacrificial anode material matrix becomes noble, the anticorrosive effect of the entire sacrificial anode material is insufficient even when the Mg-Si-based crystallized product and the Mg-Si-based precipitated product exhibit sacrificial anticorrosive effect. Accordingly, the Mg/Si ratio in terms of mass% is preferably a value exceeding 0.18.

The aluminum alloy of the sacrificial anode material layer preferably further contains one or more selected from 0.05 to 1.00 mass% Fe, 0.05 to 1.00% Ni, 0.05 to 1.00% Cu, 0.05 to 1.50% Mn, 0. 05 to 1.00% Zn, 0.05 to 0.30% Ti, 0.05 to 0.30% Zr, 0.05 to 0.30% Cr and 0.05 to 0.30% V as optional additional elements.

Fe and Ni contribute to the improvement of the corrosion resistance. Although these elements have an effect of increasing the corrosion rate of Al, the corrosion sites are dispersed when a Fe-based compound or an Ni-based compound is uniformly distributed, and as a result, the duration of perforation resistance is extended. When the Fe and Ni contents are less than 0.05%, the effect of extending the duration of perforation resistance is insufficient. On the other hand, the corrosion rate increases considerably when the Fe and Ni contents exceed 1.00%. For these reasons, the Fe and Ni contents are each preferably 0.05 to 1.00%, further preferably 0.10 to 0.50%.

When Cu is contained, the Mg-Si-based precipitated product becomes a Q"-phase (Al-Mg-Si-Cu), and this precipitated product can be dispersed more finely. To achieve this, the Cu content is preferably 0.05% or more. When the Cu content exceeds 1.00% however, the corrosion rate increases considerably. For these reasons, the Cu content is preferably 0.05 to 1.00%, further preferably 0.10 to 0.50%.

Mn crystallizes or precipitates as an Al-Mn-based intermetallic compound and contributes to the enhancement of the strength. Moreover, because Fe is incorporated into the Al-Mn-based intermetallic compound, Mn has a function of inhibiting the increasing effect of Fe as unavoidable impurities and of Fe added for the purpose of improving the corrosion resistance on the corrosion rate. To obtain these effects, the Mn content is preferably 0.05% or more. When the Mn content exceeds 1.50% however, a huge intermetallic compound sometimes crystallizes and decreases the productivity. For these reasons, the Mn content is preferably 0.05 to 1.50%, further preferably 0.10 to 1.00%.

Zn does not have to be contained. In the case where Zn is contained, excellent corrosion resistance is obtained due to the effect of the Mg-Si-based crystallized product and precipitated product, even when the Zn content is as low as 0.05 to 1.00%. When the Zn content exceeds 1.00%, the corrosion rate increases, and the sacrificial layer is lost at an early stage.

Ti, Zr, Cr and V contribute to the improvement of the corrosion resistance, especially the resistance to pitting corrosion. Ti, Zr, Cr and V added to the aluminum alloy are distributed into areas where the concentrations thereof are high and areas where the concentrations thereof are low, and the areas are distributed in the form of layers alternately along the plate thickness direction of the sacrificial anode material layer. The corrosion behavior is in the form of layers because the areas with the low concentrations are corroded more easily than the areas with the high concentrations. As a result, the corrosion rate along the plate thickness direction of the sacrificial anode material layer is partially slowed, and the advance of corrosion is prevented as a whole, resulting in the improvement of the resistance to pitting corrosion. In order to obtain such improvement effect on the resistance to pitting corrosion sufficiently, the Ti, Zr, Cr and V contents are each preferably 0.05% or more. On the other hand, when the each of Ti, Zr, Cr and V contents exceeds 0.30%, a coarse compound is sometimes formed during casting, and the productivity is sometimes decreased. For these reasons, the Ti, Zr, Cr and V contents are each preferably 0.05 to 0.30%, further preferably 0.10 to 0.20%.

Also when Na, Ca, Fe (when Fe is not added as an optional additional element) and the like are contained as unavoidable impurities each in an amount of 0.05% or less and in a total amount of 0.15% or less in addition to the essential elements and the optional additional elements, the effects of the sacrificial anode material layer are not impaired.

### (b) Core Material

The material of the core material of the aluminum cladding material according to the invention is not particularly limited as long as it is an aluminum material. The term aluminum material here means pure aluminum and an aluminum alloy. The pure aluminum means aluminum with purity of 99% or more, and examples thereof include 1000 series aluminum materials. As the aluminum alloy, for example Al-Cu-based (2000 series), Al-Mn-based (3000 series), Al-Si-based (4000 series), Al-Mg-based (5000 series), Al-Mg-Si-based (6000 series) and Al-Mg-Zn-based (7000 series) aluminum materials and the like are suitably used.

### (c) Brazing Filler Metal Layer

The aluminum material used for the brazing filler metal layer is not particularly limited, but an Al-Si-based alloy brazing filler metal which is used for general brazing is suitably used. For example, JIS4343, 4045 and 4047 aluminum alloys (Al-7 to 13% Si) are preferably used. Furthermore, there is no problem with the addition of Zn to these materials to obtain sacrificial anticorrosive effect.

### 1-3. Surface Densities of Mg-Si-Based Crystallized Product in Sacrificial Anode Material Layer

The sacrificial anode material layer of the aluminum cladding material according to the invention contains an Mg-Si-based crystallized product having a circle-equivalent diameter of 0.1 to 5.0 µm at a surface density of 100 to 150000 pieces/mm² and an Mg-Si-based crystallized product having a circle-equivalent diameter of more than 5.0 µm and 10.0 µm or less at 7 pieces/m² or less. The Mg-Si-based crystallized product are basically composed of Mg and Si at an atomic ratio of 2:1. When the sacrificial anode material layer contains Fe and Cu as optional additional elements, the crystallized product include Mg-Si-Fe and Mg-Si-Cu ternary compositions and an Mg-Si-Fe-Cu quaternary composition in addition to Mg₂Si.

The inventors have investigated intensively and found that the effects as the sacrificial anticorrosive layer can be obtained by controlling the surface densities of the Mg-Si-based crystallized product in the sacrificial anode material layer in certain ranges. The Mg-Si-based crystallized product are distributed in a shape close to a sphere, and thus the sizes thereof can be defined as the circle-equivalent diameters. In general, the size of an Mg-Si-based crystallized product in the sacrificial anode material layer, in terms of circle-equivalent diameter, is 0.1 to 10 µm. As a result of close investigation, it has been found that the circle-equivalent diameter of a crystallized product which can exhibit the effects as the sacrificial anticorrosive layer is 0.1 to 5.0 µm and that the surface density of the crystallized product of this size should be 100 to 150000 pieces/mm². When the surface density is less than 100 pieces/mm², the sacrificial anticorrosive effect is not sufficient, while when the surface density exceeds 150000 pieces/mm², the corrosion rate becomes too high, and the corrosion resistance decreases. A preferable range of the surface density is 100 to 100000 pieces/mm². Those having a circle-equivalent diameter of less than 0.1 µm or more than 10 µm rarely exist and thus are excluded. Moreover, it has been found that a crystallized product having a circle-equivalent diameter of more than 5.0 µm and 10 µm or less greatly decreases the sacrificial anticorrosive function because the corrosion concentrates on the crystallized product. It has also been found that the surface density of the crystallized product of this size should be 7 pieces/mm² or less to prevent the sacrificial anticorrosive function from being decreased greatly. The surface density is preferably 5 pieces/mm² or less, most preferably 0 piece/mm².

The surface densities of the Mg-Si-based crystallized product are measured by observing an optional part of the sacrificial anode material layer with a microscope. For example, an optional section along the thickness direction or a section parallel to the surface of a plate material is observed. From the viewpoint of convenience, the surface densities are preferably measured using an optional section along the thickness direction. In this regard, a surface density is defined as an arithmetic mean of values measured at a plurality of points.

### 1-4. Volume Density of Mg-Si-Based Precipitated Product in Sacrificial Anode Material Layer

The volume density of a fine Mg-Si-based precipitated product in the sacrificial anode material layer is controlled in a certain range. The inventors have found that the sacrificial anode material layer of the aluminum cladding material according to the invention exhibits sacrificial anticorrosive effect even though the sacrificial anode material layer does not contain Zn or contains Zn in a very low amount. This suggests that a phase or a product which is less noble than the parent metal is present in the sacrificial anode material layer. Upon investigation, it has been found that an extremely fine Mg-Si-based precipitated product, which is difficult to visually observe with a microscope, is the cause for the sacrificial anticorrosive effect. Such an Mg-Si-based precipitated product had been difficult to visually observe with a microscope such as TEM, but a needle-like Mg-Si-based precipitated product of a size which could be observed easily with a microscope was observed when sensitization treatment at 175°C for five hours was conducted. This is thought to be because the extremely fine Mg-Si-based precipitated product, which had existed originally, grew largely by the sensitization treatment. Because the Mg-Si-based precipitated product is distributed in the shape of needle, the size thereof can be defined as the length of the long side. Upon further investigation, the inventors have found that there is a correlation between the sacrificial anticorrosive effect and the volume density of the needle-like Mg-Si-based precipitated product having a length of 10 to 1000 nm observed in a range from the sacrificial anode material surface to the depth of 5 µm after the sensitization treatment. According to the analyses of the inventors, the original length of such a fine Mg-Si-based precipitated product before the sensitization treatment is estimated to be several nanometers to 50 nm. Mg and Si in the sacrificial anode material are diffused into the core material by the heat input during the production of the material. Accordingly, this fine Mg-Si-based precipitated product is present also in the core material, into which Mg and Si have been diffused, and exhibits sacrificial anticorrosive effect. The reason for specifying the volume density in the range from the surface to the depth of 5 µm is that the surface part is the part in which the Mg and Si concentrations are the highest and which exhibits the highest sacrificial anticorrosive effect in the plate thickness direction.

As a result of further investigation, it has been found that excellent sacrificial anticorrosive effect can be obtained when the volume density of the needle-like Mg-Si-based precipitated product having a length of 10 to 1000 nm after the sensitization treatment is 1000 to 100000 pieces/µm³. When the volume density was less than 1000 pieces/µm³, the amount of the Mg-Si-based precipitated product was too low, and thus the sacrificial anticorrosive effect was insufficient. On the other hand, when the volume density exceeded 100000 pieces/µm³, the amount of the Mg-Si-based precipitated product was too high, and thus the corrosion rate was too high. As a result, sufficient duration of corrosion resistance could not be obtained.

Here, the Mg-Si-based precipitated product of less than 10 nm observed in the range from the sacrificial anode material surface to the depth of 5 µm after the sensitization treatment is excluded because the presence thereof cannot be confirmed clearly also after the sensitization treatment. On the other hand, it has been found that the corrosion concentrates on those exceeding 1000 nm, resulting in an increased corrosion rate and deteriorated corrosion resistance. However, an Mg-Si-based precipitated product of more than 1000 µm is rarely precipitated by heat treatment at 175°C for five hours, which is the sensitization treatment for observation, and thus it is not necessary to specify the density of the Mg-Si-based precipitated product of more than 1000 µm.

To determine the volume density of the Mg-Si-based precipitated product, TEM images at a magnification of about 500000 times were took at a plurality of optional points (5 to 10 points) on the 100 plane of a test piece having a thickness of about 100 to 200 nm produced by FIB (Focused Ion Beam), and the numbers of needle-like precipitated product particles having a length of 10 to 1000 nm precipitated in three directions along the 100 direction in the range from the surface to the depth of 5 µm were counted by image processing. The numbers were divided by the measured volumes, and the densities at the respective measurement points were determined. The arithmetic mean of the values at the points was regarded as the density distribution of the sample.

### 2. Aluminum cladding material for Heat Exchanger

### 2-1. Structure

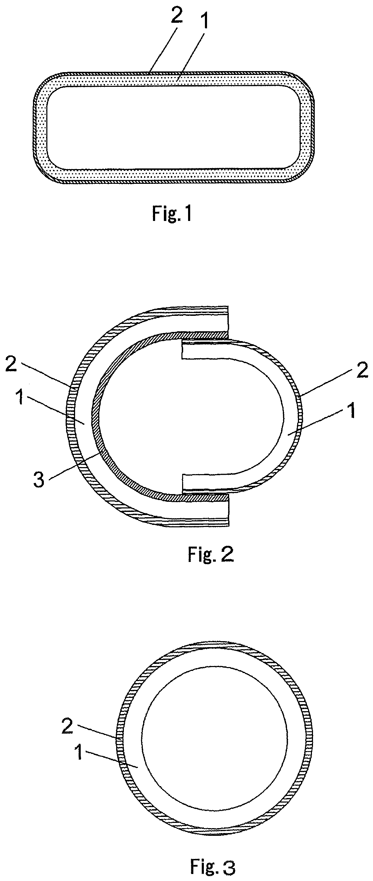

An example in which the aluminum cladding material for heat exchangers according to the invention is used as a tube material for heat exchangers is shown in Fig. 1. In this example, a three-layer clad plate 10 obtained by cladding one surface of a core material 1 with a sacrificial anode material layer 2 and cladding the other surface thereof with a brazing filler metal layer 3 is formed into a tube material 4. The clad plate 10 is formed into a flat shape in such a manner that the sacrificial anode material layer 2 side is exposed to the external environment, that is, the outer surface of the tube material 4 becomes the outer surface 4A. The space in the flat tube in which the brazing filler metal layer 3 is the inner surface forms a flow path of a medium such as a coolant used for heat exchangers.

In pace for this example, the tube material may be formed in such a manner that the sacrificial anode material layer 2 becomes the inner surface of the tube and the brazing filler metal layer 3 becomes the outer surface 4A of the tube material. Also, the tube material may be formed using a two-layer clad plate of sacrificial anode material layer/core material (the sacrificial anode material layer may be either the inner surface or the outer surface of the tube material) or a three-layer clad plate of sacrificial anode material layer/core material/sacrificial anode material layer.

An example in which the aluminum cladding material for heat exchangers according to the invention is used as a header material for heat exchangers is shown in Fig. 2. In this example, a header is formed by assembling a three-layer clad plate having the sacrificial anode material layer 2 clad on the outer surface of the core material 1 and the brazing filler metal layer 3 clad on the inner surface thereof and a two-layer clad plate having the sacrificial anode material layer 2 clad on the outer surface of the core material 1. Unlike in this example, the three-layer clad plate and the two-layer clad plate may both have the sacrificial anode material provided on the inner surface of the core material.

Another example in which the aluminum cladding material for heat exchangers according to the invention is used as a header material for heat exchangers is shown in Fig. 3. In this example, the header material is formed with a two-layer extruded clad tube having the sacrificial anode material layer 2 clad on the outer surface of the core material 1. Unlike in this example, the sacrificial anode material 2 may be provided on the inner surface side of the core material 1. Also, a three-layer clad tube of sacrificial anode material layer/core material/brazing filler metal layer (the sacrificial anode material layer may be either the inner surface or the outer surface) or a three-layer clad tube of sacrificial anode material layer/core material/sacrificial anode material layer may also be used.

The thickness of the sacrificial anode material layer of the aluminum cladding material for heat exchangers is not particularly limited but is preferably 10 to 300 µm. The cladding ratio of the sacrificial anode material layer is preferably 5 to 30% per a surface. In a three-layer cladding material of sacrificial anode material layer/core material/brazing filler metal layer, the thickness of the brazing filler metal layer is not particularly limited but is preferably 10 to 200 µm. The cladding ratio of the brazing filler metal is preferably 5 to 30% per a surface.

### 2-2. Alloy Compositions

Next, the compositions of the constituent materials of the aluminum cladding material for heat exchangers according to the invention are explained.

### (a) Sacrificial Anode Material Layer

The sacrificial anode material layer comprises an aluminum alloy containing 0.10 % or more and less than 1.50% Si, 0.10 to 2.00% Mg and a balance of Al and unavoidable impurities. That is, Si and Mg are essential elements. Si and Mg form an Mg-Si-based crystallized product and a fine Mg-Si-based precipitated product which contain Mg and Si as main components in the sacrificial anode material layer. The Mg-Si-based crystallized product crystallizes during casting. The Mg-Si-based precipitated product distributed before brazing dissolved once by brazing and precipitates again during cooling after brazing. Further, it precipitates even at room temperature and through sensitization treatment at 175°C for five hours, too.

An Mg-Si-based crystallized product is basically Mg₂Si composed of Mg and Si at an atomic ratio of 2:1. When the sacrificial anode material layer contains Fe and Cu as optional additional elements, the crystallized product includes Mg-Si-Fe and Mg-Si-Cu ternary compositions and an Mg-Si-Fe-Cu quaternary composition in addition to Mg₂Si. Because the Mg-Si-based crystallized product has a less noble pitting potential than the matrix and thus dissolves earlier, sacrificial anticorrosive effect can be obtained without the use of Zn when the distribution thereof is controlled appropriately.

An Mg-Si-based precipitated product is a needle-like β''-phase (Mg₂Si) and is a Q" -phase (Al-Mg-Si-Cu) of the same shape when Cu is added. Because the Mg-Si-based precipitated product has a less noble pitting potential than the matrix and thus dissolves earlier, sacrificial anticorrosive effect can be obtained without the use of a large amount of Zn when the distribution thereof is controlled appropriately. The Mg-Si-based precipitated product also has a function of forming a Si-concentrated layer on the surface because Mg is liquated earlier during the dissolution, and as a result, the corrosion resistance further improves.

When at least the Si content or the Mg content is less than 0.10%, the amounts of an Mg-Si-based crystallized product and an Mg-Si-based precipitated product of predetermined sizes are low, and the sacrificial anticorrosive effect and the effect of forming the Si-concentrated layer are not obtained sufficiently. When the Si content is 1.50% or more, the melting point decreases, and thus the sacrificial anode material layer partially or completely melts during the production of the material or brazing heating. When the Mg content exceeds 2.00%, the oxide film on the surface of the sacrificial anode material layer becomes thick, and the production of an excellent cladding material with the core material becomes difficult. For these reasons, the Si content of the sacrificial anode material layer should be 0.10% or more and less than 1.50%, and the Mg content should be 0.10 to 2.00%. A preferable Si content is 0.20 to 1.00%, and a preferable Mg content is 0.30 to 1.00%.

With respect to the amount of Si and the amount of Mg, in order that the Mg-Si-based crystallized product and the Mg-Si-based precipitated product can exhibit sacrificial anticorrosive effect, it is important to control not only the amounts but also the ratio of Mg and Si. The Mg-Si-based crystallized product and the Mg-Si-based precipitated product are Mg₂Si when these products consist of Mg and Si, and the Mg/Si atomic ratio is 2. In terms of mass%, the ratio is 0.18. No problem arises when the proportion of Mg is high and the Mg/Si ratio is large within the above composition ranges. However, the corrosion resistance deteriorates when the proportion of Si is high and the Mg/Si ratio is small. When the proportion of the Si amount is too high, the amount of Si solid solution in the sacrificial anode material matrix increases, and the sacrificial anode material layer becomes noble. When the sacrificial anode material matrix becomes noble, the anticorrosive effect of the entire sacrificial anode material is insufficient even when the Mg-Si-based crystallized product and the Mg-Si-based precipitated product exhibit sacrificial anticorrosive effect. Accordingly, the Mg/Si ratio in terms of mass% is preferably a value exceeding 0.18.

The aluminum alloy of the sacrificial anode material layer preferably further contains one or more selected from 0.05 to 1.00 Fe, 0.05 to 1.00% Ni, 0.05 to 1.00% Cu, 0.05 to 1.50% Mn, 0.05 to 1.00% Zn, 0.05 to 0.30% Ti, 0.05 to 0.30% Zr, 0.05 to 0.30% Cr and 0.05 to 0.30% V as optional additional elements.

Fe and Ni contribute to the improvement of the corrosion resistance. Although these elements have an effect of increasing the corrosion rate of Al, the corrosion sites are dispersed when a Fe-based compound or an Ni-based compound is uniformly distributed, and as a result, the duration of perforation resistance is extended. When the Fe and Ni contents are less than 0.05%, the effect of extending the duration of perforation resistance is insufficient. On the other hand, the corrosion rate increases considerably when the Fe and Ni contents exceed 1.00%. For these reasons, the Fe and Ni contents are each preferably 0.05 to 1.00%, further preferably 0.10 to 0.50%.

When Cu is contained, the Mg-Si-based precipitated product becomes a Q" -phase (Al-Mg-Si-Cu), and this precipitated product can be dispersed more finely. To achieve this, the Cu content is preferably 0.05% or more. When the Cu content exceeds 1.00% however, the corrosion rate increases considerably. For these reasons, the Cu content is preferably 0.05 to 1.00%, further preferably 0.10 to 0.50%.

Mn crystallizes or precipitates as an Al-Mn-based intermetallic compound and contributes to the enhancement of the strength. Moreover, because Fe is incorporated into the Al-Mn-based intermetallic compound, Mn has a function of inhibiting the increasing effect of Fe as unavoidable impurities and of Fe added for the purpose of improving the corrosion resistance on the corrosion rate. To obtain these effects, the Mn content is preferably 0.05% or more. When the Mn content exceeds 1.50% however, a huge intermetallic compound sometimes crystallizes and decreases the productivity. For these reasons, the Mn content is preferably 0.05 to 1.50%, further preferably 0.10 to 1.00%.

Zn does not have to be contained. In the case where Zn is contained, excellent corrosion resistance is obtained due to the effect of the Mg-Si-based crystallized product and precipitated product, even when the Zn content is as low as 0.05 to 1.00%. When the Zn content exceeds 1.00%, the corrosion rate increases, and the sacrificial layer is lost at an early stage.

Ti, Zr, Cr and V contribute to the improvement of the corrosion resistance, especially the resistance to pitting corrosion. Ti, Zr, Cr and V added to the aluminum alloy are distributed into areas where the concentrations thereof are high and areas where the concentrations thereof are low, and the areas are distributed in the form of layers alternately along the plate thickness direction of the sacrificial anode material layer. The corrosion behavior is in the form of layers because the areas with the low concentrations are corroded more easily than the areas with the high concentrations. As a result, the corrosion rate along the plate thickness direction of the sacrificial anode material layer is partially slowed, and the advance of corrosion is prevented as a whole, resulting in the improvement of the resistance to pitting corrosion. In order to obtain such improvement effect on the resistance to pitting corrosion sufficiently, the Ti, Zr, Cr and V contents are preferably 0.05% or more. On the other hand, when the each of Ti, Zr, Cr and V contents exceeds 0.30%, a coarse compound is sometimes formed during casting, and the productivity is sometimes decreased. For these reasons, the Ti, Zr, Cr and V contents are preferably 0.05 to 0.30%, further preferably 0.10 to 0.20%.

Also when Na, Ca, Fe (when Fe is not added as an optional additional element) and the like are contained as unavoidable impurities each in an amount of 0.05% or less and in a total amount of 0.15% or less in addition to the essential elements and the optional additional elements, the effects of the sacrificial anode material layer are not impaired.

### (b) Core Material

The material of the core material of the aluminum cladding material according to the invention is not particularly limited as long as it is an aluminum material. The term aluminum material here means pure aluminum and an aluminum alloy. The pure aluminum means aluminum with purity of 99% or more, and examples thereof include 1000 series aluminum materials. As the aluminum alloy, for example Al-Cu-based (2000 series), Al-Mn-based (3000 series), Al-Si-based (4000 series), Al-Mg-based (5000 series), Al-Mg-Si-based (6000 series) and Al-Mg-Zn-based (7000 series) aluminum materials and the like are suitably used.

### (c) Brazing Filler Metal Layer

The aluminum material used for the brazing filler metal layer is not particularly limited, but an Al-Si-based alloy brazing filler metal which is used for general brazing is suitably used. For example, JIS4343, 4045 and 4047 aluminum alloys (Al-7 to 13% Si) are preferably used. Furthermore, there is no problem with the addition of Zn to these materials to obtain sacrificial anticorrosive effect.

### 2-3. Surface Densities of Mg-Si-Based Crystallized Product in Sacrificial Anode Material Layer

The sacrificial anode material layer of the aluminum cladding material for heat exchangers according to the invention contains an Mg-Si-based crystallized product having a circle-equivalent diameter of 0.1 to 5.0 µm at a surface density of 100 to 150000 pieces/mm² and an Mg-Si-based crystallized product having a circle-equivalent diameter of more than 5.0 µm and 10.0 µm or less at 7 pieces/m² or less. The Mg-Si-based crystallized product are basically composed of Mg and Si at an atomic ratio of 2:1. When the sacrificial anode material layer contains Fe and Cu as optional additional elements, the crystallized product include Mg-Si-Fe and Mg-Si-Cu ternary compositions and an Mg-Si-Fe-Cu quaternary composition in addition to Mg₂Si.

The inventors have investigated intensively and found that after brazing-corresponding heating, the effects as the sacrificial anticorrosive layer can be obtained by controlling the surface densities of the Mg-Si-based crystallized product in the sacrificial anode material layer in certain ranges. The Mg-Si-based crystallized product are distributed in a shape close to a sphere, and thus the sizes thereof can be defined as the circle-equivalent diameters. In general, the size of an Mg-Si-based crystallized product in the sacrificial anode material layer, in terms of circle-equivalent diameter, is 0.1 to 10 µm. As a result of close investigation, it has been found that the circle-equivalent diameter of a crystallized product which can exhibit the effects as the sacrificial anticorrosive layer is 0.1 to 5.0 µm and that the surface density of the crystallized product of this size should be 100 to 150000 pieces/mm². When the surface density is less than 100 pieces/mm², the sacrificial anticorrosive effect is not sufficient, while when the surface density exceeds 150000 pieces/mm², the corrosion rate becomes too high, and the corrosion resistance decreases. A preferable range of the surface density is 100 to 100000 pieces/mm². Those having a circle-equivalent diameter of less than 0.1 µm or more than 10 µm rarely exist and thus are excluded. Moreover, it has been found that a crystallized product having a circle-equivalent diameter of more than 5.0 µm and 10 µm or less greatly decreases the sacrificial anticorrosive function because the corrosion concentrates on the crystallized product. It has also been found that the surface density of the crystallized product of this size should be 7 pieces/mm² or less to prevent the sacrificial anticorrosive function from being decreased greatly. The surface density is preferably 5 pieces/mm² or less, most preferably 0 piece/mm².

The surface densities of the Mg-Si-based crystallized product are measured by observing an optional part of the sacrificial anode material layer with a microscope after brazing-corresponding heating. For example, an optional section along the thickness direction or a section parallel to the surface of a plate material is observed. From the viewpoint of convenience, the surface densities are preferably measured using an optional section along the thickness direction. In this regard, a surface density is defined as an arithmetic mean of values measured at a plurality of points.

### 2-4. Mg and Si Concentrations in Sacrificial Anode Material Layer Surface and Depth Range from Sacrificial Anode Material Surface in which Both Mg and Si are Present

It is necessary that in the sacrificial anode material layer surface, the Mg concentration is 0.10% or more and the Si concentration is 0.05% or more. In the invention, the corrosion resistance is improved because a fine Mg-Si-based precipitated product is precipitated in a certain range from the surface of the sacrificial anode material layer after brazing, and such a fine Mg-Si-based precipitated product is formed during cooling after brazing heating. In order that a certain amount of such a fine Mg-Si-based precipitated product can precipitate, it is necessary that in the sacrificial anode material layer surface after brazing, the Mg concentration is 0.10% or more and the Si concentration is 0.05% or more. When the Mg concentration is less than 0.10% or when the Si concentration is less than 0.05%, a sufficient amount of the fine Mg-Si-based precipitated product is not formed, and the improvement effect on the corrosion resistance is not obtained. The upper limits of the Mg concentration and the Si concentration depend on the Mg content and the Si content of the aluminum alloy used for the sacrificial anode material layer, but it is preferable that the Mg concentration is 1.0% or less and that the Si concentration is 1.0% or less. The sacrificial anode material layer surface means the range of 10 µm from the surface in the depth direction.

Moreover, in order to obtain the improvement effect on the corrosion resistance, it is also necessary that both Mg and Si are present in the range from the surface of the sacrificial anode material layer to a depth of 30 µm or more. The depth range in which Mg is present means the distance between the sacrificial anode material surface and the end of the area with an Mg concentration of 0.10% or more. The depth range in which Si is present means the distance between the sacrificial anode material surface and the end of the area with a Si concentration of 0.05% or more. When the depth range in which both Mg and Si are present is less than 30 µm from the sacrificial anode material surface, the range from the surface in which the fine Mg-Si-based precipitated product can precipitate is small. As a result, a layer with sufficient sacrificial anticorrosive effect is not formed, and thus the improvement effect on the corrosion resistance is not obtained. The depth range is not particularly limited as long as it is 30 µm or more from the sacrificial anode material surface but is preferably three fourths of the plate thickness or less from the viewpoint of the role of the sacrificial anticorrosive layer.

### 2-5. Volume Density of Mg-Si-Based Precipitated Product in Sacrificial Anode Material Layer

The volume density of a fine Mg-Si-based precipitated product in a range from the sacrificial anode material layer surface to the predetermined depth after brazing corresponding heating is controlled in a certain range. The inventors have found that the sacrificial anode material layer of the aluminum cladding material for heat exchangers according to the invention exhibits sacrificial anticorrosive effect even though the sacrificial anode material layer does not contain Zn or contains Zn in a very low amount. This suggests that a phase or a product which is less noble than the parent metal is present in the sacrificial anode material layer. Upon investigation, it has been found that an extremely fine Mg-Si-based precipitated product, which is difficult to visually observe with a microscope, is the cause for the sacrificial anticorrosive effect. Such an Mg-Si-based precipitated product had been difficult to visually observe with a microscope such as TEM, but a needle-like Mg-Si-based precipitated product of a size which could be observed easily with a microscope was observed when sensitization treatment at 175°C for five hours was conducted. This is thought to be because the extremely fine Mg-Si-based precipitated product, which had existed originally, grew largely by the sensitization treatment. Because the Mg-Si-based precipitated product is distributed in the shape of needle, the size thereof can be defined as the length of the long side. Upon further investigation, the inventors have found that there is a correlation between the sacrificial anticorrosive effect and the volume density of the needle-like Mg-Si-based precipitated product having a length of 10 to 1000 nm observed in a range from the sacrificial anode material surface after brazing corresponding heating to the depth of 5 µm after the sensitization treatment. According to the analyses of the inventors, the original length of such a fine Mg-Si-based precipitated product before the sensitization treatment is estimated to be several nanometers to 50 nm. Mg and Si in the sacrificial anode material are diffused into the core material by the brazing corresponding heating. Accordingly, this fine Mg-Si-based precipitated product is present also in the core material, into which Mg and Si have been diffused after brazing corresponding heating, and exhibits sacrificial anticorrosive effect. The reason for specifying the volume density in the range from the surface to the depth of 5 µm is that the surface part is the part in which the Mg and Si concentrations are the highest and which exhibits the highest sacrificial anticorrosive effect in the plate thickness direction.

As a result of further investigation, it has been found that excellent sacrificial anticorrosive effect can be obtained when the volume density of the needle-like Mg-Si-based precipitated product having a length of 10 to 1000 nm after the sensitization treatment is 1000 to 100000 pieces/µm³. When the volume density was less than 1000 pieces/µm³, the amount of the Mg-Si-based precipitated product was too low, and thus the sacrificial anticorrosive effect was insufficient. On the other hand, when the volume density exceeded 100000 pieces/µm³, the amount of the Mg-Si-based precipitated product was too high, and thus the corrosion rate was too high. As a result, sufficient duration of corrosion resistance could not be obtained.

Here, the Mg-Si-based precipitated product of less than 10 nm observed in the range from the sacrificial anode material surface to the depth of 5 µm after the sensitization treatment is excluded because the presence thereof cannot be confirmed clearly also after the sensitization treatment. On the other hand, it has been found that the corrosion concentrates on those exceeding 1000 nm, resulting in an increased corrosion rate and deteriorated corrosion resistance. However, an Mg-Si-based precipitated product of more than 1000 µm is rarely precipitated by heat treatment at 175°C for five hours, which is the sensitization treatment for observation, and thus it is not necessary to specify the density of the Mg-Si-based precipitated product of more than 1000 µm.

To determine the volume density of the Mg-Si-based precipitated product, TEM images at a magnification of about 500000 times were took at a plurality of optional points (5 to 10 points) on the 100 plane of a test piece having a thickness of about 100 to 200 nm produced by FIB (Focused Ion Beam), and the numbers of needle-like precipitated product particles having a length of 10 to 1000 nm precipitated in three directions along the 100 direction in the range from the surface to the depth of 5 µm were counted by image processing. The numbers were divided by the measured volumes, and the densities at the respective measurement points were determined. The arithmetic mean of the values at the points was regarded as the density distribution of the sample.

### 3. Production Methods of Aluminum cladding materials

Next, methods for producing the aluminum cladding material and the aluminum cladding material for heat exchangers according to the invention are explained. The production methods are the same and are an embodiment comprising a direct chill casting step of direct chill casting the aluminum alloy of the sacrificial anode material at a cooling rate of the slab surface of 1 °C/second or more (the first embodiment). In the first embodiment, a homogenization step of the sacrificial anode material is not necessary as long as a direct chill casting step in which the cooling rate of the surface of the sacrificial anode material slab is 1 °C/second or more is used. However, it is not preferable to subject the slab of the sacrificial anode material to a heat treatment at higher than 480°C before cladding because the Mg-Si-based crystallized product in the sacrificial anode material coarsens. Also, a second embodiment which further includes a homogenization step of heat treatment at a temperature of 400 to 480°C for one hour or longer as an essential step in addition to the step of the first embodiment may also be used.

The first and second embodiments may further include, according to the need, a hot working step of hot working the aluminum cladding material at a certain temperature at a certain working ratio, a heating step of heating and holding the aluminum cladding material at a temperature in a certain range before the hot working step, a final heating step of heating the aluminum cladding material to a temperature in a certain range and a cooling step following the final heating step.

Moreover, the first embodiment may further include a heat treatment step of the sacrificial anode material slab under certain conditions after cooling after the direct chill casting step and a heat treatment step of at least corresponding one of the slab for the sacrificial anode layer and the aluminum cladding material under certain conditions at least after cooling after the direct chill casting step or after cooling following the final heating step.

The second embodiment may further include a heat treatment step of the slab for the sacrificial anode layer under certain conditions at least after cooling after the direct chill casting step or after cooling after the homogenization and a heat treatment step of at least corresponding one of the slab for the sacrificial anode layer and the aluminum cladding material under certain conditions at least after cooling after the direct chill casting step, after cooling after the homogenization or after cooling following the final heating step.

### 3-1. Cooling Rate of Slab Surface in Direct chill Casting Step

In the direct chill casting step, the cooling rate of the surface of the aluminum alloy slab of the sacrificial anode material is 1 °C/second or more. When the cooling rate is less than 1 °C/second, a coarse Mg-Si-based crystallized product is formed in the sacrificial anode material, and an appropriate distribution of the Mg-Si-based crystallized product is not obtained. The upper limit of the cooling rate is not particularly limited but is 50 °C/second in the invention. The cooling rate can be determined by observing the slab structure and calculating from the dendrite arm spacing (reference: Dendrite Arm Spacing of Aluminum and Method for Measuring Cooling Rate, written by the committee of The Japan Institute of Light Metals). Here, the slab surface refers to the area of 30 mm from the outermost surface.

### 3-2. Homogenization Step

The slab of the sacrificial anode material cast in the direct chill casting step is preferably homogenized by heat treatment at a temperature of 400 to 480°C for one hour or longer. Through this step, the metal structure of the sacrificial anode material can be homogenized, and the fine Mg-Si-based crystallized product can be dissolved into a solid solution again. When the heat treatment temperature is lower than 400°C or when the heat treatment period is shorter than one hour, the effect of homogenizing the metal structure or the effect of dissolving the fine Mg-Si-based crystallized product into a solid solution is not obtained sufficiently. When the heat treatment temperature exceeds 480°C, the Mg-Si-based crystallized product may grow into a coarse product. The upper limit of the heat treatment period is not particularly limited but is preferably 20 hours or shorter from the economical viewpoint or the like.

### 3-3. Other Steps (in case where the cladding material is a plate material)

When the cladding material is a plate material, general steps are used as follows as the steps other than the direct chill casting step and the homogenization step of the sacrificial anode material.

### (a-1) Core Material

The core material of the clad plate is cast by DC casting process or the like according to a general method. The slab of the core material is processed into a plate with a predetermined plate thickness through homogenization and facing according to the need or into a plate with a predetermined plate thickness further through hot rolling and cold rolling.

### (b-1) Brazing Filler Metal Layer

The brazing filler metal of the cladding material is cast by direct chill casting process or the like according to a general method. The slab of the brazing filler metal is formed into a rolled plate with a predetermined plate thickness through facing, hot rolling and cold rolling according to the need.

### (c-1) Assembling Step

In the case of a two-layer clad plate, the sacrificial anode material is provided on one surface of the core material slab, and in the case of a three-layer clad plate, the sacrificial anode material slab or the brazing filler metal slab is further provided on the other surface.

### (d-1) Heating Step before Hot Rolling Step

Next, the combined plates are subjected to a heating step of heating and holding the plates before a hot rolling step, which is the hot working step. In the heating step, the heating and holding temperature is preferably 400 to 530°C, and the holding period is preferably about 0 to 15 hours. Here, the holding period of 0 hour means that the hot rolling step is started immediately after the temperature has reached the predetermined temperature. When the heating and holding temperature is lower than 400°C, some parts are not clad and joined, and a blowhole may be formed. On the other hand, when the heating and holding temperature exceeds 530°C or when the holding period exceeds 15 hours, an oxide film sometimes grows, and there is a case in which a normal cladding material may not be obtained.

### (e-1) Hot Rolling Step

In the hot rolling step, which is the hot working step, it is preferable to conduct hot rolling at a working ratio of 50% or more at 380°C or higher at least once or conduct hot rolling at a working ratio of 15% or more at 380°C or higher three times or more. Here, the working ratio is the ratio represented by {(S0-S1)/S0)}×100, where S0 is a sectional area of the plate material along the thickness direction before rolling and S1 is the same sectional area after rolling, in each hot rolling.

In this manner, in an embodiment of the invention, by conducting hot rolling at a working ratio of 50% or more at 380°C or higher at least once, the Mg-Si-based crystallized product having a circle-equivalent diameter of more than 5.0 µm and 10 µm or less can be crashed, and the number of the particles thereof can be reduced. When the working ratio of the at least one hot rolling operation is less than 50%, the effect may not be obtained. The working ratio of the at least one hot rolling operation is preferably 70% or more. This embodiment includes the cases: (1) hot rolling at a working ratio of 50% or more is conducted once only; (2) hot rolling at a working ratio of 50% or more is conducted twice or more; and (3) hot rolling at a working ratio of 15% or more and less than 50% is further conducted once, twice or more in addition to (1) or (2).

In another embodiment of the invention, by conducting hot rolling at a working ratio of 15% or more at 380°C or higher three times or more, the Mg-Si-based crystallized product having a circle-equivalent diameter of more than 5.0 µm and 10 µm or less can be crashed, and the number of the particles thereof can be reduced. The working ratio in this embodiment is preferably 15% or more and less than 50%. That is, it is preferable to conduct hot rolling at a relatively low working ratio three times or more. The number of the hot rolling operations in this embodiment is determined by the relation to the final working ratio (determined before and after the entire hot rolling step) based on the respective working ratios, but the upper limit thereof is preferably six from the viewpoint of productivity and economical viewpoint. In this embodiment, when the respective working ratios are less than 15% and the number of the hot rolling operations is two or less, the effect may not be obtained. In this embodiment, the working ratios of the three or more hot rolling operations may be the same or different.

In both embodiments, the temperature is 380°C or higher. Excellent hot rolling cannot be conducted at a temperature lower than this temperature. A preferable temperature is 400 or higher. The upper limit of the temperature is preferably 530°C because an oxide film may grow and a normal cladding material may not be obtained when the temperature exceeds 530°C.

### (f-1) Steps after Hot Rolling Step

The combined plates which have undergone the hot rolling step are formed into a clad plate with a predetermined final plate thickness through cold rolling. Process annealing may be conducted during or before cold rolling. Final annealing may be further conducted according to the need.

### 3-4. Other Steps (in case where the cladding material is an extruded material)

When the cladding material is an extruded material, general steps are used as follows as the steps other than the direct chill casting step and the homogenization step of the sacrificial anode material.

### (a-2) Core Material

The core material of the clad tube is cast by DC casting process or the like according to a general method. The slab of the core material is processed into a plate with a predetermined plate thickness through homogenization and facing according to the need or into a plate with a predetermined plate thickness further through hot rolling and cold rolling.

### (b-2) Brazing Filler Metal Layer

The brazing filler metal of the clad tube is cast by direct chill casting process or the like according to a general method. The slab of the brazing filler metal is formed into a rolled plate with a predetermined plate thickness through facing, hot rolling and cold rolling according to the need.

### (c-2) Assembling Step

In the case of a two-layer clad tube, the slab for the sacrificial anode material is provided on the inner surface or the outer surface of the core material slab, and in the case of a three-layer clad tube, the slab for the sacrificial anode material or the slab for the brazing filler metal is further provided on the other surface, thereby obtaining a billet.

### (d-2) Heating Step before Hot Extrusion Step

Next, the billet is subjected to a heating step of heating and holding the billet before a hot extrusion step, which is the hot working step. In the heating step, the heating and holding temperature is preferably 400 to 530°C, and the holding period is preferably about 0 to 15 hours. Here, the holding period of 0 hour means that the hot extrusion step is started immediately after the temperature has reached the predetermined temperature. When the heating and holding temperature is lower than 400°C, some parts are not clad and joined, and a blowhole may be formed. On the other hand, when the heating and holding temperature exceeds 530°C or when the holding period exceeds 15 hours, an oxide film sometimes grows, and there is a case in which a normal clad tube may not be obtained.

### (e-2) Hot Extrusion Step

In the hot extrusion step, which is the hot working step, it is preferable to conduct hot extrusion at a working ratio of 50% or more at 380°C or higher at least once or conduct hot extrusion at a working ratio of 15% or more at 380°C or higher three times or more. Here, the working ratio is the ratio represented by {(S0-S1)/S0)}×100, where S0 is a sectional area of the tube material along the thickness direction before extrusion and S1 is the same sectional area after extrusion, in each hot extrusion.

In this manner, in an embodiment of the invention, by conducting hot extrusion at a working ratio of 50% or more at 380°C or higher at least once, the Mg-Si-based crystallized product having a circle-equivalent diameter of more than 5.0 µm and 10 µm or less can be crashed, and the number of the particles thereof can be reduced. When the working ratio of the at least one hot extrusion operation is less than 50%, the effect may not be obtained. The working ratio of the at least one hot extrusion operation is preferably 70% or more. This embodiment includes the cases: (1) hot extrusion at a working ratio of 50% or more is conducted once only; (2) hot extrusion at a working ratio of 50% or more is conducted twice or more; and (3) hot extrusion at a working ratio of 15% or more and less than 50% is further conducted once, twice or more in addition to (1) or (2).

In another embodiment of the invention, by conducting hot extrusion at a working ratio of 15% or more at 380°C or higher three times or more, the Mg-Si-based crystallized product having a circle-equivalent diameter of more than 5.0 µm and 10 µm or less can be crashed, and the number of the particles thereof can be reduced. The working ratio in this embodiment is preferably 15% or more and less than 50%. That is, it is preferable to conduct hot extrusion at a relatively low working ratio three times or more. The number of the hot extrusion operations in this embodiment is determined by the relation to the final working ratio (determined before and after the entire hot rolling extrusion) based on the respective working ratios, but the upper limit thereof is preferably six from the viewpoint of productivity and economical viewpoint. In this embodiment, when the respective working ratios are less than 15% and the number of the hot extrusion operations is two or less, the effect may not be obtained. In this embodiment, the working ratios of the three or more hot extrusion operations may be the same or different.

In both embodiments, the temperature is 380°C or higher. Excellent hot extrusion cannot be conducted at a temperature lower than this temperature. A preferable temperature is 400 or higher. The upper limit of the temperature is preferably 530°C because an oxide film may grow and a normal cladding material may not be obtained when the temperature exceeds 530°C.

### (f-2) Steps after Extrusion Step

An extrusion method using a general indirect extruder can be used for the extrusion. Next, the material is preferably subjected to a drawing process so that the outer diameter and the thickness become predetermined values. A continuous block drawing machine with high productivity is desirably used for the drawing process. Moreover, a heat treatment may be added timely at any stage during the production steps to adjust the mechanical properties.

### 3-5. Cooling Rate during Production

The methods for producing the aluminum cladding material and the aluminum cladding material for heat exchangers according to the invention preferably includes a final heating step of heating the aluminum alloy cladding material to 350°C or higher in the production steps, and in a cooling step following the final heating step, the cooling rate from 350°C to 100°C is preferably 1 to 500 °C/minute. The reason for specifying the cooling temperature range of from 350°C to 100°C is that an Mg-Si-based precipitated product is dissolved once by heating at 350°C or higher, and the Mg-Si-based precipitated product is precipitated at from 350°C to 100°C during subsequent cooling. When the cooling rate is less than 1 °C/minute, the precipitation of the Mg-Si-based precipitated product advances too much, and an appropriate distribution density of the Mg-Si-based precipitated product may not be obtained. On the other hand, when the cooling rate exceeds 500 °C/minute, the amount of the Mg-Si-based precipitated product sometimes decreases.

The final heating step at 350°C or higher in the production steps may be the hot rolling step or an annealing step when the cladding material is a plate material, and the final heating step may be the extrusion step or an annealing step when the cladding material is an extruded material. Instead of these steps, a final heating step at 350°C or higher may be separately conducted.

### 3-6. Heat Treatment after Cooling

Moreover, the methods for producing the aluminum cladding material and the aluminum cladding material for heat exchangers according to the invention, in the first embodiment, preferably further include a heat treatment step of the sacrificial anode material slab under the conditions of 100°C or higher and lower than 350°C for 5 to 6000 minutes after cooling after the direct chill casting step and a heat treatment step of at least corresponding one of the slab for the sacrificial anode layer and the aluminum cladding material under the conditions of 100°C or higher and lower than 350°C for 5 to 6000 minutes at least after cooling after the direct chill casting step or after cooling following the final heating step. In the second embodiment, the methods preferably further include a heat treatment step of the slab for the sacrificial anode layer under the conditions of 100°C or higher and lower than 350°C for 5 to 6000 minutes at least after cooling after the direct chill casting step or after cooling after the homogenization and a heat treatment step of at least corresponding one of the slab for the sacrificial anode layer and the aluminum cladding material under the conditions of 100°C or higher and lower than 350°C for 5 to 6000 minutes at least after cooling after the direct chill casting step, after cooling after the homogenization or after cooling following the final heating step.

Through the heat treatment steps, an Mg-Si-based precipitated product precipitates, and the sacrificial anticorrosive function is further enhanced. When the temperatures of the heat treatment steps are lower than 100°C or the holding periods are shorter than five minutes, the effect of precipitating the Mg-Si-based precipitated product may not be obtained sufficiently. On the other hand, when the temperatures of the heat treatment steps are 350°C or higher or the holding periods exceed 6000 minutes, the Mg-Si-based precipitated product is dissolved again, and the predetermined distribution of the Mg-Si-based precipitated product may not be obtained. By controlling the temperatures of the heat treatment steps at 150°C or higher, a desired amount of Mg-Si-based precipitated product can be precipitated in a short heat treatment period. When the heat treatment temperatures are 100°C or higher and lower than 150°C, a higher amount of Mg-Si-based precipitated product can be precipitated by prolonging the heat treatment periods, and the sacrificial anticorrosive effect can be improved.

The aluminum cladding material for heat exchangers according to the invention is suitably used as a member of a heat exchanger such as a tube material, a header material and a fin material, especially as a tube material and a header material, which require a reduced thickness. Also, the aluminum cladding material according to the invention can be used as a member such as various tubes and a member of a heat exchanger such as a tube material, a header material and a fin material.

### 4. Aluminum Heat Exchanger

### 4-1. Structure

The aluminum heat exchanger according to the invention includes the aluminum cladding material as a member. For example, as shown in Fig. 1, the aluminum cladding material for heat exchangers according to the invention (obtained by cladding the core material 1 with the sacrificial anode material 2) is bent and used as a tube material (in general, a flat tube) for letting a medium such as a coolant flow.

The aluminum heat exchanger according to the invention is produced by providing fin materials (not shown in the figure) for radiating heat on the outer surfaces of tube materials, attaching both ends of the tubes to header plates (not shown in the figure) and brazing these members. The aluminum cladding material for heat exchangers according to the invention may be used also for the fin materials and/or the header plates.

Inner fins (the aluminum cladding material for heat exchangers according to the invention may be used) may be provided on and joined with the inner surfaces of the tube materials according to the need. Both edges overlapped by forming the cladding materials into the tube materials, the fin materials and the outer surfaces of the tube materials, both ends of the tube materials and the header plates, and the inner fins are generally joined simultaneously by one brazing heating.

### 5. Production Method of Aluminum Heat Exchanger

### 5-1. Members

The aluminum heat exchanger according to the invention is assembled for example by attaching both ends of tube materials to header plates and providing fin materials on the outer surfaces of the tube materials. Next, the overlapped both edges of the tube materials, the fin materials and the outer surfaces of the tube materials, both ends of the tube materials and the header plates are joined simultaneously by one brazing heating. According to the need, inner fins may be provided on the inner surfaces of the tube materials, and these members may be brazed. The aluminum cladding material for heat exchangers according to the invention is preferably used for at least one member of the tube materials, the fin materials, the header materials and the inner fins, preferably for at least the tube materials and the header materials.

### 5-2. Brazing

As the brazing method used in the invention, a method of brazing in a nitrogen atmosphere using a fluoride flux (Nocolok brazing method or the like) or a method in which the oxide film on the surface of the aluminum material is reduced and broken in vacuum or in a nitrogen atmosphere by Mg contained in the material (vacuum brazing or fluxless brazing) is preferably used. Brazing is conducted by heating generally at a temperature of 590 to 610°C for 2 to 10 minutes, preferably at a temperature of 590 to 610°C for two to six minutes. When the heating period is lower than 590°C or when the heating period is shorter than two minutes, brazing failure may be caused. On the other hand, when the heating period exceeds 610°C or when the heating period exceeds 10 minutes, the members may melt.

### 5-3. Cooling Rate after Brazing

The cooling rate from 350°C to 100°C in a cooling step after brazing is preferably 1 to 500 °C/minute. The reason for limiting to the temperature range is that the Mg-Si-based precipitated product distributed before brazing is dissolved once by brazing, and the Mg-Si-based precipitated product is precipitated at from 350°C to 100°C during cooling after brazing. When the cooling rate is less than 1 °C/minute, the precipitation of the Mg-Si-based precipitated product advances too much, and an appropriate distribution density of the Mg-Si-based precipitated product may not be obtained. On the other hand, when the cooling rate exceeds 500 °C/minute, the precipitated amount of the Mg-Si-based precipitated product sometimes decreases.

### 5-4. Heat Treatment after Brazing

Following the cooling step after brazing, a heat treatment step at 100°C or higher and lower than 350°C for 5 to 6000 minutes is preferably further conducted. The reason for limiting to the heat treatment temperature is that an Mg-Si-based precipitated product precipitates in this temperature range and exhibits sacrificial anticorrosive function. The heat treatment step is preferably conducted by reheating after cooling to room temperature after brazing. When the temperature of the heat treatment step is lower than 100°C or the holding period is shorter than five minutes, the effect of precipitating the Mg-Si-based precipitated product may not be obtained sufficiently. On the other hand, when the temperature of the heat treatment step is 350°C or higher or the holding period exceeds 600 minutes, the Mg-Si-based precipitated product is dissolved again, and the predetermined distribution of the Mg-Si-based precipitated product may not be obtained. By controlling the temperature of the heat treatment step at 150°C or higher, a desired amount of Mg-Si-based precipitated product can be precipitated in a short heat treatment period. When the heat treatment temperature is 100°C or higher and lower than 150°C, a higher amount of Mg-Si-based precipitated product can be precipitated by prolonging the heat treatment period, and the sacrificial anticorrosive effect can be improved.

### Examples

Next, the invention is explained in further detail based on Examples. The Examples are only examples for explaining the invention and do not limit the technical scope of the invention.

### Inventive Examples 1-1 to 1-52 and Comparative Examples 1-1 to 1-19

First, First Example of the aluminum alloy cladding materials of the invention is shown.

The aluminum alloy cladding materials were prepared as two-layer clad extruded tubes shown in Fig. 1. Alloys having the compositions shown in Tables 1 and 2 were used for the sacrificial anode material layers. The alloys were cast by direct chill casting process at the respective cooling rates of the slab surface shown in Table 6, subjected to facing and then to the homogenization shown in Table 6. Alloys having the compositions shown in Table 3 were used for the core materials. The alloys for the core materials were cast by direct chill casting process. The slabs for the core materials were subjected to homogenization at 520°C for six hours and then to facing, thereby reducing the thicknesses to predetermined values. The plate thicknesses of the slabs for the sacrificial anode material layers and the thicknesses of the slabs for the core materials after facing were adjusted in such a manner that the cladding ratio of the sacrificial anode material layers became 10%. Next, billets were produced by placing the slabs for the sacrificial anode material layers on one surface of the respective slabs for the core materials with the respective combinations shown in Tables 4 and 5. When SWAAT was conducted for evaluating the corrosion resistance, the sacrificial anode material 2 was provided on the outer surface of the core material 1 as shown in Fig. 1, and the corrosion resistance of the outer surface was evaluated. When a circulation cycle test was conducted, the sacrificial anode material was provided on the inner surface unlike the structure shown in Fig. 1, and the corrosion resistance of the inner surface was evaluated. In this regard, C50 and C51 shown in Table 5 were three-layer cladding materials having the sacrificial anode material clad also on the opposite surface to the surface to be evaluated. Also in this case, the corrosion resistance of the outer surface was evaluated in the SWAAT test, and the corrosion resistance of the inner surface was evaluated by the circulation cycle test. The cladding ratio on the opposite surface to the surface to be evaluated in Tables 4 and 5 was also 10%. In Tables 1 to 3, "-" indicates that the component was contained as impurities in an amount of 0.04% or less or the content thereof was less than the measurement limit which was difficult to measure also as impurities.

**[Table 1]**

| No. | Alloy composition (mass%) | | | | | | | | | | | |
|---|---|---|---|---|---|---|---|---|---|---|---|---|
| | Si | Mg | Fe | Ni | Cu | Mn | Zn | Ti | Zr | Cr | V | Al |
| A1 | 0.82 | 0.86 | - | - | - | - | - | - | - | - | - | balance |
| A2 | 0.05 | 0.83 | - | - | - | - | - | - | - | - | - | balance |
| A3 | 0.10 | 0.84 | - | - | - | - | - | - | - | - | - | balance |
| A4 | 0.22 | 0.53 | - | - | - | - | - | - | - | - | - | balance |
| A5 | 0.81 | 0.83 | 0.05 | - | - | - | - | - | - | - | - | balance |
| A6 | 1.45 | 0.82 | - | - | - | - | - | - | - | - | - | balance |
| A7 | 1.49 | 0.83 | - | - | - | - | - | - | - | - | - | balance |
| A8 | 2.00 | 1.00 | - | - | - | - | - | - | - | - | - | balance |
| A9 | 2.50 | 0.30 | - | - | - | - | - | - | - | - | - | balance |
| A10 | 0.82 | 0.05 | - | - | - | - | - | - | - | - | - | balance |
| A11 | 0.50 | 0.10 | - | - | - | - | - | - | - | - | - | balance |
| A12 | 0.83 | 0.20 | - | - | - | - | - | - | - | - | - | balance |
| A13 | 0.85 | 0.51 | - | - | - | - | - | - | - | - | - | balance |
| A14 | 0.50 | 0.57 | - | - | - | - | - | - | - | - | - | balance |
| A15 | 0.84 | 2.00 | - | - | - | - | - | - | - | - | - | balance |
| A16 | 0.80 | 1.50 | - | - | - | - | - | - | - | - | - | balance |
| A17 | 0.83 | 2.50 | - | - | - | - | - | - | - | - | - | balance |
| A18 | 0.87 | 0.80 | 1.00 | - | - | - | - | - | - | - | - | balance |
| A19 | 0.80 | 1.50 | 1.50 | - | - | - | - | - | - | - | - | balance |
| A20 | 0.86 | 0.81 | - | 0.05 | - | - | - | - | - | - | - | balance |
| A21 | 0.80 | 0.82 | - | 1.00 | - | - | - | - | - | - | - | balance |
| A22 | 0.80 | 1.55 | - | 1.20 | - | - | - | - | - | - | - | balance |

**[Table 2]**

| No. | Alloy composition (mass%) | | | | | | | | | | | |
|---|---|---|---|---|---|---|---|---|---|---|---|---|
| | Si | Mg | Fe | Ni | Cu | Mn | Zn | Ti | Zr | Cr | V | Al |
| A23 | 0.80 | 0.81 | - | - | 0.05 | - | - | - | - | - | - | balance |
| A24 | 0.81 | 0.86 | - | - | 1.00 | - | - | - | - | - | - | balance |
| A25 | 0.86 | 1.52 | - | - | 1.20 | - | - | - | - | - | - | balance |
| A26 | 0.89 | 0.84 | - | - | - | 0.05 | - | - | - | - | - | balance |
| A27 | 0.83 | 0.84 | - | - | - | 1.50 | - | - | - | - | - | balance |
| A28 | 0.83 | 1.57 | - | - | - | 1.80 | - | - | - | - | - | balance |
| A29 | 0.82 | 0.85 | - | - | - | - | 0.05 | - | - | - | - | balance |
| A30 | 0.81 | 0.81 | - | - | - | - | 1.00 | - | - | - | - | balance |
| A31 | 0.87 | 1.49 | - | - | - | - | 2.00 | - | - | - | - | balance |
| A32 | 0.81 | 0.83 | - | - | - | - | - | 0.05 | - | - | - | balance |
| A33 | 0.80 | 0.80 | - | - | - | - | - | 0.30 | - | - | - | balance |
| A34 | 0.88 | 1.50 | - | - | - | - | - | 0.35 | - | - | - | balance |
| A35 | 0.84 | 0.80 | - | - | - | - | - | - | 0.05 | - | - | balance |
| A36 | 0.87 | 0.81 | - | - | - | - | - | - | 0.30 | - | - | balance |
| A37 | 0.80 | 1.52 | - | - | - | - | - | - | 0.35 | - | - | balance |
| A38 | 0.80 | 0.85 | - | - | - | - | - | - | - | 0.05 | - | balance |
| A39 | 0.84 | 0.89 | - | - | - | - | - | - | - | 0.30 | - | balance |
| A40 | 0.82 | 1.50 | - | - | - | - | - | - | - | 0.35 | - | balance |
| A41 | 0.83 | 0.80 | - | - | - | - | - | - | - | - | 0.05 | balance |
| A42 | 0.86 | 0.83 | - | - | - | - | - | - | - | - | 0.30 | balance |
| A43 | 0.80 | 1.51 | - | - | - | - | - | - | - | - | 0.35 | balance |

**[Table 3]**

| No. | JIS Name | Alloy composition (mass%) | | | | | | |
|---|---|---|---|---|---|---|---|---|
| | | Si | Fe | Cu | Mn | Mg | Zn | Al |
| B1 | A1100 | 0.01 | 0.32 | - | - | - | - | balance |
| B2 | A2024 | 0.01 | 0.38 | 4.25 | 0.62 | 1.61 | - | balance |
| B3 | A3003 | 0.01 | 0.33 | 0.18 | 1.10 | - | - | balance |
| B4 | A4343 | 7.50 | 0.50 | - | - | - | - | balance |
| B5 | A5052 | 0.01 | 0.21 | - | - | 2.40 | - | balance |
| B6 | A6061 | 0.62 | 0.34 | 0.32 | - | 1.01 | - | balance |
| B7 | A7072 | 0.01 | 0.21 | - | - | - | 1.00 | balance |

**[Table 4]**

| No. | Sacrificial anode material layer (surface for evaluation of corrosion resistance) | Core material layer | Surface opposite to surface evaluated |
|---|---|---|---|
| C1 | A1 | B3 | none |
| C2 | A2 | B3 | none |
| C3 | A3 | B3 | none |
| C4 | A4 | B3 | none |
| C5 | A5 | B3 | none |
| C6 | A6 | B3 | none |
| C7 | A7 | B3 | none |
| C8 | A8 | B3 | none |
| C9 | A9 | B3 | none |
| C10 | A10 | B3 | none |
| C11 | A11 | B3 | none |
| C12 | A12 | B3 | none |
| C13 | A13 | B3 | none |
| C14 | A14 | B3 | none |
| C15 | A15 | B3 | none |
| C16 | A16 | B3 | none |
| C17 | A17 | B3 | none |
| C18 | A18 | B3 | none |
| C19 | A19 | B3 | none |
| C20 | A20 | B3 | none |
| C21 | A21 | B3 | none |
| C22 | A22 | B3 | none |
| C23 | A23 | B3 | none |
| C24 | A24 | B3 | none |
| C25 | A25 | B3 | none |

**[Table 5]**

| No. | Sacrificial anode material layer (surface for evaluation of corrosion resistance) | Core material layer | Surface opposite to surface evaluated |
|---|---|---|---|
| C26 | A26 | B3 | none |
| C27 | A27 | B3 | none |
| C28 | A28 | B3 | none |
| C29 | A29 | B3 | none |
| C30 | A30 | B3 | none |
| C31 | A31 | B3 | none |
| C32 | A32 | B3 | none |
| C33 | A33 | B3 | none |
| C34 | A34 | B3 | none |
| C35 | A35 | B3 | none |
| C36 | A36 | B3 | none |
| C37 | A37 | B3 | none |
| C38 | A38 | B3 | none |
| C39 | A39 | B3 | none |
| C40 | A40 | B3 | none |
| C41 | A41 | B3 | none |
| C42 | A42 | B3 | none |
| C43 | A43 | B3 | none |
| C44 | A1 | B1 | none |
| C45 | A1 | B2 | none |
| C46 | A1 | B4 | none |
| C47 | A1 | B5 | none |
| C48 | A1 | B6 | none |
| C49 | A1 | B7 | none |
| C50 | A1 | B1 | A1 |
| C51 | A1 | B1 | B4 |

**[Table 6]**

| No. | Cooling rate of slab surface (°C/sec) | Homogenization of slab | |
|---|---|---|---|
| | | Temperature (°C) | Period (min) |
| W1 | 0.1 | 440 | 180 |
| W2 | 1 | 440 | 180 |
| W3 | 3 | 440 | 180 |
| W4 | 50 | 440 | 180 |
| W5 | 3 | none | none |
| W6 | 3 | 350 | 180 |
| W7 | 3 | 400 | 180 |
| W8 | 3 | 480 | 180 |
| W9 | 3 | 630 | 180 |
| W10 | 3 | 440 | 5 |
| W11 | 3 | 440 | 60 |
| W12 | 3 | 440 | 1200 |

The billets were heated to 500°C before the extrusion step and immediately hot extruded into clad extruded tubes having an outer diameter of 47 mm and a thickness of 3.5 mm using an indirect extruder. The clad extruded tubes obtained were cooled at the described rates in X1 to 5 and 11 in Table 7 and at a rate of 10 °C/minute in X6 to 10. Moreover, the clad extruded tubes cooled were subjected to a drawing process using a continuous block drawing machine. At the end, annealing at 500°C for two hours was conducted in X6 to 10. Then, the clad extruded tubes were cooled at the respective rates described in Table 7. As shown in Table 7, the final heating step at 350°C or higher in the production steps was the hot extrusion step in X1 to 5 and 11 and was the annealing step at 500°C for two hours in X6 to 10. As shown in Table 7, the extrusion step, which was the hot working step at 380°C or higher, included the following cases: extrusion was conducted once at a working ratio of 50% or more (X1, X3, X5, X6, X8 and X10) ; extrusion was conducted three times where the respective working ratios were 15% or more and the maximum working ratio was 40% (X2, first at 15%, second at 25% and third at 40%); extrusion was conducted twice where the respective working ratios were 15% or more and the maximum working ratio was 60% (X4, first at 20% and second at 60%); extrusion was conducted four times where the respective working ratios were 15% or more and the maximum working ratio was 18% (X7, first at 15%, second at 15%, third at 15% and fourth at 18%); extrusion was conducted three times where the respective working ratios were 15% or more and the maximum working ratio was 25% (X9, first at 15%, second at 20% and third at 25%); and extrusion was conducted once at a working ratio of 10% (X11). Examples 2 to 5, which are described below, were conducted in the same manner. Through the above steps, two-layer and three-layer clad extruded tube samples having an outer diameter of 40 mm, a thickness of 0.8 mm and a cladding ratio of the sacrificial anode material layer of 10% per surface were produced. With respect to the examples produced in the above manner, the distributions of the Mg-Si-based crystallized product/precipitated product and the corrosion resistance of the two-layer and three-layer clad extruded tube samples were evaluated as follows.

**[Table 7]**

| No. | Cooling rate (°C/min) | | Hot working step at 380°C or higher | | | Final heating step at 350°C or higher | Cooling rate after final step at 350°C or higher (°C/min) |
|---|---|---|---|---|---|---|---|
| | Hot extrusion (Hot rolling | Annealing | One hot working step | Plurality of hot working steps | | | |
| | | | Working ratio (%) | Maximum working ratio (%) | Number of steps at working ratios of 15% or more | | |
| X1 | 0.3 | none | 90 | - | - | hot extrusion (hot rolling) | 0.3 |
| X2 | 10 | none | - | 40 | 3 | hot extrusion (hot rolling) | 10 |
| X3 | 100 | none | 50 | - | - | hot extrusion (hot rolling) | 100 |
| X4 | 500 | none | - | 60 | 2 | hot extrusion (hot rolling) | 500 |
| X5 | 1000 | none | 70 | - | - | hot extrusion (hot rolling) | 1000 |
| X6 | 10 | 0.3 | 60 | - | - | annealing | 0.3 |
| X7 | 10 | 1 | - | 18 | 4 | annealing | 1 |
| X8 | 10 | 10 | 70 | - | - | annealing | 10 |
| X9 | 10 | 500 | - | 25 | 3 | annealing | 500 |
| X10 | 10 | 1000 | 50 | - | - | annealing | 1000 |
| X11 | 100 | none | 10 | - | - | hot extrusion (hot rolling) | 10 |

### (a) Surface Densities of Mg-Si-Based Crystallized Product in Sacrificial Anode Material Layer

A test piece for microstructure observation was cut out of the sacrificial anode material layer of a two-layer or three-layer clad extruded tube, and the distributions of Mg-Si-based crystallized product in a section in the thickness direction were measured. Compositional images at a magnification of 2500 times were observed using a SEM (Scanning Electron Microscope), and five optional fields were selected. The Mg-Si-based crystallized product which were observed as black parts were extracted by image processing, and the surface densities of the product having a circle-equivalent diameter of 0.1 to 5. 0 µm and a circle-equivalent diameter of more than 5. 0 µm and 10.0 µm or less were measured. The arithmetic means of the values of the five fields were determined. A circle-equivalent diameter was determined from the diameter of a circle having the same area as the sectional area of the Mg-Si-based crystallized product particle to be measured.

### (b) Volume Density of Mg-Si-Based Precipitated Product in Sacrificial Anode Material Layer

The volume density of the Mg-Si-based precipitated product having a length of 10 to 1000 nm in a two-layer or three-layer clad extruded tube (before sensitization treatment) was measured directly after the production, and the volume density of the Mg-Si-based precipitated product having a length of 10 to 1000 nm (after sensitization treatment) was measured after sensitization treatment at 175°C for five hours after the production. A test piece having a thickness of about 100 to 200 nm was produced by FIB (Focused Ion Beam) from the area from the sacrificial anode material surface to the depth of 5 µm. Needle-like precipitated product precipitated in three directions along the 100 plane of the aluminum matrix of the sample piece were observed at five optional points using a transmission electron microscope (TEM) at a magnification of 500000 times. The numbers of needle-like Mg-Si-based precipitated product particles having a length of 10 to 1000 nm were counted in the images at the respective points. Furthermore, the numbers of dot-like precipitated product particles which were at right angles with the needle-like precipitated product particles (needle-like particles appeared to be dots because they were observed from the front) and which had a diameter of 100 nm or less were also counted. The sum of the number of the dot-like particles and the number of the needle-like precipitated product particles was divided by the measured volume, and the volume density of the Mg-Si-based precipitated product at an observation point was determined. At the end, the arithmetic mean of the volume densities at the observation points was calculated and regarded as the volume density of the Mg-Si-based precipitated product in the sample. The reason for also counting the number of dot-like precipitated product particles (needle-like particles appeared to be dots because they were observed from the front) is as follows. That is, the needle-like Mg-Si-based precipitated product was precipitated similarly in three directions along the 100 plane of the aluminum matrix, and the precipitated product particles which appeared to be dots might have a length of 10 to 1000 nm when observed from the orthogonal direction. An Mg-Si-based precipitated product having a length of less than 10 nm is difficult to observe with a transmission electron microscope (TEM) and cannot be recognized or measured clearly as a dot even when observed from the front. When a needle-like Mg-Si-based precipitated product having a length exceeding 1000 nm is observed from the front, the diameter exceeds 100 nm. Thus, such a product was excluded from the measurement. Also, when an Mg-Si-based crystallized product appears to be a dot, the diameter thereof is 200 nm or more. Thus, the product was also excluded from the measurement.

### (c) SWAAT Test

To evaluate the corrosion resistance of the two-layer and three-layer clad extruded tubes, SWAAT according to ASTM G85 simulating the atmospheric corrosion environment was conducted for 1500 hours using the samples. After the SWAAT test, the corrosion product was removed from the surfaces of the test pieces, and the corrosion depths were measured. The maximum value of the measurement at 10 points was regarded as the corrosion depth. Samples were regarded to be excellent when the corrosion depth was less than 70 µm, good when the corrosion depth was 70 µm or more and 90 µm or less and failure when the corrosion depth exceeded 90 µm or perforation was formed. In this regard, the parts except for the test surface were masked so that the parts would not touch the aqueous test solution.

### (d) Circulation Cycle Test

To further evaluate the corrosion resistance, a circulation cycle test simulating an aqueous refrigerant environment was conducted. An aqueous solution at 88°C containing 195 ppm Cl⁻, 60 ppm SO₄²⁻, 1 ppm Cu²⁺ and 30 ppm Fe²⁺ was caused to flow on the test surface of a sample piece which had been heat-treated as described above at a specific volume of 6 mL/cm² and a flow rate of 2 m/second for eight hours. Then, the sample piece was left for 16 hours. Such a cycle of heating/flowing and leaving was repeated for three months. After the circulation cycle test, the corrosion product was removed from the surfaces of the test piece, and the corrosion depths were measured. The maximum value of the measurement at 10 points was regarded as the corrosion depth. Samples were regarded to be excellent when the corrosion depth was less than 70 µm, good when the corrosion depth was 70 µm or more and 90 µm or less and failure when the corrosion depth exceeded 90 µm or perforation was formed. In this regard, the parts except for the test surface were masked so that the parts would not touch the aqueous test solution.

The results of the evaluation items (a) to (d) are shown in Tables 10 to 13.

**[Table 10]**

| | Structure of material | Heat treatment of slab | Cooling during production | Heat treatment after cooling | Surface density of Mg-Si-based crystallized product having circle-equivalent diameter of 0.1-5.0 µm | Surface density of Mg-Si-based crystallized product having circle-equivalent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/µm³) | (pieces/µm³) | (µm) | (µm) |
| Inventive Example 1-1 | C1 | W3 | X2 | none | 18681 | 0 | 0 | 14408 | 54 | 45 |
| Inventive Example 1-2 | C3 | W3 | X2 | none | 750 | 0 | 0 | 78794 | 46 | 36 |
| Inventive Example 1-3 | C4 | W3 | X2 | none | 105 | 0 | 0 | 91046 | 46 | 36 |
| Inventive Example 1-4 | C5 | W3 | X2 | none | 4504 | 1 | 0 | 15984 | 41 | 36 |
| Inventive Example 1-5 | C6 | W3 | X2 | none | 75007 | 0 | 0 | 10555 | 58 | 51 |
| Inventive Example 1-6 | C7 | W3 | X2 | none | 95160 | 1 | 0 | 8610 | 67 | 58 |
| Inventive Example 1-7 | C11 | W3 | X2 | none | 888 | 0 | 0 | 62134 | 36 | 35 |
| Inventive Example 1-8 | C12 | W3 | X2 | none | 3907 | 0 | 0 | 45622 | 40 | 33 |
| Inventive Example 1-9 | C13 | W3 | X2 | none | 7685 | 0 | 0 | 14402 | 54 | 46 |
| Inventive Example 1-10 | C14 | W3 | X2 | none | 2832 | 0 | 0 | 39111 | 43 | 38 |
| Inventive Example 1-11 | C15 | W3 | X2 | none | 42257 | 5 | 0 | 7146 | 77 | 66 |
| Inventive Example 1-12 | C16 | W3 | X2 | none | 10758 | 1 | 0 | 13205 | 63 | 54 |
| Inventive Example 1-13 | C18 | W3 | X2 | none | 10893 | 0 | 0 | 21236 | 35 | 31 |
| Inventive Example 1-14 | C20 | W3 | X2 | none | 20879 | 0 | 0 | 14280 | 38 | 32 |
| Inventive Example 1-15 | C21 | W3 | X2 | none | 13374 | 0 | 0 | 13507 | 39 | 33 |
| Inventive Example 1-16 | C23 | W3 | X2 | none | 23187 | 0 | 0 | 13927 | 38 | 32 |
| Inventive Example 1-17 | C24 | W3 | X2 | none | 24163 | 0 | 0 | 18361 | 36 | 31 |
| Inventive Example 1-18 | C26 | W3 | X2 | none | 12227 | 0 | 0 | 14945 | 39 | 31 |
| Inventive Example 1-19 | C27 | W3 | X2 | none | 14654 | 0 | 0 | 10901 | 41 | 34 |

**[Table 11]**

| | Structure of material | Heat treatment of slab | Cooling during production | Heat treatment after cooling | Surface density of Mg-Si-based crystallized product having circle-equivalent diameter of 0.1-5.0 µm | Surface density of Mg-Si-based crystallized product having circle-equivalent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/m³) | (pieces/µm³) | (µm) | (µm) |
| Inventive Example 1-20 | C29 | W3 | X2 | none | 16478 | 0 | 0 | 16773 | 40 | 34 |
| Inventive Example 1-21 | C30 | W3 | X2 | none | 18742 | 0 | 0 | 12004 | 39 | 34 |
| Inventive Example 1-22 | C32 | W3 | X2 | none | 15984 | 0 | 0 | 14455 | 37 | 32 |
| Inventive Example 1-23 | C33 | W3 | X2 | none | 4182 | 0 | 0 | 15025 | 39 | 32 |
| Inventive Example 1-24 | C35 | W3 | X2 | none | 18561 | 1 | 0 | 11683 | 43 | 39 |
| Inventive Example 1-25 | C36 | W3 | X2 | none | 22717 | 1 | 0 | 11036 | 44 | 39 |
| Inventive Example 1-26 | C38 | W3 | X2 | none | 19962 | 0 | 0 | 13915 | 37 | 32 |
| Inventive Example 1-27 | C39 | W3 | X2 | none | 39517 | 0 | 0 | 9579 | 40 | 34 |
| Inventive Example 1-28 | C41 | W3 | X2 | none | 13249 | 0 | 0 | 12861 | 39 | 34 |
| Inventive Example 1-29 | C42 | W3 | X2 | none | 29782 | 1 | 0 | 11828 | 45 | 41 |
| Inventive Example 1-30 | C44 | W3 | X2 | none | 5261 | 0 | 0 | 15650 | 55 | 45 |
| Inventive Example 1-31 | C45 | W3 | X2 | none | 24575 | 0 | 0 | 14026 | 58 | 52 |
| Inventive Example 1-32 | C46 | W3 | X2 | none | 12255 | 0 | 0 | 13314 | 56 | 45 |
| Inventive Example 1-33 | C47 | W3 | X2 | none | 7615 | 0 | 0 | 17860 | 54 | 44 |
| Inventive Example 1-34 | C48 | W3 | X2 | none | 8815 | 1 | 0 | 11393 | 64 | 55 |
| Inventive Example 1-35 | C49 | W3 | X2 | none | 23037 | 0 | 0 | 22432 | 48 | 41 |
| Inventive Example 1-36 | C50 | W3 | X2 | none | 8344 | 0 | 0 | 20652 | 51 | 41 |
| Inventive Example 1-37 | C51 | W3 | X2 | none | 10008 | 0 | 0 | 23620 | 49 | 40 |

**[Table 12]**

| | Structure of material | Heat treatment of slab | Cooling during production | Heat treatment after cooling | Surface density of Mg-Si-based crystallized product having circle-equivalen t diameter of 0.1-5.0 µm | Surface density of Mg-Si-based crystallized product having circle-equivalent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/µm³) | (pieces/µm³) | (µm) | (µm) |
| Inventive Example 1-38 | C1 | W2 | X2 | none | 149349 | 3 | 0 | 8286 | 85 | 81 |
| Inventive Example 1-39 | C1 | W4 | X2 | none | 1130 | 0 | 0 | 91651 | 30 | 31 |
| Inventive Example 1-40 | C1 | W7 | X2 | none | 8087 | 0 | 0 | 9146 | 63 | 53 |
| Inventive Example 1-41 | C1 | W8 | X2 | none | 16802 | 0 | 0 | 20530 | 50 | 43 |
| Inventive Example 1-42 | C1 | W11 | X2 | none | 8769 | 0 | 0 | 15876 | 52 | 42 |
| Inventive Example 1-43 | C1 | W12 | X2 | none | 7822 | 0 | 0 | 28538 | 45 | 38 |
| Inventive Example 1-44 | C1 | W3 | X3 | none | 4235 | 0 | 0 | 2503 | 73 | 61 |
| Inventive Example 1-45 | C1 | W3 | X4 | none | 18245 | 0 | 0 | 2056 | 84 | 75 |
| Inventive Example 1-46 | C1 | W3 | X7 | none | 8342 | 0 | 0 | 99937 | 38 | 26 |
| Inventive Example 1-47 | C1 | W3 | X8 | none | 6271 | 0 | 0 | 13001 | 57 | 43 |
| Inventive Example 1-48 | C1 | W3 | X9 | none | 23315 | 0 | 0 | 1560 | 87 | 78 |
| Inventive Example 1-49 | C1 | W3 | X11 | none | 5084 | 7 | 0 | 1006 | 82 | 79 |
| Inventive Example 1-50 | C1 | W5 | X2 | none | 26400 | 0 | 0 | 13050 | 88 | 79 |
| Inventive Example 1-51 | C1 | W6 | X2 | none | 30505 | 0 | 0 | 10305 | 82 | 87 |
| Inventive Example 1-52 | C1 | W10 | X2 | none | 28752 | 0 | 0 | 11053 | 87 | 86 |

**[Table 13]**

| | Structure of material | Heat treatment of slab | Cooling during production | Heat treatment after cooling | Surface density of Mg-Si-based crystallized product having circle-equivale nt diameter of 0.1-5.0 µm | surface density of Mg-Si-based crystallized product having circle-equivalent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/µm³) | (pieces/µm³) | (µm) | (µm) |
| Comparative Example 1-1 | C2 | W3 | X2 | none | 50 | 0 | 0 | 58717 | 121 | 123 |
| Comparative Example 1-2 | C8 | W3 | X1 | none | 166463 | 0 | 0 | 119764 | 119 | 137 |
| Comparative Example 1-3 | C8 | W3 | X2 | none | 162407 | 0 | 0 | 6097 | 128 | 111 |
| Comparative Example 1-4 | C8 | W3 | X5 | none | 165464 | 0 | 0 | 820 | 141 | 120 |
| Comparative Example 1-5 | C8 | W3 | X6 | none | 159744 | 0 | 0 | 128343 | 146 | 115 |
| Comparative Example 1-6 | C8 | W3 | X10 | none | 164134 | 0 | 0 | 730 | 134 | 119 |
| Comparative Example 1-7 | C9 | W3 | X2 | none | - | - | 0 | - | - | - |
| Comparative Example 1-8 | C10 | W3 | X2 | none | 71 | 0 | 0 | 34249 | 131 | 110 |
| Comparative Example 1-9 | C17 | W3 | X2 | none | - | - | 0 | - | - | - |
| Comparative Example 1-10 | C19 | W1 | X2 | none | 164186 | 10 | 0 | 470 | 118 | 129 |
| Comparative Example 1-11 | C22 | W1 | X2 | none | 174418 | 13 | 0 | 320 | 149 | 113 |
| Comparative Example 1-12 | C25 | W1 | X2 | none | 161606 | 14 | 0 | 630 | 138 | 122 |
| Comparative Example 1-13 | C28 | W1 | X2 | none | 174743 | 9 | 0 | 570 | 136 | 142 |
| Comparative Example 1-14 | C31 | W1 | X2 | none | 174424 | 10 | 0 | 415 | 102 | 114 |
| Comparative Example 1-15 | C34 | W1 | X2 | none | 168859 | 13 | 0 | 560 | 118 | 142 |
| Comparative Example 1-16 | C37 | W1 | X2 | none | 161079 | 11 | 0 | 390 | 142 | 141 |
| Comparative Example 1-17 | C40 | W1 | X2 | none | 163279 | 13 | 0 | 615 | 148 | 120 |
| Comparative Example 1-18 | C43 | W1 | X2 | none | 172033 | 11 | 0 | 555 | 111 | 137 |
| Comparative Example 1-19 | C1 | W9 | X2 | none | - | - | 0 | - | - | - |

As shown in Tables 10 to 12, in Inventive Examples 1-1 to 1-52 of the invention, the surface densities of the Mg-Si-based crystallized product having a circle-equivalent diameter of 0.1 to 5.0 µm and a circle-equivalent diameter of more than 5.0 µm and 10.0 µm or less in the sacrificial anode material layer were in the defined ranges, and the evaluation results of the SWAAT test and the circulation cycle test were good. On the other hand, good evaluation results were not obtained in Comparative Examples 1-1 to 1-19 as shown in Table 13.

In this regard, because the conditions of the heat treatment of the slab of the sacrificial anode material in Inventive Examples 1-51 and 52 of the invention did not satisfy the conditions of the homogenization of the production method according to the second embodiment but satisfied the requirements of the first embodiment, these examples were regarded as the examples of the invention according to the first embodiment. Also, the conditions of the heat treatment of the slab of the sacrificial anode material in Comparative Example 1-19 below were not preferable for the production method according to the first embodiment and did not satisfy the conditions of the homogenization of the second embodiment, and thus this example was regarded as an example of the second corresponding invention. The conditions of the heat treatment of the slab were the same in Second to Fourth Examples below.

In Comparative Example 1-1, the Si content of the sacrificial anode material layer was little. As a result, the surface density of the Mg-Si-based crystallized product having a circle-equivalent diameter of 0. 1 to 5.0 µm in the sacrificial anode material layer was low. Thus, the corrosion resistance decreased, and corrosion which was regarded as failure in the SWAAT test and the circulation cycle test was caused.

In Comparative Example 1-2, the Si content of the sacrificial anode material layer was much. As a result, the surface density of the Mg-Si-based crystallized product having a circle-equivalent diameter of 0.1 to 5.0 µm in the sacrificial anode material layer was much. Also, in the cooling step following the hot extrusion, which was the final heating step at 350°C or higher in the production steps, the cooling rate from 350°C to 100°C was slow. As a result, the corrosion resistance decreased, and corrosion which was regarded as failure in the SWAAT test and the circulation cycle test was caused. Also, precipitation of the Mg-Si-based precipitated product was promoted, and the volume density of the Mg-Si-based precipitated product having a length of 10 to 1000 nm after sensitization treatment was high.

In Comparative Example 1-3, the Si content of the sacrificial anode material layer was much. As a result, the surface density of the Mg-Si-based crystallized product having a circle-equivalent diameter of 0.1 to 5.0 µm in the sacrificial anode material layer was much. Thus, the corrosion resistance decreased, and corrosion which was regarded as failure in the SWAAT test and the circulation cycle test was caused.

In Comparative Example 1-4, the Si content of the sacrificial anode material layer was much. As a result, the surface density of the Mg-Si-based crystallized product having a circle-equivalent diameter of 0.1 to 5.0 µm in the sacrificial anode material layer was much. As a result, the corrosion resistance decreased, and corrosion which was regarded as failure in the SWAAT test and the circulation cycle test was caused. Also, in the cooling step following the hot extrusion, which was the final heating step at 350°C or higher in the production steps, the cooling rate from 350°C to 100°C was fast. Therefore, precipitation of the Mg-Si-based precipitated product was inhibited, and the volume density of the Mg-Si-based precipitated product having a length of 10 to 1000 nm after sensitization treatment was low.

In Comparative Example 1-5, the Si content of the sacrificial anode material layer was much. As a result, the surface density of the Mg-Si-based crystallized product having a circle-equivalent diameter of 0. 1 to 5.0 µm in the sacrificial anode material layer was much. As a result, the corrosion resistance decreased, and corrosion which was regarded as failure in the SWAAT test and the circulation cycle test was caused. Also, in the cooling step following the annealing, which was the final heating step at 350°C or higher in the production steps, the cooling rate from 350°C to 100°C was slow. Therefore, precipitation of the Mg-Si-based precipitated product was promoted, and the volume density of the Mg-Si-based precipitated product having a length of 10 to 1000 nm after sensitization treatment was high.

In Comparative Example 1-6, the Si content of the sacrificial anode material layer was much. As a result, the surface density of the Mg-Si-based crystallized product having a circle-equivalent diameter of 0.1 to 5.0 µm in the sacrificial anode material layer was much. As a result, the corrosion resistance decreased, and corrosion which was regarded as failure in the SWAAT test and the circulation cycle test was caused. Also, in the cooling step following the annealing, which was the final heating step at 350°C or higher in the production steps, the cooling rate from 350°C to 100°C was fast. Therefore, precipitation of the Mg-Si-based precipitated product was inhibited, and the volume density of the Mg-Si-based precipitated product having a length of 10 to 1000 nm after sensitization treatment was low.

In Comparative Example 1-7, the Si content of the sacrificial anode material layer was very much. As a result, the melting point of the sacrificial anode layer decreased, and the sacrificial anode material melted during the production of the material. Thus, the subsequent evaluation was impossible.

In Comparative Example 1-8, the Mg content of the sacrificial anode material layer was little. As a result, the surface density of the Mg-Si-based crystallized product having a circle-equivalent diameter of 0.1 to 5.0 µm in the sacrificial anode material layer was little. Thus, the corrosion resistance decreased, and corrosion which was regarded as failure in the SWAAT test and the circulation cycle test was caused.

In Comparative Example 1-9, the Mg content of the sacrificial anode material layer was much. As a result, a thick oxide film was formed on the surface of the sacrificial anode material during the production of the material, and the pressure bonding during cladding was poor. Thus, the subsequent evaluation was impossible.

In Comparative Example 1-10, the amount of Fe added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-11, the amount of Ni added to the sacrificial anode material layer was much, and the cooling rate of the slab surface of the slab for the sacrificial anode material layer was slow. As a result, the surface densities of the Mg-Si-based crystallized product having a circle-equivalent diameter of 0. 1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-12, the amount of Cu added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-13, the amount of Mn added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-14, the amount of Zn added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-15, the amount of Ti added to the sacrificial anode material layer was much, and the cooling rate of the slab surface of the slab for the sacrificial anode material layer was slow. As a result, the surface densities of the Mg-Si-based crystallized product having a circle-equivalent diameter of 0. 1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-16, the amount of Zr added to the sacrificial anode material layer was much, and the cooling rate of the slab surface of the slab for the sacrificial anode material layer was slow. As a result, the surface densities of the Mg-Si-based crystallized product having a circle-equivalent diameter of 0. 1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-17, the amount of Cr added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-18, the amount of V added to the sacrificial anode material layer was much, and the cooling rate of the slab surface of the slab for the sacrificial anode material layer was slow. As a result, the surface densities of the Mg-Si-based crystallized product having a circle-equivalent diameter of 0. 1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 1-19, the homogenization temperature of the slab for the sacrificial anode material layer was high. As a result, the melting point of the sacrificial anode layer decreased, and the sacrificial anode material melted during the production of the material. Thus, the subsequent evaluation was impossible.

### Inventive Examples 2-1 to 2-61 and Comparative Examples 2-1 to 2-19

Next, Second Example of the aluminum alloy cladding materials of the invention is shown.

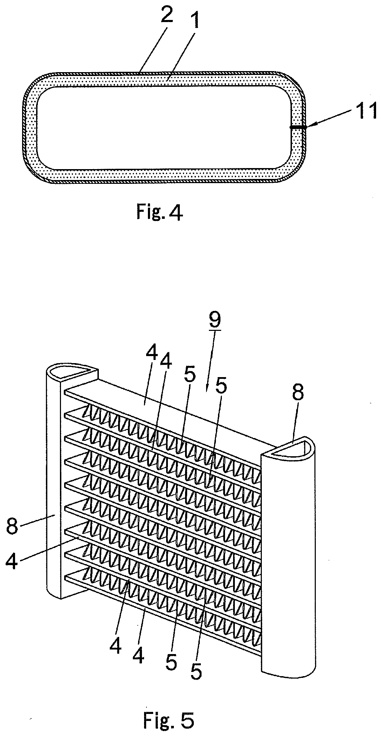

The aluminum alloy cladding materials were prepared as two-layer cladding plates in which the sacrificial anode material is provided on an outer surface of the core material, shown in Fig. 4. Alloys having the compositions shown in Tables 1 and 2 were used for the sacrificial anode material layers. The alloys were cast by direct chill casting process at the respective cooling rates of the slab surface shown in Table 6, subjected to facing and then to the homogenization shown in Table 6. Alloys having the compositions shown in Table 3 were used for the core materials. The alloys for the core materials were cast by direct chill casting process. The slabs for the core materials were subjected to homogenization at 520°C for six hours and then to facing, thereby reducing the thicknesses to predetermined values. The plate thicknesses of the slabs for the sacrificial anode material layers and the thicknesses of the slabs for the core materials after facing were adjusted in such a manner that the cladding ratio of the sacrificial anode material layers became 10%. Next, combinations are produced so that the respective slabs for the sacrificial anode material layers are piled on one surface of the respective slabs for the core materials as shown in Tables 4 and 5. When SWAAT was conducted for evaluating the corrosion resistance, the sacrificial anode material 2 was provided on the outer surface as shown in Fig. 4, and the corrosion resistance of the outer surface was evaluated. 11 in Fig.4 shows an electric sewing. When a circulation cycle test was conducted, the sacrificial anode material was provided on the inner surface unlike the structure shown in Fig. 4, and the corrosion resistance of the inner surface was evaluated. In this regard, C50 and C51 shown in Table 5 were three-layer cladding materials having the sacrificial anode material clad also on the opposite surface to the surface to be evaluated. Also in this case, the corrosion resistance of the outer surface was evaluated in the SWAAT test, and the corrosion resistance of the inner surface was evaluated by the circulation cycle test. The cladding ratio on the opposite surface to the surface to be evaluated in Tables 4 and 5 was also 10%.

The layered materials were heated to 520°C before the hot rolling step and immediately hot rolled into two-layer and three-layer clad plates having a thickness of 3. 5 mm. The clad plates obtained were cooled at the described rates in X1 to 5 and 11 in Table 7 and a rate of 10 °C/minute in X6 to 10. Moreover, the clad plates were cold rolled to a thickness of 1.0 mm. Next, annealing at 500°C for two hours was conducted in X6 to 10 in Table 7. Then, the clad plates were cooled at the respective rates described in Table 7. Moreover, the clad plates were cold rolled to a total thickness of 0.80 mm. As shown in Table 7, the final heating step at 350°C or higher in the production steps was the hot rolling step in X1 to 5 and 11 and was the annealing step at 500°C for two hours in X6 to 10. Next, the heat treatment step of the clad plates after cooling following the final heating step is shown in Table 8. Through the above steps, two-layer and three-layer clad plates having a total thickness of 0.80 mm and a cladding ratio of the sacrificial anode material layer of 10% per surface were produced. With respect to the examples produced in the above manner, the distributions of the Mg-Si-based crystallized product/precipitated product and the corrosion resistance of the two-layer and three-layer clad plate samples were evaluated in the same manners as in First Example.

**[Table 8]**

| No. | Heat treatment | |
|---|---|---|
| | Temperature (°C) | Period (min) |
| Y1 | 50 | 60 |
| Y2 | 100 | 60 |
| Y3 | 250 | 60 |
| Y4 | 345 | 60 |
| Y5 | 450 | 60 |
| Y6 | 250 | 1 |
| Y7 | 250 | 5 |
| Y8 | 250 | 600 |
| Y9 | 250 | 6000 |
| Y10 | 250 | 10000 |

The results of the evaluation items (a) to (d) are shown in Tables 14 to 17.

**[Table 14]**

| | Structure of material | Heat treatment of slab | Cooling during production | Heat treatment after cooling | Surface density of Mg-Si-based crystallized product having circle-equivalent diameter of 0.1-5.0 µm | Surface density of Mg-Si-based crystallized product having circle-equivalent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/m³) | (pieces/m³) | (µm) | (µm) |
| Inventive Example 2-1 | C1 | W3 | X2 | Y3 | 18625 | 0 | 13803 | 13842 | 40 | 36 |
| Inventive Example 2-2 | C3 | W3 | X2 | Y3 | 723 | 0 | 81631 | 82268 | 34 | 26 |
| Inventive Example 2-3 | C4 | W3 | X2 | Y3 | 109 | 0 | 91683 | 91738 | 33 | 26 |
| Inventive Example 2-4 | C5 | W3 | X2 | Y3 | 4382 | 1 | 16480 | 16671 | 29 | 27 |
| Inventive Example 2-5 | C6 | W3 | X2 | Y3 | 76882 | 0 | 10354 | 10447 | 44 | 41 |
| Inventive Example 2-6 | C7 | W3 | X2 | Y3 | 97158 | 1 | 8274 | 8431 | 53 | 41 |
| Inventive Example 2-7 | C11 | W3 | X2 | Y3 | 930 | 0 | 63501 | 64073 | 29 | 28 |
| Inventive Example 2-8 | C12 | W3 | X2 | Y3 | 3958 | 0 | 43478 | 43704 | 29 | 24 |
| Inventive Example 2-9 | C13 | W3 | X2 | Y3 | 7424 | 0 | 15007 | 15076 | 41 | 33 |
| Inventive Example 2-10 | C14 | W3 | X2 | Y3 | 2713 | 0 | 39072 | 39838 | 30 | 27 |
| Inventive Example 2-11 | C15 | W3 | X2 | Y3 | 43398 | 5 | 7418 | 7486 | 54 | 47 |
| Inventive Example 2-12 | C16 | W3 | X2 | Y3 | 10274 | 1 | 13324 | 13388 | 46 | 40 |
| Inventive Example 2-13 | C18 | W3 | X2 | Y3 | 11002 | 0 | 22298 | 22592 | 25 | 22 |
| Inventive Example 2-14 | C20 | W3 | X2 | Y3 | 20274 | 0 | 14766 | 14884 | 27 | 24 |
| Inventive Example 2-15 | C21 | W3 | X2 | Y3 | 13842 | 0 | 13966 | 13991 | 30 | 25 |
| Inventive Example 2-16 | C23 | W3 | X2 | Y3 | 24045 | 0 | 14150 | 14413 | 29 | 24 |
| Inventive Example 2-17 | C24 | W3 | X2 | Y3 | 24815 | 0 | 18104 | 18187 | 28 | 25 |
| Inventive Example 2-18 | C26 | W3 | X2 | Y3 | 11885 | 0 | 14751 | 14931 | 30 | 23 |
| Inventive Example 2-19 | C27 | W3 | X2 | Y3 | 13951 | 0 | 10530 | 10623 | 32 | 25 |

**[Table 15]**

| | Structure of material | Heat treatment of slab | Cooling during production | Heat treatment after cooling | Surface density of Mg-Si-based crystallized product having circle-equivalent diameter of 0.1-5.0 µm | Surface density of Mg-Si-based crystallized product having circle-equivalent diameter of more than 5.0 µm and 10.0 um or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/µm³) | (pieces/µm³) | (µm) | (µm) |
| Inventive Example 2-20 | C29 | W3 | X2 | Y3 | 15463 | 0 | 16673 | 16710 | 30 | 26 |
| Inventive Example 2-21 | C30 | W3 | X2 | Y3 | 16734 | 0 | 14643 | 14687 | 31 | 25 |
| Inventive Example 2-22 | C32 | W3 | X2 | Y3 | 16240 | 0 | 13992 | 14185 | 29 | 25 |
| Inventive Example 2-23 | C33 | W3 | X2 | Y3 | 4190 | 0 | 14304 | 14510 | 31 | 25 |
| Inventive Example 2-24 | C35 | W3 | X2 | Y3 | 18561 | 1 | 11227 | 11418 | 34 | 30 |
| Inventive Example 2-25 | C36 | W3 | X2 | Y3 | 23239 | 1 | 11500 | 11659 | 34 | 29 |
| Inventive Example 2-26 | C38 | W3 | X2 | Y3 | 20661 | 0 | 14416 | 14577 | 29 | 24 |
| Inventive Example 2-27 | C39 | W3 | X2 | Y3 | 38134 | 0 | 9474 | 9502 | 28 | 25 |
| Inventive Example 2-28 | C41 | W3 | X2 | Y3 | 13209 | 0 | 12990 | 13076 | 30 | 25 |
| Inventive Example 2-29 | C42 | W3 | X2 | Y3 | 28382 | 1 | 11580 | 11601 | 35 | 32 |
| Inventive Example 2-30 | C44 | W3 | X2 | Y3 | 5035 | 0 | 15102 | 15184 | 42 | 36 |
| Inventive Example 2-31 | C45 | W3 | X2 | Y3 | 25558 | 0 | 14377 | 14584 | 43 | 37 |
| Inventive Example 2-32 | C46 | W3 | X2 | Y3 | 12255 | 0 | 13447 | 13525 | 43 | 35 |
| Inventive Example 2-33 | C47 | W3 | X2 | Y3 | 7546 | 0 | 18128 | 18331 | 39 | 34 |
| Inventive Example 2-34 | C48 | W3 | X2 | Y3 | 9141 | 1 | 11894 | 12003 | 51 | 43 |
| Inventive Example 2-35 | C49 | W3 | X2 | Y3 | 22922 | 0 | 22454 | 22750 | 34 | 32 |
| Inventive Example 2-36 | C50 | W3 | X2 | Y3 | 8119 | 0 | 21230 | 21608 | 38 | 31 |
| Inventive Example 2-37 | C51 | W3 | X2 | Y3 | 9928 | 0 | 23644 | 23824 | 37 | 28 |

**[Table 16]**

| | Structure of material | Heat treatment of slab | Cooling during production | Heat treatment after cooling | Surface density of Mg-Si-based crystallized product having circle-equivalent diameter of 0.1-5.0 µm | Surface density of Mg-Si-based crystallized product having circle-equivalent diameter of more than 5.0 and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/µm³) | (pieces/m³) | (µm) | (µm) |
| Inventive Example 2-38 | C1 | W2 | X2 | Y3 | 149831 | 3 | 7955 | 8100 | 63 | 62 |
| Inventive Example 2-39 | C1 | W4 | X2 | Y3 | 1121 | 0 | 91559 | 93335 | 23 | 24 |
| Inventive Example 2-40 | C1 | W7 | X2 | Y3 | 7780 | 0 | 9237 | 9244 | 49 | 42 |
| Inventive Example 2-41 | C1 | W8 | X2 | Y3 | 16533 | 0 | 19770 | 19810 | 38 | 31 |
| Inventive Example 2-42 | C1 | W11 | X2 | Y3 | 8374 | 0 | 16416 | 16528 | 40 | 32 |
| Inventive Example 2-43 | C1 | W12 | X2 | Y3 | 8143 | 0 | 28880 | 29336 | 35 | 27 |
| Inventive Example 2-44 | C1 | W3 | X3 | Y3 | 4438 | 0 | 1003 | 1504 | 56 | 46 |
| Inventive Example 2-45 | C1 | W3 | X4 | Y3 | 18227 | 0 | 2130 | 2137 | 63 | 59 |
| Inventive Example 2-46 | C1 | W3 | X7 | Y3 | 8017 | 0 | 98053 | 99897 | 29 | 20 |
| Inventive Example 2-47 | C1 | W3 | X8 | Y3 | 6409 | 0 | 13157 | 13365 | 45 | 31 |
| Inventive Example 2-48 | C1 | W3 | X9 | Y3 | 22359 | 0 | 1602 | 1623 | 64 | 55 |
| Inventive Example 2-49 | C1 | W3 | X2 | Y1 | 17766 | 0 | 0 | 14523 | 58 | 46 |
| Inventive Example 2-50 | C1 | W3 | X2 | Y2 | 19241 | 0 | 15056 | 15306 | 38 | 35 |
| Inventive Example 2-51 | C1 | W3 | X2 | Y4 | 19410 | 0 | 8078 | 8185 | 42 | 33 |
| Inventive Example 2-52 | C1 | W3 | X2 | Y5 | 18363 | 0 | 0 | 14826 | 58 | 49 |
| Inventive Example 2-53 | C1 | W3 | X2 | Y6 | 18457 | 0 | 165 | 14408 | 55 | 48 |
| Inventive Example 2-54 | C1 | W3 | X2 | Y7 | 18924 | 0 | 14005 | 14041 | 41 | 33 |
| Inventive Example 2-55 | C1 | W3 | X2 | Y8 | 19596 | 0 | 14019 | 14285 | 42 | 36 |
| Inventive Example 2-56 | C1 | W3 | X2 | Y9 | 17952 | 0 | 9509 | 9538 | 38 | 33 |
| Inventive Example 2-57 | C1 | W3 | X2 | Y10 | 18588 | 0 | 805 | 1250 | 58 | 49 |
| Inventive Example 2-58 | C1 | W3 | X11 | Y3 | 4805 | 7 | 0 | 1405 | 77 | 87 |
| Inventive Example 2-59 | C1 | W5 | X2 | Y3 | 28046 | 0 | 0 | 14085 | 81 | 87 |
| Inventive Example 2-60 | C1 | W6 | X2 | Y3 | 35056 | 0 | 0 | 11567 | 81 | 87 |
| Inventive Example 2-61 | C1 | W10 | X2 | Y3 | 29098 | 0 | 0 | 13546 | 87 | 83 |

**[Table 17]**

| | Structure of material | Heat treatment of slab | Cooling during production | Heat treatment after cooling | Surface density of Mg-Si-based crystallized product having circle-equivalent diameter of 0.1-5.0 µm | Surface density of Mg-Si-based crystallized product having circle-equivalent diameter of more than 5.0 µm and 10.0 µm or less | Volume density of Mg-Si-based precipitated product having length of 1 0-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/µm³) | (pieces/m³) | (µm) | (µm) |
| Comparative Example 2-1 | C2 | W3 | X2 | Y3 | 65 | 0 | 56662 | 56673 | 135 | 132 |
| Comparative Example 2-2 | C8 | W3 | X1 | Y3 | 164764 | 0 | 125273 | 127052 | 145 | 134 |
| Comparative Example 2-3 | C8 | W3 | X2 | Y3 | 163477 | 0 | 5920 | 5989 | 136 | 130 |
| Comparative Example 2-4 | C8 | W3 | X5 | Y3 | 164642 | 0 | 790 | 791 | 139 | 141 |
| Comparative Example 2-5 | C8 | W3 | X6 | Y3 | 167871 | 0 | 124651 | 124912 | 154 | 146 |
| Comparative Example 2-6 | C8 | W3 | X10 | Y3 | 162453 | 0 | 680 | 705 | 138 | 145 |
| Comparative Example 2-7 | C9 | W3 | X2 | Y3 | - | - | - | - | - | - |
| Comparative Example 2-8 | C10 | W3 | X2 | Y3 | 45 | 0 | 34454 | 34475 | 147 | 127 |
| Comparative Example 2-9 | C17 | W3 | X2 | Y3 | - | - | - | - | - | - |
| Comparative Example 2-10 | C19 | W1 | X2 | Y3 | 173606 | 10 | 735 | 738 | 107 | 103 |
| Comparative Example 2-11 | C22 | W1 | X2 | Y3 | 169278 | 13 | 711 | 716 | 107 | 124 |
| Comparative Example 2-12 | C25 | W1 | X2 | Y3 | 155494 | 15 | 393 | 394 | 136 | 101 |
| Comparative Example 2-13 | C28 | W1 | X2 | Y3 | 163202 | 9 | 561 | 563 | 115 | 106 |
| Comparative Example 2-14 | C31 | W1 | X2 | Y3 | 168936 | 10 | 694 | 706 | 135 | 144 |
| Comparative Example 2-15 | C34 | W1 | X2 | Y3 | 177454 | 13 | 659 | 660 | 120 | 100 |
| Comparative Example 2-16 | C37 | W1 | X2 | Y3 | 170845 | 11 | 423 | 427 | 124 | 130 |
| Comparative Example 2-17 | C40 | W1 | X2 | Y3 | 166600 | 13 | 542 | 550 | 108 | 108 |
| Comparative Example 2-18 | C43 | W1 | X2 | Y3 | 168389 | 11 | 347 | 353 | 135 | 119 |
| Comparative Example 2-19 | C1 | W9 | X2 | Y3 | - | - | - | - | - | - |

As shown in Tables 14 to 16, in Inventive Examples 2-1 to 2-61 of the invention, the surface densities of the Mg-Si-based crystallized product having a circle-equivalent diameter of 0.1 to 5.0 µm and a circle-equivalent diameter of more than 5.0 µm and 10.0 µm or less in the sacrificial anode material layer were in the defined ranges, and the evaluation results of the SWAAT test and the circulation cycle test were good. On the other hand, good evaluation results were not obtained in Comparative Examples 2-1 to 2-19 as shown in Table 17. Further, in Inventive Examples 2-49, 52, 53 and 57, respective heat treatment step after cooling does not satisfy predetermined conditions, then sacrificial anticorrosive ability based on a precipitation effect of the Mg-Si-based precipitated product is inferior compared with the examples satisfying the conditions.

In Comparative Example 2-1, the Si content of the sacrificial anode material layer was little. As a result, the surface density of the Mg-Si-based crystallized product having a circle-equivalent diameter of 0.1 to 5.0 µm in the sacrificial anode material layer was little. Thus, the corrosion resistance decreased, and corrosion which was regarded as failure in the SWAAT test and the circulation cycle test was caused.

In Comparative Example 2-2, the Si content of the sacrificial anode material layer was much. As a result, the surface density of the Mg-Si-based crystallized product having a circle-equivalent diameter of 0.1 to 5. 0 µm in the sacrificial anode material layer was much. As a result, the corrosion resistance decreased, and corrosion which was regarded as failure in the SWAAT test and the circulation cycle test was caused. Also, in the cooling step following the hot rolling forming, which was the final heating step at 350°C or higher in the production steps, the cooling rate from 350°C to 100°C was slow. Therefore, precipitation of the Mg-Si-based precipitated product was promoted, and the volume density of the Mg-Si-based precipitated product having a length of 10 to 1000 nm after sensitization treatment was high.

In Comparative Example 2-3, the Si content of the sacrificial anode material layer was much. As a result, the surface density of the Mg-Si-based crystallized product having a circle-equivalent diameter of 0. 1 to 5.0 µm in the sacrificial anode material layer was much. Thus, the corrosion resistance decreased, and corrosion which was regarded as failure in the SWAAT test and the circulation cycle test was caused.

In Comparative Example 2-4, the Si content of the sacrificial anode material layer was much. As a result, the surface density of the Mg-Si-based crystallized product having a circle-equivalent diameter of 0. 1 to 5. 0 µm in the sacrificial anode material layer was much. As a result, the corrosion resistance decreased, and corrosion which was regarded as failure in the SWAAT test and the circulation cycle test was caused. Also, in the cooling step following the hot rolling forming, which was the final heating step at 350°C or higher in the production steps, the cooling rate from 350°C to 100°C was fast. Therefore, precipitation of the Mg-Si-based precipitated product was inhibited, and the volume density of the Mg-Si-based precipitated product having a length of 10 to 1000 nm after sensitization treatment was low.

In Comparative Example 2-5, the Si content of the sacrificial anode material layer was much. As a result, the surface density of the Mg-Si-based crystallized product having a circle-equivalent diameter of 0. 1 to 5.0 µm in the sacrificial anode material layer was much. As a result, the corrosion resistance decreased, and corrosion which was regarded as failure in the SWAAT test and the circulation cycle test was caused. Also, in the cooling step following the annealing, which was the final heating step at 350°C or higher in the production steps, the cooling rate from 350°C to 100°C was slow. Therefore, precipitation of the Mg-Si-based precipitated product was promoted, and the volume density of the Mg-Si-based precipitated product having a length of 10 to 1000 nm after sensitization treatment was high.

In Comparative Example 2-6, the Si content of the sacrificial anode material layer was much. As a result, the surface density of the Mg-Si-based crystallized product having a circle-equivalent diameter of 0. 1 to 5. 0 µm in the sacrificial anode material layer was much. As a result, the corrosion resistance decreased, and corrosion which was regarded as failure in the SWAAT test and the circulation cycle test was caused. Also, in the cooling step following the annealing, which was the final heating step at 350°C or higher in the production steps, the cooling rate from 350°C to 100°C was fast. Therefore, precipitation of the Mg-Si-based precipitated product was inhibited, and the volume density of the Mg-Si-based precipitated product having a length of 10 to 1000 nm after sensitization treatment was low.

In Comparative Example 2-7, the Si content of the sacrificial anode material layer was very much. As a result, the melting point of the sacrificial anode layer decreased, and the sacrificial anode material melted during the production of the material. Thus, the subsequent evaluation was impossible.

In Comparative Example 2-8, the Mg content of the sacrificial anode material layer was little. As a result, the surface density of the Mg-Si-based crystallized product having a circle-equivalent diameter of 0.1 to 5.0 µm in the sacrificial anode material layer was little. Thus, the corrosion resistance decreased, and corrosion which was regarded as failure in the SWAAT test and the circulation cycle test was caused.

In Comparative Example 2-9, the Mg content of the sacrificial anode material layer was much. As a result, a thick oxide film was formed on the surface of the sacrificial anode material during the production of the material, and the pressure bonding during cladding was poor. Thus, the subsequent evaluation was impossible.

In Comparative Example 2-10, the amount of Fe added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-11, the amount of Ni added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-12, the amount of Cu added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-13, the amount of Mn added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-14, the amount of Zn added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-15, the amount of Ti added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-16, the amount of Zr added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-17, the amount of Cr added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-18, the amount of V added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 2-19, the homogenization temperature of the slab for the sacrificial anode material layer was high. As a result, the melting point of the sacrificial anode layer decreased, and the sacrificial anode material melted during the production of the material. Thus, the subsequent evaluation was impossible.

### Inventive Examples 3-1 to 3-61 and Comparative Examples 3-1 to 3-24

Third Example of the heat exchanger in which the aluminum alloy cladding materials of the invention used as a tube material, is shown.

The aluminum alloy cladding materials were prepared as two-layer cladding plates in which the sacrificial anode material is provided on an outer surface of the core material, shown in Fig. 4. Alloys having the compositions shown in Tables 1 and 2 were used for the sacrificial anode material layers. The alloys were cast by direct chill casting process at the respective cooling rates of the slab surface shown in Table 6, subjected to facing and then to the homogenization shown in Table 6. Alloys having the compositions shown in Table 3 were used for the core materials. The alloys for the core materials were cast by direct chill casting process. The slabs for the core materials were subjected to homogenization at 520°C for six hours and then to facing, thereby reducing the thicknesses to predetermined values. The plate thicknesses of the slabs for the sacrificial anode material layers and the thicknesses of the slabs for the core materials after facing were adjusted in such a manner that the cladding ratio of the sacrificial anode material layers became 10%. Next, combinations are produced so that the respective slabs for the sacrificial anode material layers are piled on one surface of the respective slabs for the core materials as shown in Tables 4 and 5. When SWAAT was conducted for evaluating the corrosion resistance, the sacrificial anode material 2 was provided on the outer surface as shown in Fig. 4, and the corrosion resistance of the outer surface was evaluated. When a circulation cycle test was conducted, the sacrificial anode material was provided on the inner surface unlike the structure shown in Fig. 4, and the corrosion resistance of the inner surface was evaluated. In this regard, C50 and C51 shown in Table 5 were three-layer cladding materials having the sacrificial anode material clad also on the opposite surface to the surface to be evaluated. Also in this case, the corrosion resistance of the outer surface was evaluated in the SWAAT test, and the corrosion resistance of the inner surface was evaluated by the circulation cycle test. The cladding ratio on the opposite surface to the surface to be evaluated in Tables 4 and 5 was also 10%.

The layered materials were heated to 520°C before the hot rolling step and immediately hot rolled into two-layer and three-layer clad plates having a thickness of 3.5 mm. The clad plates obtained were cooled at the described rates in X1 to 5 and 11 in Table 7 and a rate of 10 °C/minute in X6 to 10. Moreover, the clad plates were cold rolled to a thickness of 0.30 mm. Next, annealing at 500°C for two hours was conducted in X6 to 10 in Table 7. Then, the clad plates were cooled at the respective rates described in Table 7. Moreover, the clad plates were cold rolled to a total thickness of 0.20 mm. As shown in Table 7, the final heating step at 350°C or higher in the production steps was the hot rolling step in X1 to 5 and 11 and was the annealing step at 500°C for two hours in X6 to 10. Through the above steps, two-layer and three-layer cladding plates having a total thickness of 0.20 mm and a cladding ratio of the sacrificial anode material layer of 10% per a surface were produced.

The two-layer and three-layer clad plate samples were formed into tube materials having a flat section as shown in Fig. 4, and the edges were butt-joined electrically. In each example, 10 such flat tube materials were produced. Then, as shown in Fig. 5, fin materials 5 were provided on the outer surfaces of the flat tube materials 4, and header plates 8 were provided at both ends of the flat tube materials 4. As the fin materials, a three-layer cladding material obtained by cladding both surfaces of the JIS 3003 alloy with the JIS 4343 alloy at a cladding ratio of 10% per surface and rolling the alloys to a thickness of 0.06 mm was used. After coating the test pieces with a KF-AlF-based flux (KAlF₄ or the like) powder or after drying without coating the flux, the test pieces were subjected to brazing heating at 600°C for three minutes in a nitrogen atmosphere or in vacuum (1×10⁻³ Pa) and cooled to room temperature, and simulant samples of the heat exchanger 9 having nine layers of the flat tubes 4 were produced. The final heating step at 350°C or higher in the production steps of the heat exchangers was the brazing heating step. The cooling rates from 350°C to 100°C after brazing were as described in Table 9 according to the respective standards.

**[Table 9]**

| No. | Conditions of brazing-corresponding heating | | | | |
|---|---|---|---|---|---|
| | Flux | Atmosphere | Temperature (°C) | Period (min) | Cooling rate (°C/min) |
| Z1 | with | nitrogen | 570 | 3 | 100 |
| Z2 | with | nitrogen | 590 | 3 | 100 |
| Z3 | with | nitrogen | 600 | 3 | 100 |
| Z4 | with | nitrogen | 610 | 3 | 100 |
| Z5 | with | nitrogen | 630 | 3 | 100 |
| Z6 | with | nitrogen | 600 | 0.5 | 100 |
| Z7 | with | nitrogen | 600 | 2 | 100 |
| Z8 | with | nitrogen | 600 | 10 | 100 |
| Z9 | with | nitrogen | 600 | 30 | 100 |
| Z10 | with | nitrogen | 600 | 3 | 0.3 |
| Z11 | with | nitrogen | 600 | 3 | 1 |
| Z12 | with | nitrogen | 600 | 3 | 300 |
| Z13 | with | nitrogen | 600 | 3 | 500 |
| Z14 | with | nitrogen | 600 | 3 | 1000 |
| Z15 | without | vacuum | 600 | 3 | 100 |
| Z16 | without | nitrogen | 600 | 3 | 100 |

With respect to the examples produced in the above manner, the distributions of the Mg-Si-based crystallized product/precipitated product and the corrosion resistance of the samples were evaluated in the same manner as in the First Example. In addition, the following item (e) was evaluated.

### (e) Mg and Si Concentrations in Sacrificial Anode Material Layer Surface and Depth of Range in which Both Mg and Si were Present from Sacrificial Anode Material Layer Surface after Brazing heating

The cladding plate samples before brazing heating were subjected to heat treatment at a temperature of 600°C for three minutes in a nitrogen atmosphere as brazing-corresponding heating. With respect to the samples which had been heat-treated in this manner, the Mg and Si concentrations in the sacrificial anode material layer surfaces and the depths of the ranges in which both Mg and Si were present from the sacrificial anode material layer surfaces were measured by line analysis by EPMA of the cross sections of the samples in the plate thickness direction.

The results of the evaluation items (a) to (e) are shown in Tables 18 to 21.

**[Table 18]**

| | Structure of material | Heat treatment of slab | Cooling during production | Brazing | Heat treatment after brazing | Surface density of Mg-Si-based crystallized product having circle-equival ent diameter of 0.1-5.0 µm | Surface density of Mg-Si-based crystallized product having circle-equiva lent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Surface Si concentration | Surface Mg concentration | Depth of presence of Si | Depth of presence of Mg | Corrosion depth after SWAAT | Corrosion depth by circulation cycle test |
|---|---|---|---|---|---|---|---|---|---|---|---|---|---|---|---|
| | | | | | | (pieces/ mm²) | (pieces/ mm²) | (pieces/ µm³) | (pieces/ µm³) | (mass%) | (mass%) | (µm) | (µm) | (µm) | (µm) |
| Inventive Example 3-1 | C1 | W3 | X2 | Z3 | none | 18363 | 0 | 0 | 12177 | 0.50 | 0.46 | 54 | 54 | 52 | 43 |
| Inventive Example 3-2 | C4 | W3 | X2 | Z3 | none | 107 | 0 | 0 | 47297 | 0.14 | 0.30 | 38 | 42 | 47 | 35 |
| Inventive Example 3-3 | C5 | W3 | X2 | Z3 | none | 4463 | 1 | 0 | 14155 | 0.53 | 0.44 | 54 | 52 | 43 | 35 |
| Inventive Example 3-4 | C6 | W3 | X2 | Z3 | none | 77782 | 0 | 0 | 8170 | 0.95 | 0.45 | 62 | 50 | 56 | 53 |
| Inventive Example 3-5 | C7 | W3 | X2 | Z3 | none | 97444 | 1 | 0 | 6497 | 0.94 | 0.45 | 63 | 49 | 64 | 57 |
| Inventive Example 3-6 | C13 | W3 | X2 | Z3 | none | 7454 | 0 | 0 | 9272 | 0.54 | 0.29 | 53 | 40 | 56 | 44 |
| Inventive Example 3-7 | C14 | W3 | X2 | Z3 | none | 2821 | 0 | 0 | 25059 | 0.33 | 0.32 | 48 | 45 | 45 | 39 |
| Inventive Example 3-8 | C15 | W3 | X2 | Z3 | none | 43567 | 5 | 0 | 5135 | 0.55 | 1.10 | 56 | 66 | 74 | 68 |
| Inventive Example 3-9 | C16 | W3 | X2 | Z3 | none | 11156 | 1 | 0 | 8205 | 0.52 | 0.85 | 54 | 59 | 60 | 53 |
| Inventive Example 3-10 | C18 | W3 | X2 | Z3 | none | 11078 | 0 | 0 | 19161 | 0.54 | 0.42 | 55 | 52 | 34 | 30 |
| Inventive Example 3-11 | C20 | W3 | X2 | Z3 | none | 20503 | 0 | 0 | 13967 | 0.53 | 0.43 | 56 | 51 | 39 | 34 |
| Inventive Example 3-12 | C21 | W3 | X2 | Z3 | none | 13869 | 0 | 0 | 10686 | 0.53 | 0.44 | 58 | 54 | 39 | 32 |
| Inventive Example 3-13 | C23 | W3 | X2 | Z3 | none | 23535 | 0 | 0 | 13341 | 0.51 | 0.43 | 55 | 54 | 39 | 33 |
| Inventive Example 3-14 | C24 | W3 | X2 | Z3 | none | 24356 | 0 | 0 | 15966 | 0.51 | 0.46 | 56 | 50 | 36 | 32 |
| Inventive Example 3-15 | C26 | W3 | X2 | Z3 | none | 11616 | 0 | 0 | 14045 | 0.58 | 0.44 | 54 | 52 | 36 | 31 |
| Inventive Example 3-16 | C27 | W3 | X2 | Z3 | none | 14288 | 0 | 0 | 6704 | 0.52 | 0.47 | 57 | 52 | 41 | 35 |

**[Table 19]**

| | Structure of material | Heat treatment of slab | Cooling during production | Brazing | Heat treatment after brazing | Surface density of Mg-Si-based crystallized product having circle-equival ent diameter of 0.1-5.0 µm | Surface density of Mg-Si-based crystallized product having circle-equiva lent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Surface Si concentration | Surface Mg concentration | Depth of presence of Si | Depth of presence of Mg | Corrosion depth after SWAAT | Corrosion depth by circulation cycle test |
|---|---|---|---|---|---|---|---|---|---|---|---|---|---|---|---|
| | | | | | | (pieces/ mm²) | (pieces/ mm²) | (pieces/ µm³) | (pieces/ µm³) | (mass%) | (mass%) | (µm) | (µm) | (µm) | (µm) |
| Inventive Example 3-17 | C29 | W3 | X2 | Z3 | none | 14534 | 0 | 0 | 12226 | 0.51 | 0.45 | 57 | 52 | 39 | 40 |
| Inventive Example 3-18 | C30 | W3 | X2 | Z3 | none | 15845 | 0 | 0 | 6322 | 0.51 | 0.47 | 57 | 52 | 34 | 39 |
| Inventive Example 3-19 | C32 | W3 | X2 | Z3 | none | 16352 | 0 | 0 | 7453 | 0.52 | 0.48 | 57 | 54 | 38 | 32 |
| Inventive Example 3-20 | C33 | W3 | X2 | Z3 | none | 4337 | 0 | 0 | 7845 | 0.51 | 0.46 | 58 | 50 | 41 | 33 |
| Inventive Example 3-21 | C35 | W3 | X2 | Z3 | none | 17689 | 1 | 0 | 9558 | 0.50 | 0.43 | 57 | 51 | 42 | 40 |
| Inventive Example 3-22 | C36 | W3 | X2 | Z3 | none | 23603 | 1 | 0 | 6792 | 0.56 | 0.46 | 57 | 51 | 44 | 38 |
| Inventive Example 3-23 | C38 | W3 | X2 | Z3 | none | 20102 | 0 | 0 | 13749 | 0.50 | 0.44 | 53 | 53 | 37 | 32 |
| Inventive Example 3-24 | C39 | W3 | X2 | Z3 | none | 41453 | 0 | 0 | 5794 | 0.52 | 0.50 | 57 | 53 | 38 | 33 |
| Inventive Example 3-25 | C41 | W3 | X2 | Z3 | none | 13554 | 0 | 0 | 9013 | 0.52 | 0.44 | 55 | 50 | 39 | 33 |
| Inventive Example 3-26 | C42 | W3 | X2 | Z3 | none | 31152 | 1 | 0 | 6763 | 0.53 | 0.47 | 58 | 50 | 43 | 40 |
| Inventive Example 3-27 | C44 | W3 | X2 | Z3 | none | 5161 | 0 | 0 | 7606 | 0.53 | 0.49 | 56 | 54 | 58 | 45 |
| Inventive Example 3-28 | C45 | W3 | X2 | Z3 | none | 24968 | 0 | 0 | 11247 | 0.51 | 0.46 | 56 | 50 | 60 | 54 |
| Inventive Example 3-29 | C47 | W3 | X2 | Z3 | none | 7592 | 0 | 0 | 13986 | 0.52 | 0.47 | 55 | 50 | 54 | 46 |
| Inventive Example 3-30 | C48 | W3 | X2 | Z3 | none | 9256 | 1 | 0 | 8640 | 0.51 | 0.47 | 53 | 54 | 63 | 57 |
| Inventive Example 3-31 | C49 | W3 | X2 | Z3 | none | 22645 | 0 | 0 | 17228 | 0.49 | 0.47 | 54 | 52 | 46 | 41 |
| Inventive Example 3-32 | C50 | W3 | X2 | Z3 | none | 8227 | 0 | 0 | 14741 | 0.49 | 0.48 | 55 | 51 | 50 | 40 |
| Inventive Example 3-33 | C51 | W3 | X2 | Z3 | none | 9588 | 0 | 0 | 16960 | 0.54 | 0.47 | 58 | 50 | 48 | 41 |

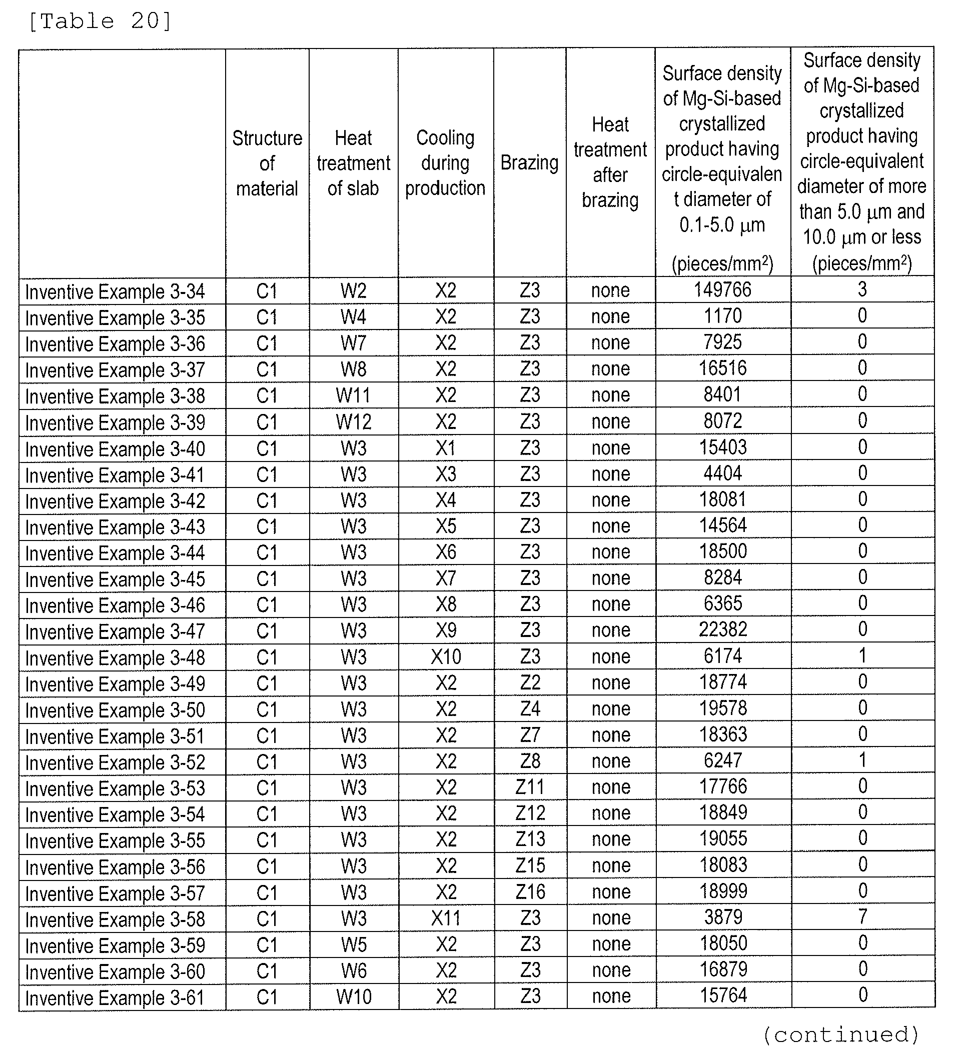

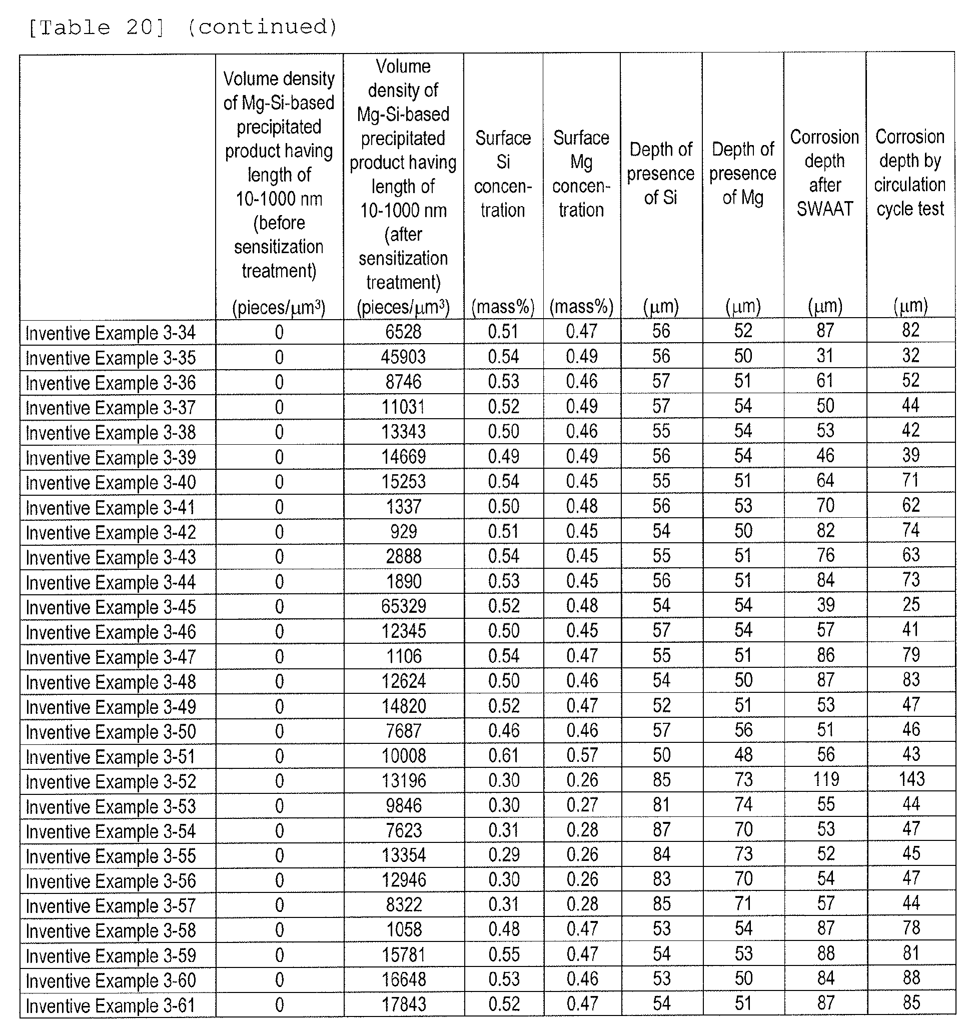

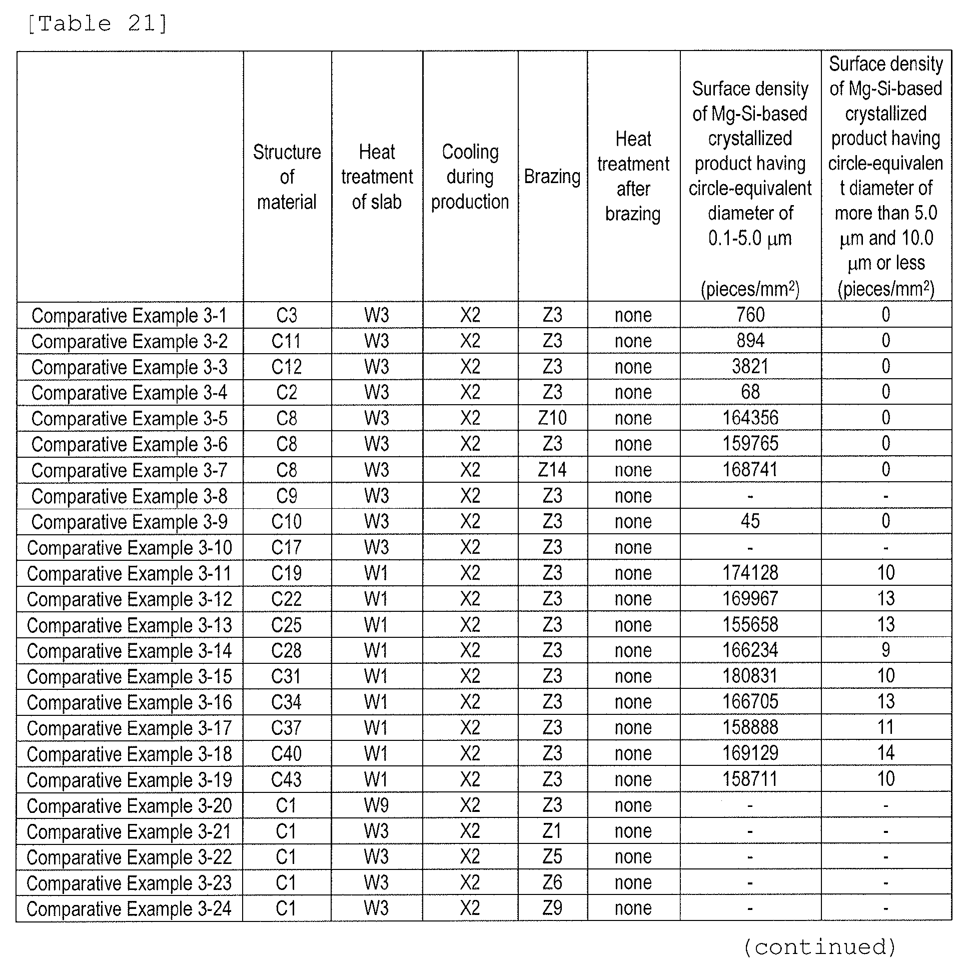

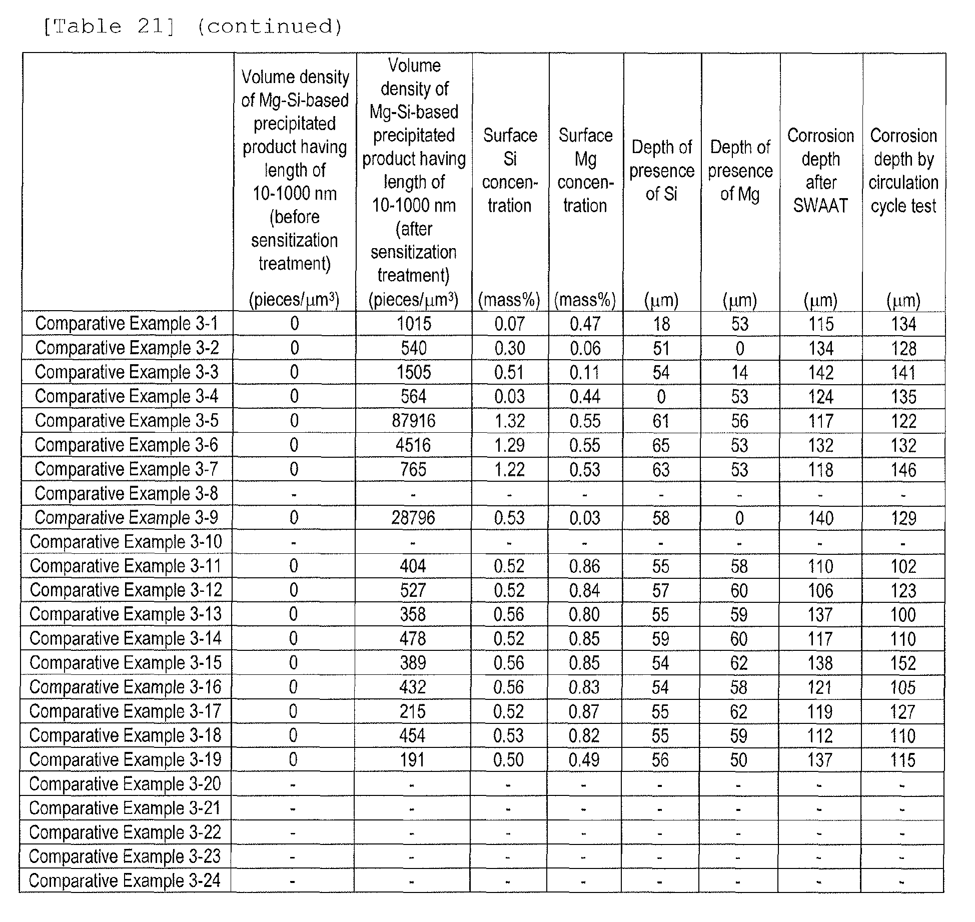

As shown in Tables 18 to 20, in Inventive Examples 3-1 to 3-61 of the invention, the surface densities of the Mg-Si-based crystallized product having a circle-equivalent diameter of 0.1 to 5.0 µm and a circle-equivalent diameter of more than 5.0 µm and 10.0 µm or less in the sacrificial anode material layer were in the defined ranges, and the evaluation results of the SWAAT test and the circulation cycle test were good. On the other hand, good evaluation results were not obtained in Comparative Examples 3-1 to 3-24 as shown in Table 21.

In Comparative Example 3-1, the range in which both Mg and Si were present was less than 30 µm from the sacrificial anode material layer surface after brazing-corresponding heating. Thus, the thickness of the sacrificial anticorrosive layer formed by the Mg-Si-based precipitates was not sufficient. As a result, the corrosion resistance decreased, and corrosion which was regarded as failure in the SWAAT test and the circulation cycle test was caused.

In Comparative Example 3-2, after brazing-corresponding heating, the Mg concentration in the sacrificial anode material layer surface is less than 0.10 mass% and the range in which both Mg and Si were present was less than 30 µm from the sacrificial anode material layer surface. Thus, the thickness of the sacrificial anticorrosive layer formed by the Mg-Si-based precipitates was not sufficient. As a result, the corrosion resistance decreased, and corrosion which was regarded as failure in the SWAAT test and the circulation cycle test was caused. Further, precipitation of the Mg-Si-based precipitated product was inhibited, and the volume density of the Mg-Si-based precipitated product having a length of 10 to 1000 nm after sensitization treatment was low.

In Comparative Example 3-3, the range in which both Mg and Si were present was less than 30 µm from the sacrificial anode material layer surface after brazing-corresponding heating. Thus, the thickness of the sacrificial anticorrosive layer formed by the Mg-Si-based precipitates was not sufficient. As a result, the corrosion resistance decreased, and corrosion which was regarded as failure in the SWAAT test and the circulation cycle test was caused.

In Comparative Example 3-4, the Si content of the sacrificial anode material layer was little. As a result, the surface density of the Mg-Si-based crystallized product having a circle-equivalent diameter of 0. 1 to 5.0 µm in the sacrificial anode material layer was little. Further, after brazing-corresponding heating, the Si concentration in the sacrificial anode material layer surface is less than 0.05 mass% and the range in which both Mg and Si were present was less than 30 µm from the sacrificial anode material layer surface. Thus, the thickness of the sacrificial anticorrosive layer formed by the Mg-Si-based precipitates was not sufficient. As above result, the corrosion resistance decreased, and corrosion which was regarded as failure in the SWAAT test and the circulation cycle test was caused. Further, precipitation of the Mg-Si-based precipitated product was inhibited, and the volume density of the Mg-Si-based precipitated product having a length of 10 to 1000 nm after sensitization treatment was also low.

In Comparative Example 3-5, the Si content of the sacrificial anode material layer was much. Therefore, the surface density of the Mg-Si-based crystallized product having a circle-equivalent diameter of 0.1 to 5. 0 µm in the sacrificial anode material layer was much. Further, in the cooling step following the brazing heating step, the cooling rate from 350°C to 100°C was slow. As a foregoing result, corrosion which was regarded as failure in the SWAAT test and the circulation cycle test was caused. Further, precipitation of the Mg-Si-based precipitated product was promoted, and the volume density of the Mg-Si-based precipitated product having a length of 10 to 1000 nm after sensitization treatment was high.

In Comparative Example 3-6, the Si content of the sacrificial anode material layer was much. Therefore, the surface density of the Mg-Si-based crystallized product having a circle-equivalent diameter of 0.1 to 5. 0 µm in the sacrificial anode material layer was much. As a result, the corrosion resistance decreased, and corrosion which was regarded as failure in the SWAAT test and the circulation cycle test was caused.

In Comparative Example 3-7, the Si content of the sacrificial anode material layer was much. Therefore, the surface density of the Mg-Si-based crystallized product having a circle-equivalent diameter of 0.1 to 5. 0 µm in the sacrificial anode material layer was much. Further, in the cooling step following the brazing heating step, the cooling rate from 350°C to 100°C was fast. As a foregoing result, corrosion which was regarded as failure in the SWAAT test and the circulation cycle test was caused. Further, precipitation of the Mg-Si-based precipitated product was inhibited, and the volume density of the Mg-Si-based precipitated product having a length of 10 to 1000 nm after sensitization treatment was low.

In Comparative Example 3-8, the Si content of the sacrificial anode material layer was very much. As a result, the melting point of the sacrificial anode layer decreased, and the sacrificial anode material melted during the production of the material. Thus, the subsequent evaluation was impossible.

In Comparative Example 3-9, the Mg content of the sacrificial anode material layer was little. As a result, the surface density of the Mg-Si-based crystallized product having a circle-equivalent diameter of 0.1 to 5. 0 µm in the sacrificial anode material layer was little. Further, after brazing-corresponding heating, the Mg concentration in the sacrificial anode material layer surface is less than 0.10 mass% and the range in which both Mg and Si were present was less than 30 µm from the sacrificial anode material layer surface. Thus, the thickness of the sacrificial anticorrosive layer formed by the Mg-Si-based precipitates was not sufficient. As a foregoing result, the corrosion resistance decreased, and corrosion which was regarded as failure in the SWAAT test and the circulation cycle test was caused.

In Comparative Example 3-10, the Mg content of the sacrificial anode material layer was much. As a result, a thick oxide film was formed on the surface of the sacrificial anode material during the production of the material, and the pressure bonding during cladding was poor. Thus, the subsequent evaluation was impossible.

In Comparative Example 3-11, the amount of Fe added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-12, the amount of Ni added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-13, the amount of Cu added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-14, the amount of Mn added to the sacrificial anode material layer was much, and the cooling rate of the slab surface of the slab for the sacrificial anode material layer was slow. As a result, the surface densities of the Mg-Si-based crystallized product having a circle-equivalent diameter of 0. 1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-15, the amount of Zn added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-16, the amount of Ti added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-17, the amount of Zr added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-18, the amount of Cr added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-19, the amount of V added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 3-20, the homogenization temperature of the slab for the sacrificial anode material layer is high. As a result, the sacrificial anode material melted during the production of the material. Thus, the subsequent evaluation was impossible.

In Comparative Example 3-21, the temperature of brazing heating was low. As a result, sufficient molten brazing filler was not generated, and brazing failure was caused. Thus, the subsequent evaluation was impossible.

In Comparative Example 3-22, the temperature of brazing heating was high. As a result, the sacrificial anode material melted during brazing, and the subsequent evaluation was impossible.

In Comparative Example 3-23, the brazing heating time was short. As a result, sufficient molten brazing filler was not generated, and brazing failure was caused. Thus, the subsequent evaluation was impossible.

In Comparative Example 3-24, the brazing heating time is long. As a result, the sacrificial anode material melted during brazing, and the subsequent evaluation was impossible.

### Inventive Examples 4-1 to 4-70 and Comparative Examples 4-1 to 4-24

Fourth Example of the heat exchanger in which the aluminum alloy cladding materials of the invention used as a header material, is shown.

The aluminum alloy cladding materials were prepared as two-layer clad extruded tubes shown in Fig. 1. Alloys having the compositions shown in Tables 1 and 2 were used for the sacrificial anode material layers 2. The alloys were cast by direct chill casting process at the respective cooling rates of the slab surface shown in Table 6, subjected to facing and then to the homogenization shown in Table 6. Alloys having the compositions shown in Table 3 were used for the core materials 1. The alloys for the core materials were cast by direct chill casting process. The slabs for the core materials were subjected to homogenization at 520°C for six hours and then to facing, thereby reducing the thicknesses to predetermined values. The plate thicknesses of the slabs for the sacrificial anode material layers and the thicknesses of the slabs for the core materials after facing were adjusted in such a manner that the cladding ratio of the sacrificial anode material layers became 3%. Next, billets were produced by placing the slabs for the sacrificial anode material layers on one surface of the respective slabs for the core materials with the respective combinations shown in Tables 4 and 5. When SWAAT was conducted for evaluating the corrosion resistance, the sacrificial anode material was provided on the outer surface as shown in Fig. 1, and the corrosion resistance of the outer surface was evaluated. When a circulation cycle test was conducted, the sacrificial anode material was provided on the inner surface unlike the structure shown in Fig. 1, and the corrosion resistance of the inner surface was evaluated. In this regard, C50 and C51 shown in Table 5 were three-layer cladding materials having the sacrificial anode material clad also on the opposite surface to the surface to be evaluated. Also in this case, the corrosion resistance of the outer surface was evaluated in the SWAAT test, and the corrosion resistance of the inner surface was evaluated by the circulation cycle test. The opposite surface to the surface to be evaluated in Tables 4 and 5 was not any corrosion resistance evaluated surface, and cladding ration of this surface was 3%.

The billets were heated to 500°C before the extrusion step and immediately hot extruded into clad extruded tubes having an outer diameter of 47 mm and a thickness of 3.5 mm using an indirect extruder. The clad extruded tubes obtained were cooled at the described rates in X1 to 5 and 11 in Table 7 and at a rate of 10 °C/minute in X6 to 10. Moreover, the clad extruded tubes cooled were subjected to a drawing process using a continuous block drawing machine. At the end, annealing at 500°C for two hours was conducted in X6 to 10. Then, the clad extruded tubes were cooled at the respective rates described in Table 7. As shown in Table 7, the final heating step at 350°C or higher in the production steps was the hot extrusion step in X1 to 5 and 11 and was the annealing step at 500°C for two hours in X6 to 10. Through the above steps, two-layer and three-layer cladding extruded tube samples having an outer diameter of 40 mm, a thickness of 0.8 mm and a cladding ratio of the sacrificial anode material layer of 10% per a surface were produced.

Moreover, the two-layer and three-layer clad tube samples were cut in a length of 300 mm, and header samples having 10 holes for inserting tubes were produced from the clad tube samples by burring process. The tubes were produced by forming brazing sheets of JIS4045/JIS3003/JIS4045 having a thickness of 0.2 mm into tube materials 4 having a flat section as shown in Fig. 5. The width of the overlapped both edges 10C shown in Fig. 1 was 3 mm, and the length of each tube material 4 was 20 cm. In each example, 10 such flat tube materials 4 were produced. Then, as shown in Fig. 5, fin materials 5 were provided on the outer surfaces of the flat tube materials 4, and the headers 8 were provided at both ends of the flat tube materials 4. As the fin materials, a three-layer cladding material obtained by cladding both surfaces of the JIS 3003 alloy with the JIS 4343 alloy at a cladding ratio of 10% per surface and rolling the alloys to a thickness of 0.06 mm was used. After coating the test pieces with a KF-AlF-based flux (KAlF₄ or the like) powder or after drying without coating the flux, the test pieces were subjected to brazing heating at 600°C for three minutes in a nitrogen atmosphere or in vacuum (1×10⁻³ Pa) and cooled to room temperature, and simulant heat exchangers 9 having nine layers of the flat tubes 4 were produced. The final heating step at 350°C or higher in the production steps of the heat exchangers was the brazing heating step. The cooling rates from 350°C to 100°C after brazing were as described in Table 9 according to the respective standards. At the end, the heat treatment shown in Table 8 was conducted.

With respect to the examples produced in the above manner, the distributions of the Mg-Si-based crystallized product/precipitated product and the corrosion resistance of the samples were evaluated in the same manner as in the Third Example. The results of the evaluation items (a) to (e) are shown in Tables 22 to 26.

**[Table 22]**

| | Structure of material | Heat treatment of slab | Cooling during production | Brazing | Heat treatment after brazing | Surface density of Mg-Si-based crystallized product having circle-equiva lent diameter of 0.1-5.0 µm | Surface density of Mg-Si-based crystallized product having circle-equival ent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Surface Si concentration | Surface Mg concentration | Depth of presence of Si | Depth of presence of Mg | Corrosion depth after SWAAT | Corrosion depth by circulation cycle test |
|---|---|---|---|---|---|---|---|---|---|---|---|---|---|---|---|
| | | | | | | (pieces/ mm²) | (pieces/ mm²) | (pieces/ µm³) | (pieces/ µm³) | (mass%) | (mass%) | (µm) | (µm) | (µm) | (µm) |
| Inventive Example 4-1 | C1 | W3 | X2 | Z3 | Y3 | 18252 | 0 | 12037 | 11856 | 0.50 | 0.46 | 55 | 52 | 41 | 33 |
| Inventive Example 4-2 | C4 | W3 | X2 | Z3 | Y3 | 102 | 0 | 94196 | 86095 | 0.13 | 0.28 | 36 | 44 | 38 | 29 |
| Inventive Example 4-3 | C5 | W3 | X2 | Z3 | Y3 | 4338 | 1 | 14193 | 8155 | 0.50 | 0.48 | 55 | 50 | 30 | 27 |
| Inventive Example 4-4 | C6 | W3 | X2 | Z3 | Y3 | 77677 | 0 | 9409 | 9087 | 0.89 | 0.44 | 65 | 50 | 42 | 37 |
| Inventive Example 4-5 | C7 | W3 | X2 | Z3 | Y3 | 93072 | 1 | 6713 | 7337 | 0.94 | 0.45 | 59 | 53 | 47 | 46 |
| Inventive Example 4-6 | C13 | W3 | X2 | Z3 | Y3 | 7788 | 0 | 7819 | 9479 | 0.55 | 0.28 | 54 | 40 | 43 | 33 |
| Inventive Example 4-7 | C14 | W3 | X2 | Z3 | Y3 | 2853 | 0 | 40425 | 34265 | 0.30 | 0.31 | 50 | 48 | 32 | 30 |
| Inventive Example 4-8 | C15 | W3 | X2 | Z3 | Y3 | 43009 | 5 | 5237 | 3597 | 0.53 | 1.15 | 56 | 62 | 63 | 48 |
| Inventive Example 4-9 | C16 | W3 | X2 | Z3 | Y3 | 10217 | 1 | 12139 | 10708 | 0.49 | 0.81 | 54 | 60 | 44 | 43 |
| Inventive Example 4-10 | C18 | W3 | X2 | Z3 | Y3 | 11221 | 0 | 14044 | 20471 | 0.55 | 0.42 | 55 | 51 | 26 | 24 |
| Inventive Example 4-11 | C20 | W3 | X2 | Z3 | Y3 | 19661 | 0 | 10719 | 12676 | 0.55 | 0.44 | 55 | 55 | 29 | 25 |
| Inventive Example 4-12 | C21 | W3 | X2 | Z3 | Y3 | 13926 | 0 | 8684 | 10604 | 0.52 | 0.45 | 55 | 54 | 31 | 24 |
| Inventive Example 4-13 | C23 | W3 | X2 | Z3 | Y3 | 23510 | 0 | 12664 | 8197 | 0.49 | 0.46 | 58 | 54 | 29 | 25 |
| Inventive Example 4-14 | C24 | W3 | X2 | Z3 | Y3 | 22686 | 0 | 11942 | 18220 | 0.52 | 0.45 | 56 | 49 | 27 | 23 |
| Inventive Example 4-15 | C26 | W3 | X2 | Z3 | Y3 | 12713 | 0 | 9827 | 13230 | 0.57 | 0.45 | 57 | 50 | 29 | 24 |
| Inventive Example 4-16 | C27 | W3 | X2 | Z3 | Y3 | 13699 | 0 | 8602 | 6491 | 0.52 | 0.47 | 54 | 51 | 29 | 27 |

**[Table 23]**

| | Structure of material | Heat treatment of slab | Cooling during production | Brazing | Heat treatment after brazing | Surface density of Mg-Si-based crystallized product having circle-equiva lent diameter of 0.1-5.0 µm | Surface density of Mg-Si-based crystallized product having circle-equival ent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Surface Si concentration | Surface Mg concentration | Depth of presence of Si | Depth of presence of Mg | Corrosion depth after SWAAT | Corrosion depth by circulation cycle test |
|---|---|---|---|---|---|---|---|---|---|---|---|---|---|---|---|
| | | | | | | (pieces/ mm²) | (pieces/ mm²) | (pieces/ µm³) | (pieces/ µm³) | (mass%) | (mass%) | (µm) | (µm) | (µm) | (µm) |
| Inventive Example 4-17 | C29 | W3 | X2 | Z3 | Y3 | 16540 | 0 | 9665 | 12225 | 0.53 | 0.46 | 54 | 50 | 27 | 28 |
| Inventive Example 4-18 | C30 | W3 | X2 | Z3 | Y3 | 14500 | 0 | 12251 | 12916 | 0.51 | 0.44 | 57 | 51 | 29 | 27 |
| Inventive Example 4-19 | C32 | W3 | X2 | Z3 | Y3 | 16584 | 0 | 13586 | 11254 | 0.49 | 0.46 | 58 | 50 | 29 | 25 |
| Inventive Example 4-20 | C33 | W3 | X2 | Z3 | Y3 | 4198 | 0 | 8670 | 15855 | 0.52 | 0.42 | 56 | 50 | 27 | 24 |
| Inventive Example 4-21 | C35 | W3 | X2 | Z3 | Y3 | 17917 | 1 | 7851 | 8331 | 0.54 | 0.44 | 54 | 50 | 35 | 29 |
| Inventive Example 4-22 | C36 | W3 | X2 | Z3 | Y3 | 24310 | 1 | 6810 | 9239 | 0.56 | 0.43 | 58 | 52 | 32 | 30 |
| Inventive Example 4-23 | C38 | W3 | X2 | Z3 | Y3 | 21026 | 0 | 12152 | 8843 | 0.49 | 0.48 | 58 | 50 | 29 | 25 |
| Inventive Example 4-24 | C39 | W3 | X2 | Z3 | Y3 | 39039 | 0 | 8831 | 4928 | 0.51 | 0.51 | 56 | 53 | 27 | 25 |
| Inventive Example 4-25 | C41 | W3 | X2 | Z3 | Y3 | 13676 | 0 | 12757 | 12696 | 0.50 | 0.42 | 57 | 51 | 29 | 27 |
| Inventive Example 4-26 | C42 | W3 | X2 | Z3 | Y3 | 29459 | 1 | 10293 | 6681 | 0.52 | 0.47 | 55 | 52 | 34 | 29 |
| Inventive Example 4-27 | C44 | W3 | X2 | Z3 | Y3 | 4844 | 0 | 14011 | 8921 | 0.50 | 0.49 | 57 | 51 | 42 | 32 |
| Inventive Example 4-28 | C45 | W3 | X2 | Z3 | Y3 | 26044 | 0 | 11464 | 9795 | 0.52 | 0.48 | 55 | 54 | 46 | 39 |
| Inventive Example 4-29 | C47 | W3 | X2 | Z3 | Y3 | 7463 | 0 | 8915 | 11053 | 0.54 | 0.48 | 58 | 51 | 37 | 32 |
| Inventive Example 4-30 | C48 | W3 | X2 | Z3 | Y3 | 9122 | 1 | 9315 | 6265 | 0.51 | 0.49 | 58 | 52 | 47 | 44 |
| Inventive Example 4-31 | C49 | W3 | X2 | Z3 | Y3 | 23656 | 0 | 19017 | 13606 | 0.50 | 0.48 | 55 | 54 | 33 | 28 |
| Inventive Example 4-32 | C50 | W3 | X2 | Z3 | Y3 | 8046 | 0 | 11358 | 20621 | 0.54 | 0.45 | 55 | 54 | 38 | 32 |
| Inventive Example 4-33 | C51 | W3 | X2 | Z3 | Y3 | 10668 | 0 | 22595 | 23170 | 0.49 | 0.45 | 54 | 50 | 37 | 29 |

**[Table 24]**

| | Structure of material | Heat treatment of slab | Cooling during production | Brazing | Heat treatment after brazing | Surface density of Mg-Si-based crystallized product having circle-equiva lent diameter of 0.1-5.0 µm | Surface density of Mg-Si-based crystallized product having circle-equival ent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Surface Si concentration | Surface Mg concentration | Depth of presence of Si | Depth of presence of Mg | Corrosion depth after SWAAT | Corrosion depth by circulation cycle test |
|---|---|---|---|---|---|---|---|---|---|---|---|---|---|---|---|
| | | | | | | (pieces/ mm²) | (pieces/ mm²) | (pieces/ µm³) | (pieces/ µm³) | (mass%) | (mass%) | (µm) | (µm) | (µm) | (µm) |
| Inventive Example 4-34 | C1 | W2 | X2 | Z3 | Y3 | 149637 | 3 | 5847 | 6370 | 0.52 | 0.47 | 59 | 51 | 66 | 61 |
| Inventive Example 4-35 | C1 | W4 | X2 | Z3 | Y3 | 1067 | 0 | 60214 | 86174 | 0.53 | 0.45 | 58 | 53 | 24 | 24 |
| Inventive Example 4-36 | C1 | W7 | X2 | Z3 | Y3 | 8256 | 0 | 6931 | 6827 | 0.52 | 0.47 | 55 | 50 | 45 | 40 |
| Inventive Example 4-37 | C1 | W8 | X2 | Z3 | Y3 | 15469 | 0 | 15584 | 12229 | 0.51 | 0.48 | 58 | 54 | 35 | 32 |
| Inventive Example 4-38 | C1 | W11 | X2 | Z3 | Y3 | 9267 | 0 | 8835 | 14143 | 0.53 | 0.46 | 57 | 52 | 42 | 32 |
| Inventive Example 4-39 | C1 | W12 | X2 | Z3 | Y3 | 7586 | 0 | 19043 | 16713 | 0.52 | 0.49 | 55 | 50 | 34 | 29 |
| Inventive Example 4-40 | C1 | W3 | X10 | Z3 | Y3 | 15988 | 0 | 0 | 15557 | 0.52 | 0.45 | 58 | 54 | 66 | 70 |
| Inventive Example 4-41 | C1 | W3 | X3 | Z3 | Y3 | 4138 | 0 | 1705 | 1571 | 0.51 | 0.47 | 56 | 51 | 59 | 45 |
| Inventive Example 4-42 | C1 | W3 | X4 | Z3 | Y3 | 17671 | 0 | 968 | 816 | 0.50 | 0.47 | 57 | 50 | 61 | 59 |
| Inventive Example 4-43 | C1 | W3 | X5 | Z3 | Y3 | 14987 | 0 | 0 | 2642 | 0.51 | 0.48 | 54 | 50 | 73 | 68 |
| Inventive Example 4-44 | C1 | W3 | X6 | Z3 | Y3 | 17287 | 0 | 1712 | 1166 | 0.51 | 0.49 | 58 | 50 | 61 | 61 |
| Inventive Example 4-45 | C1 | W3 | X7 | Z3 | Y3 | 8308 | 0 | 58442 | 73612 | 0.53 | 0.47 | 53 | 51 | 28 | 20 |
| Inventive Example 4-46 | C1 | W3 | X8 | Z3 | Y3 | 5899 | 0 | 7454 | 10903 | 0.54 | 0.47 | 57 | 50 | 44 | 32 |
| Inventive Example 4-47 | C1 | W3 | X9 | Z3 | Y3 | 21641 | 0 | 944 | 1540 | 0.53 | 0.45 | 55 | 50 | 66 | 56 |
| Inventive Example 4-48 | C1 | W3 | X10 | Z3 | Y3 | 6130 | 1 | 9788 | 9402 | 0.53 | 0.48 | 58 | 51 | 69 | 57 |
| Inventive Example 4-49 | C1 | W3 | X2 | Z2 | Y3 | 19229 | 0 | 7962 | 14040 | 0.57 | 0.48 | 55 | 48 | 37 | 33 |
| Inventive Example 4-50 | C1 | W3 | X2 | Z4 | Y3 | 18527 | 0 | 7711 | 10177 | 0.50 | 0.44 | 60 | 53 | 39 | 34 |

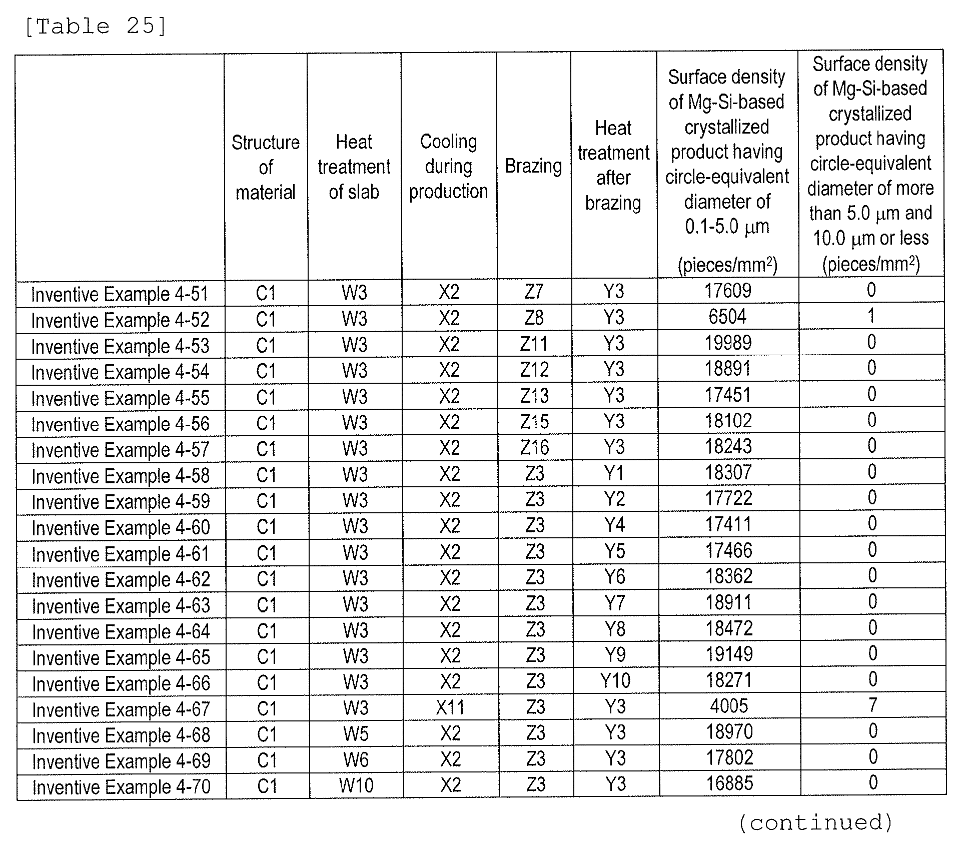

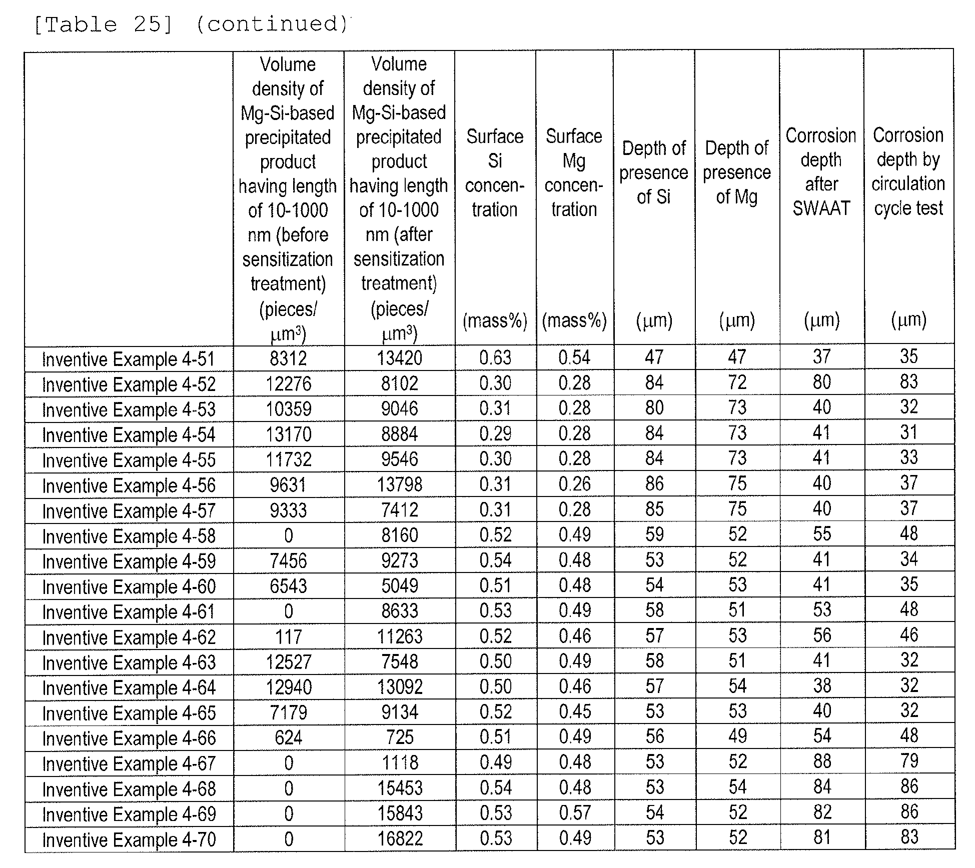

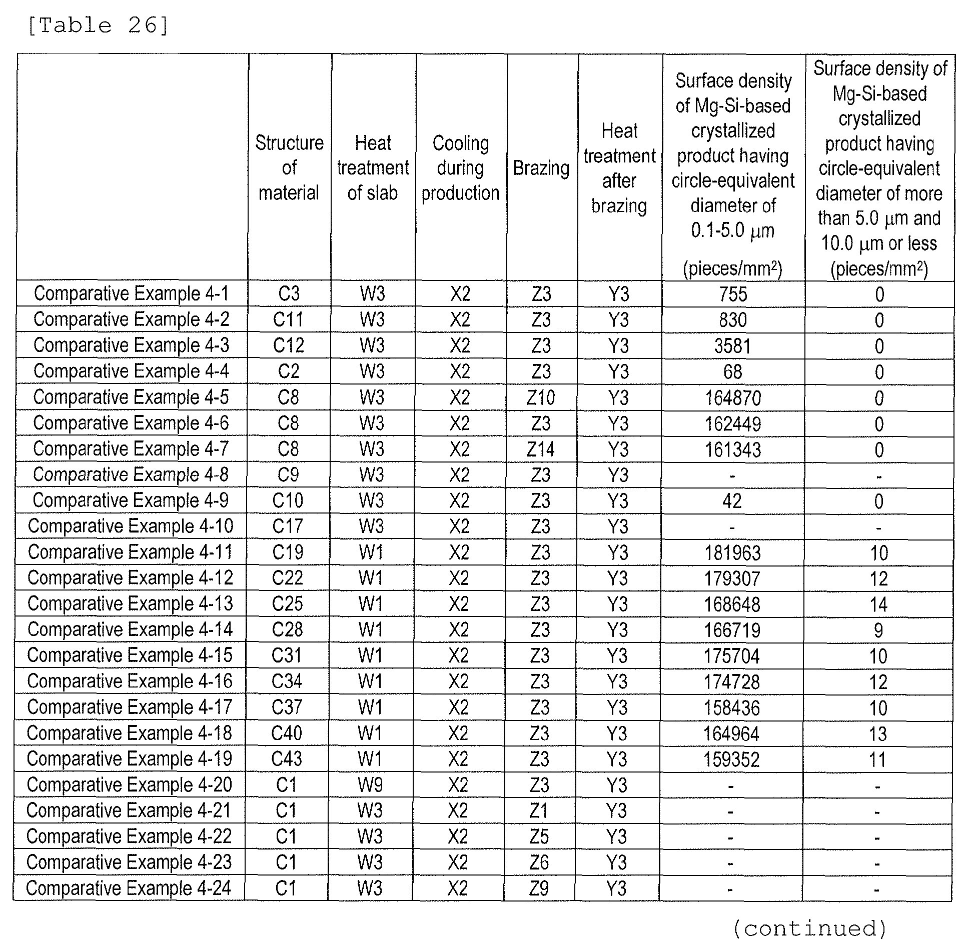

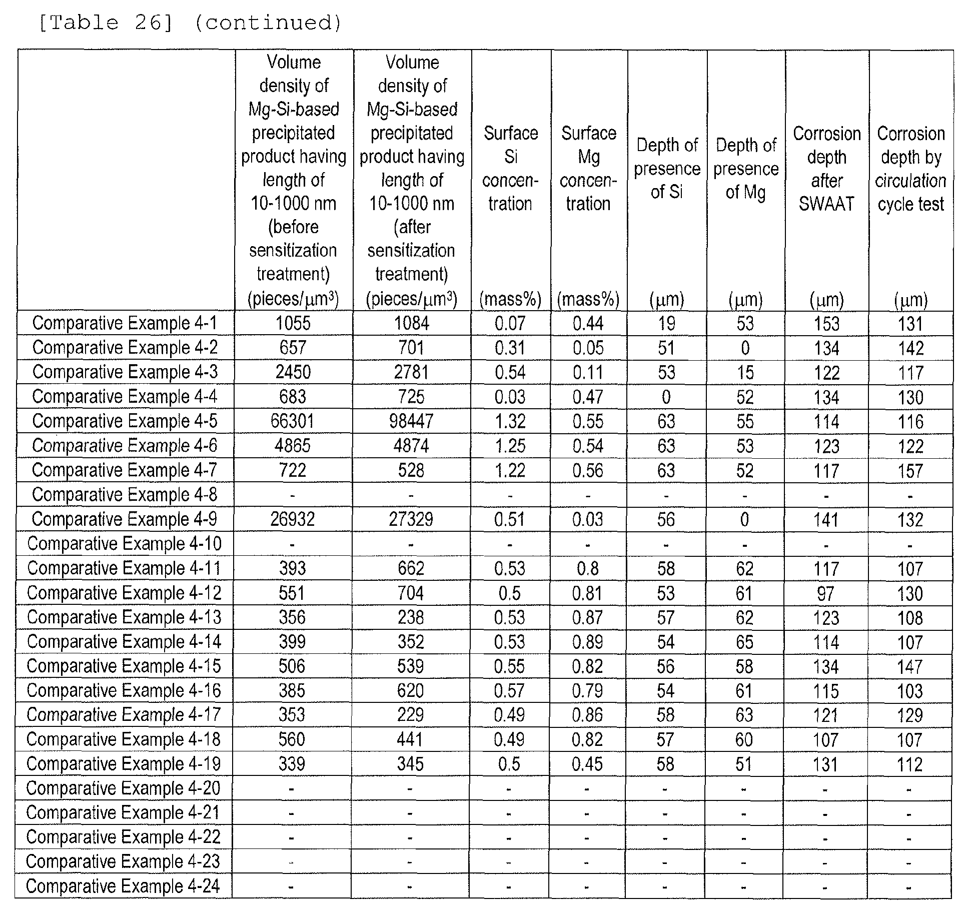

As shown in Tables 22 to 25, in Inventive Examples 4-1 to 4-70 of the invention, the surface densities of the Mg-Si-based crystallized product having a circle-equivalent diameter of 0.1 to 5.0 µm and a circle-equivalent diameter of more than 5.0 µm and 10.0 µm or less in the sacrificial anode material layer were in the defined ranges, and the evaluation results of the SWAAT test and the circulation cycle test were good. On the other hand, good evaluation results were not obtained in Comparative Examples 4-1 to 4-24 as shown in Table 26.

In Comparative Example 4-1, the range in which both Mg and Si were present was less than 30 µm from the sacrificial anode material layer surface. Thus, the thickness of the sacrificial anticorrosive layer formed by the Mg-Si-based precipitates was not sufficient. As a result, the corrosion resistance decreased, and corrosion which was regarded as failure in the SWAAT test and the circulation cycle test was caused.

In Comparative Example 4-2, after brazing-corresponding heating, the Mg concentration in the sacrificial anode material layer surface is less than 0.10 mass% and the range in which both Mg and Si were present was less than 30 µm from the sacrificial anode material layer surface. Thus, the thickness of the sacrificial anticorrosive layer formed by the Mg-Si-based precipitates was not sufficient. As a result, the corrosion resistance decreased, and corrosion which was regarded as failure in the SWAAT test and the circulation cycle test was caused. Further, precipitation of the Mg-Si-based precipitated product was inhibited, and the volume density of the Mg-Si-based precipitated product having a length of 10 to 1000 nm after sensitization treatment was low.

In Comparative Example 4-3, after brazing-corresponding heating, the range in which both Mg and Si were present was less than 30 µm from the sacrificial anode material layer surface. Thus, the thickness of the sacrificial anticorrosive layer formed by the Mg-Si-based precipitates was not sufficient. As a result, the corrosion resistance decreased, and corrosion which was regarded as failure in the SWAAT test and the circulation cycle test was caused.

In Comparative Example 3-4, the Si content of the sacrificial anode material layer was little. As a result, the surface density of the Mg-Si-based crystallized product having a circle-equivalent diameter of 0. 1 to 5.0 µm in the sacrificial anode material layer was little. Further, after brazing-corresponding heating, the Si concentration in the sacrificial anode material layer surface is less than 0.05 mass% and the range in which both Mg and Si were present was less than 30 µm from the sacrificial anode material layer surface. Thus, the thickness of the sacrificial anticorrosive layer formed by the Mg-Si-based precipitates was not sufficient. As above result, the corrosion resistance decreased, and corrosion which was regarded as failure in the SWAAT test and the circulation cycle test was caused. Further, precipitation of the Mg-Si-based precipitated product was inhibited, and the volume density of the Mg-Si-based precipitated product having a length of 10 to 1000 nm after sensitization treatment was also low.

In Comparative Example 4-5, the Si content of the sacrificial anode material layer was much. Therefore, the surface density of the Mg-Si-based crystallized product having a circle-equivalent diameter of 0.1 to 5. 0 µm in the sacrificial anode material layer was much. Further, in the cooling step following the brazing heating step, the cooling rate from 350°C to 100°C was slow. As a foregoing result, corrosion which was regarded as failure in the SWAAT test and the circulation cycle test was caused. Further, precipitation of the Mg-Si-based precipitated product was inhibited, and the volume density of the Mg-Si-based precipitated product having a length of 10 to 1000 nm after sensitization treatment was low.

In Comparative Example 4-6, the Si content of the sacrificial anode material layer was much. Therefore, the surface density of the Mg-Si-based crystallized product having a circle-equivalent diameter of 0. 1 to 5. 0 µm in the sacrificial anode material layer was much. As a result, the corrosion resistance decreased, and corrosion which was regarded as failure in the SWAAT test and the circulation cycle test was caused.

In Comparative Example 4-7, the Si content of the sacrificial anode material layer was much. Therefore, the surface density of the Mg-Si-based crystallized product having a circle-equivalent diameter of 0. 1 to 5. 0 µm in the sacrificial anode material layer was much. Further, in the cooling step following the brazing heating step, the cooling rate from 350°C to 100°C was fast. As a foregoing result, corrosion which was regarded as failure in the SWAAT test and the circulation cycle test was caused. Further, precipitation of the Mg-Si-based precipitated product was inhibited, and the volume density of the Mg-Si-based precipitated product having a length of 10 to 1000 nm after sensitization treatment was low.

In Comparative Example 4-8, the Si content of the sacrificial anode material layer was very much. As a result, the melting point of the sacrificial anode layer decreased, and the sacrificial anode material melted during the production of the material. Thus, the subsequent evaluation was impossible.

In Comparative Example 4-9, the Mg content of the sacrificial anode material layer was little. As a result, the surface density of the Mg-Si-based crystallized product having a circle-equivalent diameter of 0. 1 to 5. 0 µm in the sacrificial anode material layer was little. Further, after brazing-corresponding heating, the Mg concentration in the sacrificial anode material layer surface is less than 0.10 mass% and the range in which both Mg and Si were present was less than 30 µm from the sacrificial anode material layer surface. Thus, the thickness of the sacrificial anticorrosive layer formed by the Mg-Si-based precipitates was not sufficient. As above result, the corrosion resistance decreased, and corrosion which was regarded as failure in the SWAAT test and the circulation cycle test was caused.

In Comparative Example 4-10, the Mg content of the sacrificial anode material layer was much. As a result, a thick oxide film was formed on the surface of the sacrificial anode material during the production of the material, and the pressure bonding during cladding was poor. Thus, the subsequent evaluation was impossible.

In Comparative Example 4-11, the amount of Fe added to the sacrificial anode material layer was much, and the cooling rate of the slab surface of the slab for the sacrificial anode material layer was slow. As a result, the surface densities of the Mg-Si-based crystallized product having a circle-equivalent diameter of 0. 1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-12, the amount of Ni added to the sacrificial anode material layer was much, and the cooling rate of the slab surface of the slab for the sacrificial anode material layer was slow. As a result, the surface densities of the Mg-Si-based crystallized product having a circle-equivalent diameter of 0. 1 to 5.0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-13, the amount of Cu added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-14, the amount of Mn added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-15, the amount of Zn added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-16, the amount of Ti added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-17, the amount of Zr added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-18, the amount of Cr added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-19, the amount of V added to the sacrificial anode material layer was much, and the cooling rate of the slab surface of the slab for the sacrificial anode material layer was slow. As a result, the surface densities of the Mg-Si-based crystallized product having a circle-equivalent diameter of 0.1 to 5. 0 µm and the Mg-Si-based crystallized product having a circle-equivalent diameter of more than 5.0 µm and 10.0 µm or less in the sacrificial anode material layer were high. Therefore, the corrosion resistance decreased, and corrosion which was regarded as failure in the SWAAT test and the circulation cycle test was caused.

In Comparative Example 4-20, the homogenization temperature of the slab for the sacrificial anode material layer is high. As a result, the sacrificial anode material melted during the production of the material. Thus, the subsequent evaluation was impossible.

In Comparative Example 4-21, the temperature of brazing heating was low. As a result, sufficient molten brazing filler was not generated, and brazing failure was caused. Thus, the subsequent evaluation was impossible.

In Comparative Example 4-22, the temperature of brazing heating was high. As a result, the sacrificial anode material melted during brazing, and the subsequent evaluation was impossible.

In Comparative Example 4-23, the brazing heating time was short. As a result, sufficient molten brazing filler was not generated, and brazing failure was caused. Thus, the subsequent evaluation was impossible.

In Comparative Example 4-24, the brazing heating time is long. As a result, the sacrificial anode material melted during brazing, and the subsequent evaluation was impossible.

### Examples 5-1 to 5-4 and 5-5 to 5-8 of the Invention

Fifth Example regarding the aluminum alloy cladding materials according to the invention and heat exchangers using the aluminum alloy cladding materials is shown.

In all of Examples 1-49, 2-58, 3-58 and 4-67 of the invention, the cooling condition during the production was X11 (Table 7), and the working ratio in the hot working step at 380°C or higher was 10%. Thus, the working ratio in the hot working step at 380°C or higher was changed to 90% in the respective Examples of the invention, and clad tubes and clad plates were prepared, thereby obtaining the samples for Examples 5-1 to 5-4 of the invention.

Then, the samples were evaluated under the respective conditions of Examples 1-49, 2-58, 3-58 and 4-67 of the invention. That is, Examples 5-1 to 5-4 of the invention were different only in the working ratio of the clad tube or the clad plate used from corresponding Examples 1-49, 2-58, 3-58 and 4-67 of the invention. Examples 5-1 to 5-4 of the invention were evaluated in the same manners as in Examples 1 to 4, respectively. The results of Examples 5-1 and 5-2 of the invention are shown in Table 27 with Examples 1-49 and 2-58 of the invention, and the results of Examples 5-3 and 5-4 of the invention are shown in Table 28 with Examples 3-58 and 4-67 of the invention.

**[Table 27]**

| | Structure of material | Heat treatment of slab | Cooling during production | Heat treatment after cooling | Surface density of Mg-Si-based crystallized product having circle-equivalent diameter of 0.1-5.0 µm | Surface density of Mg-Si-based crystallized product having circle-equivalent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Corrosion depth after SWAAT | Corrosion depth by circulation cycle test |
|---|---|---|---|---|---|---|---|---|---|---|
| | | | | | (pieces/mm²) | (pieces/mm²) | (pieces/µm³) | (pieces/ µm³) | (µm) | (µm) |
| Inventive Example 5-1 | C1 | W3 | X11 | none | 11036 | 0 | 0 | 1503 | 72 | 69 |
| Inventive Example 1-49 | C1 | W3 | X11 | none | 5084 | 7 | 0 | 1006 | 82 | 79 |
| Inventive Example 5-2 | C1 | W3 | X11 | Y3 | 7303 | 0 | 0 | 1670 | 70 | 75 |
| Inventive Example 2-58 | C1 | W3 | X11 | Y3 | 4805 | 7 | 0 | 1405 | 77 | 87 |
| Inventive Example 5-5 | C1 | W3 | X2 | none | 15047 | 7 | 0 | 13652 | 69 | 64 |
| Inventive Example 1-1 | C1 | W3 | X2 | none | 18681 | 0 | 0 | 14408 | 54 | 45 |
| Inventive Example 5-6 | C1 | W3 | X2 | Y3 | 16741 | 7 | 12453 | 12984 | 58 | 54 |
| Inventive Example 2-1 | C1 | W3 | X2 | Y3 | 18625 | 0 | 13803 | 13842 | 40 | 36 |

**[Table 28]**

| | Structure of material | Heat treatment of slab | Cooling during production | Brazing | Heat treatment after brazing | Surface density of Mg-Si-based crystallized product having circle-equivalent diameter of 0.1-5.0 µm | Surface density of Mg-Si-based crystallized product having circle-equivalent diameter of more than 5.0 µm and 10.0 µm or less | Volume density of Mg-Si-based precipitated product having length of 10-1000 nm (before sensitization treatment) | Volume density of Mg-Si-based precipitated product having length of 10-1000 nm (after sensitization treatment) | Surface Si concentration | Surface Mg concentration | Depth of presence of Si | Depth of presence of Mg | Corrosion depth after SWAAT | Corrosion depth by circulation cycle test |
|---|---|---|---|---|---|---|---|---|---|---|---|---|---|---|---|
| | | | | | | (pieces/ mm²) | (pieces/ mm²) | (pieces/ µm³) | (pieces/ µm³) | (mass%) | (mass%) | (µm) | (µm) | (µm) | (µm) |
| Inventive Example 5-3 | C1 | W3 | X11 | Z3 | none | 5780 | 0 | 0 | 1650 | 0.47 | 0.49 | 56 | 54 | 78 | 69 |
| Inventive Example 3-58 | C1 | W3 | X11 | Z3 | none | 3879 | 7 | 0 | 1058 | 0.48 | 0.47 | 53 | 54 | 87 | 78 |
| Inventive Example 5-4 | C1 | W3 | X11 | Z3 | Y3 | 5680 | 0 | 0 | 1544 | 0.48 | 0.47 | 51 | 51 | 78 | 68 |
| Inventive Example 4-67 | C1 | W3 | X11 | Z3 | Y3 | 4005 | 7 | 0 | 1118 | 0.49 | 0.48 | 53 | 52 | 88 | 79 |
| Inventive Example 5-7 | C1 | W3 | X2 | Z3 | none | 15478 | 7 | 0 | 11354 | 0.51 | 0.48 | 53 | 55 | 63 | 68 |
| Inventive Example 3-1 | C1 | W3 | X2 | Z3 | none | 18363 | 0 | 0 | 12177 | 0.50 | 0.46 | 54 | 54 | 52 | 43 |
| Inventive Example 5-8 | C1 | W3 | X2 | Z3 | Y3 | 16541 | 7 | 10274 | 11470 | 0.49 | 0.51 | 53 | 53 | 59 | 51 |
| Inventive Example 4-1 | C1 | W3 | X2 | Z3 | Y3 | 18252 | 0 | 12037 | 11856 | 0.50 | 0.46 | 55 | 52 | 41 | 33 |

As shown in Tables 27 and 28, in Examples 5-1 to 5-4 of the invention, the surface densities of the Mg-Si-based crystallized product having a circle-equivalent diameter of 0.1 to 5.0 µm and a circle-equivalent diameter of more than 5.0 µm and 10.0 µm or less in the sacrificial anode material layer were in the defined ranges, and the evaluation results of the SWAAT test and the circulation cycle test were good. The surface densities of the Mg-Si-based crystallized product of more than 5.0 µm and 10.0 µm or less were all 7 pieces/mm² in Examples 1-49, 2-58, 3-58 and 4-67 of the invention, but the surface densities decreased to 0 piece/mm² in all of Examples 5-1 to 5-4 of the invention.

In all of Examples 1-1, 2-1, 3-1 and 4-1 of the invention, the cooling condition during the production was X2 (Table 7), and the working ratios of the three hot working operations in the hot working step at 380°C or higher were all 15% or more. Thus, the working ratios of the three operations were all changed to less than 15% (first at 5%, second at 8% and third at 10%) in the respective Examples of the invention, and clad tubes and clad plates were prepared, thereby obtaining the samples for Examples 5-5 to 5-8 of the invention.

Then, the samples were evaluated under the respective conditions of Examples 1-1, 2-1, 3-1 and 4-1 of the invention. That is, Examples 5-5 to 5-8 of the invention were different only in the working ratios of the clad tube or the clad plate used from corresponding Examples 1-1, 2-1, 3-1 and 4-1 of the invention. Examples 5-5 to 5-8 of the invention were evaluated in the same manners as in Examples 1 to 4, respectively. The results of Examples 5-5 and 5-6 of the invention are shown in Table 27 with Examples 1-1 and 2-1 of the invention, and the results of Examples 5-7 and 5-8 of the invention are shown in Table 28 with Examples 3-1 and 4-1 of the invention.

As shown in Tables 27 and 28, in Examples 5-5 to 5-8 of the invention, the surface densities of the Mg-Si-based crystallized products having a circle-equivalent diameter of 0.1 to 5.0 µm and a circle-equivalent diameter of more than 5.0 µm and 10.0 µm or less in the sacrificial anode material layer were in the defined ranges, and the evaluation results of the SWAAT test and the circulation cycle test were good. The surface densities of the Mg-Si-based crystallized product of more than 5.0 µm and 10.0 µm or less were all 0 piece/mm² in Examples 1-1, 2-1, 3-1 and 4-1 of the invention, but the surface densities increased to 7 pieces/mm² in all of Examples 5-5 to 5-8 of the invention.

### Industrial Applicability

An aluminum cladding material having a sacrificial anode material layer which can secure excellent corrosion resistance even when Zn is not contained or when the Zn content is low, production methods therefor, an aluminum cladding material for heat exchangers, production methods therefor, an aluminum heat exchanger using the aluminum cladding material for heat exchangers and a production method therefor are provided.

### Reference Signs List

1: core material
2: sacrificial anode material layer
3: brazing filler metal layer
4: tube material, tube
5: fin material
8: header plate
9: simulant heat exchanger
11: electric joined part

## Claims

1. An aluminum cladding material comprising an aluminum alloy core material and a sacrificial anode material layer clad on at least one surface of the core material,
wherein the sacrificial anode material layer comprises an aluminum alloy containing 0.10 mass% or more and less than 1.50 mass% Si, 0.10 to 2.00 mass% Mg and a balance of Al and unavoidable impurities, and
100 to 150000 pieces/mm² of Mg-Si-based crystallized product having a circle-equivalent diameter of 0.1 to 5.0 µm, and 7 pieces/mm² or less of Mg-Si-based crystallized product having a circle-equivalent diameter of more than 5.0 µm and 10.0 µm or less are present in the sacrificial anode material layer.

2. The aluminum cladding material according to claim 1, wherein the sacrificial anode material layer comprises the aluminum alloy further containing one or more selected from 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.30 mass% Ti, 0.05 to 0.30 mass% Zr, 0.05 to 0.30 mass% Cr and 0.05 to 0.30 mass% V.

3. The aluminum cladding material according to claim 1 or 2, wherein the sacrificial anode material layer is clad on one surface of the aluminum alloy core material, and a brazing filler metal layer is clad on the other surface thereof.

4. The aluminum cladding material according to any one of claims 1 to 3, wherein 1000 to 100000 pieces/µm³ of Mg-Si-based precipitated product having a length of 10 to 1000 nm observed in a range from the sacrificial anode material layer surface to the depth of 5 µm are present after sensitization treatment for observation at 175°C for five hours.

5. An aluminum cladding material for heat exchangers comprising an aluminum alloy core material and a sacrificial anode material layer clad on at least one surface of the core material,
wherein the sacrificial anode material layer comprises an aluminum alloy containing 0.10 mass% or more and less than 1.50 mass% Si, 0.10 to 2.00 mass% Mg and a balance of Al and unavoidable impurities,
after brazing-corresponding heating, (1)in the sacrificial anode material layer surface, the Mg concentration is 0.10 mass% or more and the Si concentration is 0.05 %mass or more ,(2)both Mg and Si are present in a range from the sacrificial anode material layer surface to a depth of 30 µm or more, and (3) 100 to 150000 pieces/mm² of Mg-Si-based crystallized product having a circle-equivalent diameter of 0.1 to 5.0 µm, and 7 pieces/mm² or less of Mg-Si-based crystallized product having a circle-equivalent diameter of more than 5.0 µm and 10.0 µm or less are present in the sacrificial anode material layer.

6. The aluminum cladding material for heat exchangers according to claim 5, wherein the sacrificial anode material layer comprises the aluminum alloy further containing one or more selected from 0.05 to 1.00 mass% Fe, 0.05 to 1.00 mass% Ni, 0.05 to 1.00 mass% Cu, 0.05 to 1.50 mass% Mn, 0.05 to 1.00 mass% Zn, 0.05 to 0.30 mass% Ti, 0.05 to 0.30 mass% Zr, 0.05 to 0.30 mass% Cr and 0.05 to 0.30 mass% V.

7. The aluminum cladding material for heat exchangers according to claim 5 or 6, wherein the sacrificial anode material layer is clad on one surface of the aluminum alloy core material, and a brazing filler metal layer is clad on the other surface thereof.

8. The aluminum cladding material for heat exchangers according to any one of claims 5 to 7, wherein after brazing-corresponding heating, (4)1000 to 100000 pieces/µm³ of Mg-Si-based precipitated product having a length of 10 to 1000 nm observed in a range from the sacrificial anode material layer surface to the depth of 5 µm are present after sensitization treatment for observation at 175°C for five hours.

9. A method for producing the aluminum cladding material according to any one of claims 1 to 8, comprising;
a direct chill casting step of direct chill casting the aluminum alloy for the sacrificial anode material layer at a cooling rate on the slab surface of 1°C/second or more.

10. A method for producing the aluminum cladding material according to any one of claims 1 to 8, comprising;
a direct chill casting step of direct chill casting the aluminum alloy for the sacrificial anode material layer at a cooling rate on the slab surface of 1°C/second or more, and
a homogenization step of heat-treating the slab for the sacrificial anode material layer at a temperature of 400 to 480°C for one hour or longer.

11. A method for producing the aluminum cladding material according to claim 9 to 10, wherein the production steps further comprise a hot working step of the aluminum cladding material and a heating step of heating and holding the aluminum cladding material at 400 to 530°C before the hot working step, and in the hot working step, hot working at a working ratio of 50% or more at 380°C or higher is conducted at least once or hot working at a working ratio of 15% or more at 380°C or higher is conducted three times or more.

12. A method for producing the aluminum cladding material according to claim 9 to 11, wherein the production steps further comprise a final heating step of heating the aluminum cladding material to 350°C or higher and a cooling step of the aluminum cladding material following the final heating step, and the cooling rate from 350°C to 100°C is 1 to 500°C/minute in the cooling step.

13. A method for producing the aluminum cladding material according to claim 9 or 11, wherein a heat treatment step of the sacrificial anode material slab at 100°C or higher and lower than 350°C for 5 to 6000 minutes is comprises after cooling after the direct chill casting step.

14. A method for producing the aluminum cladding material according to claim 10 or 11, wherein a heat treatment step of the sacrificial anode material slab at 100°C or higher and lower than 350°C for 5 to 6000 minutes is comprises at least after cooling after the direct chill casting step or after cooling after the homogenization.

15. A method for producing the aluminum cladding material according to claim 12, wherein a heat treatment step of at least corresponding one of the slab for the sacrificial anode layer and the aluminum cladding material at 100°C or higher and lower than 350°C for 5 to 6000 minutes is comprised at least after cooling after the direct chill casting step or after cooling following the final heating step.

16. A method for producing the aluminum cladding material according to claim 12, wherein a heat treatment step of at least corresponding one of the slab for the sacrificial anode layer and the aluminum cladding material at 100°C or higher and lower than 350°C for 5 to 6000 minutes is comprised at least after cooling after the direct chill casting step, after cooling after the homogenization or after cooling following the final heating step.

17. An aluminum heat exchanger, wherein the aluminum cladding material for heat exchangers according to any one of claims 5 to 8 is used as a tube material for heat exchangers.

18. An aluminum heat exchanger, wherein the aluminum cladding material for heat exchangers according to any one of claims 5 to 8 is used as a header material for heat exchangers.

19. A method for producing the aluminum heat exchanger, comprising;
a step of assembling the aluminum cladding materials for heat exchangers according to any one of claims 5 to 8;
a step of brazing the assembled materials through heat treatment at 590 to 610°C for 2 to 10 minutes; and
a cooling step of cooling the brazed assembled materials at a cooling rate from 350°C to 100°C of 1 to 500 °C/minute.

20. The method for producing the aluminum heat exchanger according to claim 19, wherein a heat treatment step at 100°C or higher and lower than 350°C for five minutes to 6000 minutes is further comprised following the cooling step.
